# EUROPEAN PATENT SPECIFICATION

(11) **EP 4 485 122 B1**
(45) Date of publication and mention of the grant of the patent: **29.04.2026**
(21) Application number: 23775295.1
(22) Date of filing: 22.03.2023
(51) Int. Cl.: G06F 1/16, G09F 9/30, H04M 1/02

(54) **SLIDABLE ELECTRONIC DEVICE INCLUDING FLEXIBLE DISPLAY**
VERSCHIEBBARE ELEKTRONISCHE VORRICHTUNG MIT FLEXIBLER ANZEIGE
DISPOSITIF ÉLECTRONIQUE COULISSANT COMPRENANT UN ÉCRAN SOUPLE

(30) Priority: 23.03.2022 KR 20220036212; 30.06.2022 KR 20220080493
(43) Date of publication of application: 01.01.2025
(73) Proprietor: Samsung Electronics Co., Ltd, Suwon-si, Gyeonggi-do 16677 (KR)
(72) Inventor: CHOI, Junyoung, Suwon-si, Gyeonggi-do 16677 (KR); KANG, Youngmin, Suwon-si, Gyeonggi-do 16677 (KR); SHIN, Moonchul, Suwon-si, Gyeonggi-do 16677 (KR); YOON, Yeonggyu, Suwon-si, Gyeonggi-do 16677 (KR); CHO, Joongyeon, Suwon-si, Gyeonggi-do 16677 (KR); YOON, Byounguk, Suwon-si, Gyeonggi-do 16677 (KR); LEE, Junghyeob, Suwon-si, Gyeonggi-do 16677 (KR); CHO, Sunggun, Suwon-si, Gyeonggi-do 16677 (KR)
(74) Representative: Gulde & Partner
(86) International application number: PCT/KR2023/003775
(87) International publication number: WO 2023/182799

(56) References cited:
- WO-A1-2022/050589
- KR-A- 20210 116 542
- KR-A- 20210 143 419
- KR-A- 20220 015 775
- US-A1- 2013 058 063
- US-A1- 2021 375 165
- US-A1- 2021 405 703
- US-B1- 11 012 546

## Description

### [Technical Field]

The present disclosure relates to a slidable electronic device including a flexible display.

### [Background Art]

With the development of digital technologies, electronic devices are provided in various forms such as smartphones, tablet personal computers (tablet PCs), or personal digital assistants (PDAs). The electronic device tends to be designed to provide a larger screen while having a size that allows a user to carry the electronic device with his/her hand.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

For example, an electronic device may be implemented to expand a screen by moving a flexible display in a slide manner. When the electronic device slides, the flexible display may slide outward to the outside of the electronic device from the inside of the electronic device, such that the screen may expand. In case that a motion or force is not smoothly transmitted between driving elements, it may be difficult to provide a soft, smooth sliding motion. Because the flexible display is a flexible body instead of a rigid body, the flexible display cannot transmit a force in an intact manner in a bending section because of a direction dispersion when the flexible display moves, which makes it difficult for the electric device to smoothly slide.

Embodiments of the present disclosure may provide a slidable electronic device including a flexible display, which is capable of reducing a stress effect on driving elements by allowing the slidable electronic device to softly and smoothly slide to expand or contract a screen.

Technical problems to be solved by the present disclosure are not limited to the above-mentioned technical problems, and other technical problems, which are not mentioned above, may be understood from the following descriptions by those skilled in the art to which the present disclosure pertains.

US 2013/0058063 A1 discloses an expandable mobile device including first and second housing parts that slide-engage relative to each other to extend and retract the device. The expandable mobile device further includes a flexible display that extends from an interior of the expandable mobile device as the second housing part slides out from the first housing part. The flexible display also retracts into the interior of the expandable mobile device as the second housing part slides into the first housing part. Rollers are integrated in the first housing part and bend the flexible display around a fixed radius to position a first section of the flexible display approximately parallel to a second section of the flexible display in a retracted position of the expandable mobile device.

### [Solution to Problem]

The present invention is defined by the appended set of claims. Preferred embodiments are defined by the dependent claims. An exemplary embodiment of the present disclosure provides a slidable electronic device including: a first housing; a second housing disposed to be slidable relative to the first housing; a flexible display including a first area and a second area extending from the first area; a display support plate disposed on a rear surface of the second area of the flexible display; a belt configured to connect the first housing and the display support plate, wherein a first end of the belt is connected to the display support plate and a second end of the belt is connected to the first housing; and a pulley device disposed in the second housing and configured to roll in a predetermined section of the belt in accordance with a sliding-in or sliding-out movement of the second housing, wherein a part of the belt, which is disposed to correspond to the pulley device, comprises two curved areas, and a straight area between the two curved areas.

### [Advantageous Effects of Invention]

The slidable electronic device including the flexible display according to various embodiments of the present disclosure may softly and smoothly slide to expand or contract the screen, thereby improving the durability of the slidable electronic device and the reliability of the slidable electronic device capable of expanding the screen.

Other effects, which may be obtained or expected by the various embodiments of the present disclosure, will be directly or implicitly disclosed in the detailed description on the embodiments of the present disclosure.

### [Brief Description of Drawings]

The above and other aspects, features, and advantages of specific embodiments of the present disclosure will become clearer from the following detailed description, which is provided together with the accompanying drawings.
FIG. 1 is a block diagram of an electronic device in a network environment according to an embodiment of the present disclosure.
FIG. 2 depicts views illustrating a slidable electronic device in a closed state according to the embodiment of the present disclosure.
FIG. 3 depicts views illustrating the slidable electronic device in an open state according to the embodiment of the present disclosure.
FIG. 4 is an exploded perspective view of the slidable electronic device and a cross-sectional view of a display assembly according to the embodiment of the present disclosure.
FIG. 5 is a cross-sectional view of the slidable electronic device taken along line A-A' in FIG. 2 according to the embodiment of the present disclosure.
FIG. 6 is a cross-sectional view of the slidable electronic device taken along line B-B' in FIG. 3 according to the embodiment of the present disclosure.
FIG. 7 is a cross-sectional view of the slidable electronic device taken along line C-C' in FIG. 2 according to the embodiment of the present disclosure.
FIG. 8 is a view illustrating the slidable electronic device in the closed state according to the embodiment of the present disclosure.
FIG. 9 is a cross-sectional view of the slidable electronic device taken along line E-E' in FIG. 8 according to the embodiment of the present disclosure.
FIG. 10 is a view illustrating the slidable electronic device in the open state according to the embodiment of the present disclosure.
FIG. 11 is a cross-sectional view of the slidable electronic device taken along line F-F' in FIG. 10 according to the embodiment of the present disclosure.
FIGS. 12, 13, and 14 are cross-sectional views of the slidable electronic device taken along line E-E' in FIG. 8 according to various embodiments of the present disclosure.
FIG. 15 is a perspective view illustrating a first belt, a first pulley device, and a display assembly according to the embodiment of the present disclosure.
FIG. 16 is a perspective view illustrating the first belt and a first support portion according to the embodiment of the present disclosure.
FIG. 17 is a partially cross-sectional perspective view of the slidable electronic device taken along line G-G' in FIG. 8 according to the embodiment of the present disclosure.
FIG. 18 is a cross-sectional view of the slidable electronic device taken along line G-G' in FIG. 8 according to the embodiment of the present disclosure.
FIG. 19 is a cross-sectional view of the slidable electronic device taken along line G-G' in FIG. 8 according to various embodiments of the present disclosure.
FIG. 20 depicts views illustrating the slidable electronic device according to various embodiments of the present disclosure.

### [Mode for the Invention]

Hereinafter, various example embodiments of the disclosure disclosed herein will be described in greater detail with reference to the accompanying drawings.

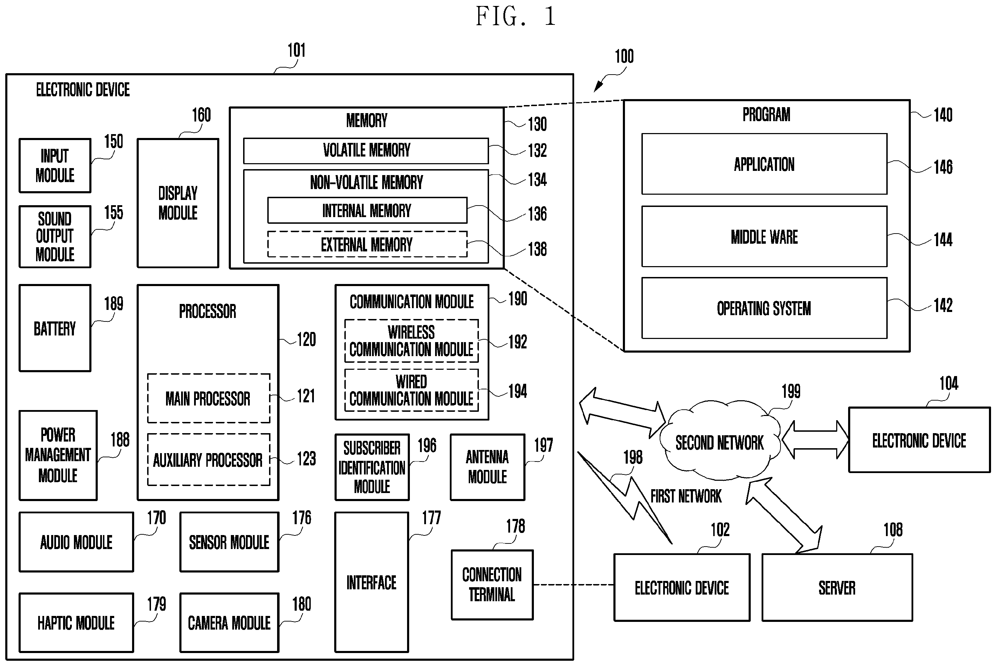

FIG. 1 is a block diagram of an electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments of the disclosure, at least one (e.g., the connection terminal 178) of the components may be omitted from the electronic device 101, or one or more other components may be added in the electronic device 101. In some embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment within the scope defined by the appended set of claims. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

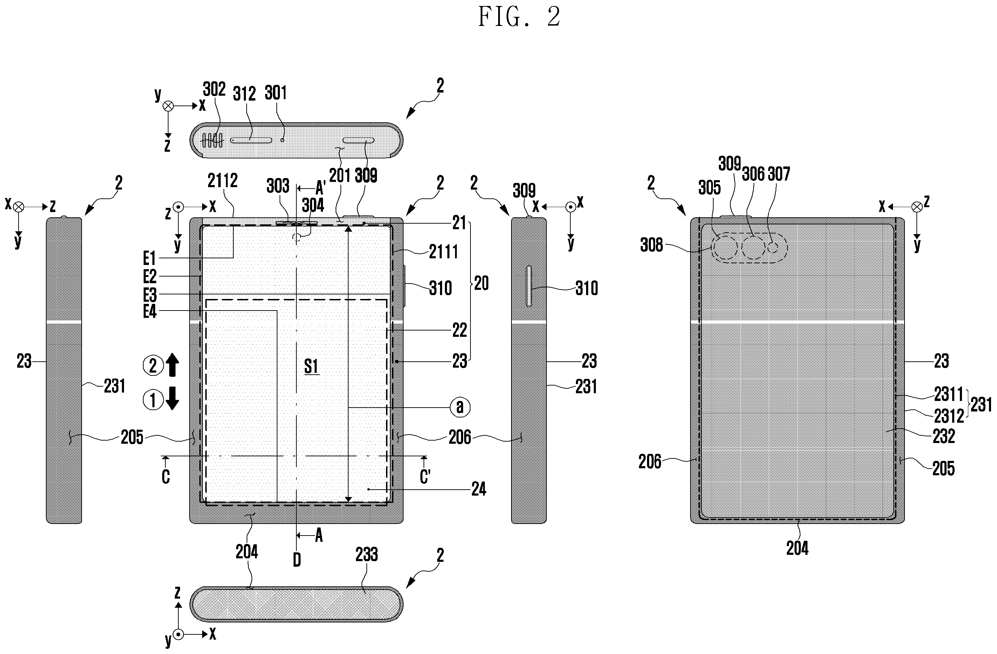

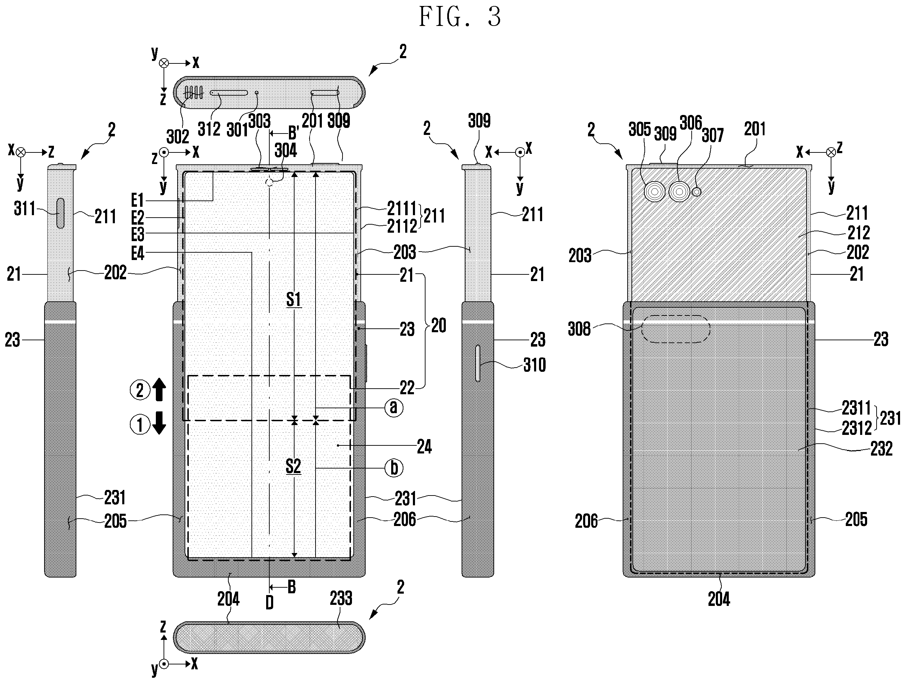

FIG. 2 depicts views illustrating a slidable electronic device 2 in a closed state according to an embodiment of the present disclosure. FIG. 3 depicts views illustrating the slidable electronic device 2 in an open state according to the embodiment of the present disclosure. In various embodiments of the present disclosure, for convenience of description, a direction (e.g., a +z-axis direction) in which a screen (e.g., a display or active area of a flexible display module 24 visible from the outside) is defined and used as a forward direction of the slidable electronic device 2, and the opposite direction (e.g., a -z-axis direction) is defined and used as a rearward direction of the slidable electronic device 2.

With reference to FIGS. 2 and 3, the slidable electronic device 2 may include a slidable housing 20 and the flexible display module 24. For example, the slidable housing 20 may include a first housing (or a first housing part or a first housing structure) 21, a second housing (or a second housing part or a second housing structure) 22, and/or a third housing (or a third housing part or a third housing structure) 23. The second housing 22 may be connected to the first housing 21 so as to be slidable relative to the first housing 21. The sliding motion of the second housing 22 relative to the first housing 21 may refer to a change in relative position between the first housing 21 and the second housing 22 and be interpreted as a sliding motion of the first housing 21 relative to the second housing 22 or a mutual sliding motion between the first housing 21 and the second housing 22. The first housing 21 and the third housing 23 may be outer housings configured to substantially provide an external appearance of the slidable electronic device 2, and the second housing 22 may be an inner housing positioned and hidden in the slidable electronic device 2 while corresponding to the third housing 23. The third housing 23 may be connected to the second housing 22 and move together with the second housing 22 when the second housing 22 slides relative to the first housing 21. The slidable housing 20 may be implemented to enable a mutual sliding motion between the first housing 21 and the housing structure including the second housing 22 and the third housing 23. A sliding structure (e.g., a sliding structure including a guide rail) for a mutual stable sliding motion may be provided for the first housing 21 and the second housing 22 or provided for the first housing 21 and the third housing 23. The flexible display module (or flexible display) 24 may include a first area ⓐ positioned to correspond to the first housing 21, and a second area ⓑ extending from the first area ⓐ and positioned to correspond to the second housing 22. The first area ⓐ may be disposed on the first housing 21 and supported by the first housing 21. The first area ⓐ may be exposed to the outside, and the slidable electronic device 2 may provide a first screen area S1 through the first area ⓐ. The second area ⓑ may be supported on the first housing 21 by the slidable second housing 22. When the second housing 22 slides in a first direction ① (e.g., a +y-axis direction) relative to the first housing 21, at least a part of the second area ⓑ may be slid outward and visible to the outside (to a position on the slidable electronic device 2 visible from the outside) from a space between the second housing 22 and the third housing 23. When the second housing 22 slides relative to the first housing 21 in a second direction ② (e.g., a -y-axis direction) opposite to the first direction ①, at least a part of the second area ⓑ may be slid into the space between the second housing 22 and the third housing 23 and hidden. The slidable electronic device 2 may provide a screen area in which a second screen area (or a second display area) S2 is added to the first screen area (or a first display area) S1 by means of at least a part of the second area ⓑ slid outward. A proportion of a portion of the second area ⓑ, which is slid outward, and a size of the screen corresponding to the proportion may vary depending on a position or distance at which the second housing 22 is slid relative to the first housing 21. FIG. 2 illustrates the slidable electronic device 2 with the screen in a non-expanded state, and FIG. 3 illustrates the slidable electronic device 2 with the screen in an expanded state. The non-expanded state of the screen may refer to a state, in which the second housing 22 is not moved in the first direction ① relative to the first housing 21, and be referred to as a 'closed state' of the slidable electronic device 2. The expanded state of the screen may refer to a state, in which the second housing 22 is maximally moved and is not moved any further in the first direction ①, and be referred to as an 'open state' of the slidable electronic device 2. In various embodiments, the open state may include a fully open state (see FIG. 3) or an intermediate state. The intermediate state may refer to a state between the closed state (see FIG. 2) and the fully open state. A case in which the second housing 22 at least partially moves in the first direction ① relative to the first housing 21 may be referred to as 'slide-out' of the second housing 22 or the flexible display module 24. A case in which the second housing 22 at least partially moves relative to the first housing 21 in the second direction ② opposite to the first direction ① may be referred to as 'slide-in' of the second housing 22 or the flexible display module 24. The second area ⓑ may be disposed to have a bending portion to switch the directions and move the second area ⓑ when the second area ⓑ is slid outward to the outside from the space between the second housing 22 and the third housing 23 or slid into the space between the second housing 22 and the third housing 23 from the outside as the second housing 22 slides relative to the first housing 21. The second area ⓑ may be referred to as other terms such as a 'bendable area' or a 'bendable section'. In the slidable electronic device 2 that provides the expandable screen corresponding to the mutual sliding motion between the first housing 21 and the second housing 22, the flexible display module 24 (or flexible display) may be referred to as other terms such as an 'expandable display,' a 'slidable display,' or a 'slide-out display'. The slidable electronic device 2, which provides the expandable screen corresponding to the mutual sliding motion between the first housing 21 and the second housing 22, may be referred to as other terms such as a 'stretchable electronic device' or a 'rollable electronic device'.

The present disclosure discloses 'the slide-out or slide-in of the second housing 22' or 'the sliding motion of the second housing 22 relative to the first housing 21', but the present disclosure is not limited thereto. The sliding motion may be interpreted as a change in relative position between the first housing 21 and the second housing 22, i.e., the slide-out or slide-in of the first housing 21 relative to the second housing 22, the sliding motion of the first housing 21 relative to the second housing 22, or the mutual sliding motion between the first housing 21 and the second housing 22.

According to various embodiments, the first housing 21 may be interpreted as a 'stationary housing', and the second housing 22 may be interpreted as a 'movable housing' that slides relative to the first housing 21. In any embodiment, the second housing 22 may be interpreted as a 'stationary housing', and the first housing 21 may be interpreted as a 'movable housing' that slides relative to the second housing 22.

According to the embodiment, the screen, which includes the first screen area S1 provided by the first area ⓐ of the flexible display module (or the flexible display) 24 and the second screen area S2 provided by the second area ⓑ of the flexible display module 24 in the open state (see FIG. 3) of the slidable electronic device 2, may have a substantially planar shape. A direction directed toward the front surface of the slidable electronic device 2 may be a direction in which the screen with a planar shape is directed. The first area ⓐ of the flexible display module 24 may be disposed substantially flat on the first housing 21, and the first area ⓐ may provide the planar first screen area S1 corresponding to the first area ⓐ. The second area ⓑ of the flexible display module 24 may be disposed to have the bending portion. The bending portion may be a portion disposed and maintained in a bent shape in the second area ⓑ so that the second area ⓑ switches to the direction different from the direction of the first area ⓐ and moves when the second housing 22 slides relative to the first housing 21. The shape of the bending portion may be provided substantially constantly even though the portion of the second area ⓑ, which provides the bending portion, varies depending on the position or distance at which the second housing 22 slides relative to the first housing 21. A size of a portion of the second area ⓑ between the bending portion and the first area ⓐ may increase during the slide-out of the second housing 22 and decrease during the slide-in of the second housing 22. In the open state of the slidable electronic device 2, the second screen area S2 may be provided through the portion of the second area ⓑ between the bending portion and the first area ⓐ. A part of the second area ⓑ between the bending portion and the first area ⓐ may be disposed substantially flat while having a shape smoothly connected to the first area ⓐ without being separated. In the embodiment, the slidable electronic device 2 may include a tension device that allows the portion of the second area ⓑ between the bending portion and the first area ⓐ to be disposed substantially flat while reducing a situation in which the portion of the second area ⓑ between the bending portion and the first area ⓐ is separated by elasticity of the flexible display module 24 in the open state of the slidable electronic device 2.

According to the embodiment, for example, the screen of the slidable electronic device 2 may have a rectangular shape and include a first edge E1, a second edge E2, a third edge E3, and a boundary E4 with the bending portion of the second area ⓑ. When viewed from above the screen, the first edge E1 may be positioned to be spaced apart from the boundary E4 with the bending portion in the second direction ② (e.g., the slide-in direction) and substantially parallel to the boundary E4 with the bending portion. The second edge E2 may extend from one end of the first edge E1 to the boundary E4 with the bending portion and be substantially perpendicular to the first edge E1. The third edge E3 may extend from the other end of the first edge E1 to the boundary E4 with the bending portion and be substantially parallel to the second edge E2. During the slide-out of the second housing 22, the screen expands, such that a distance by which the boundary E4 with the bending portion is spaced apart from the first edge E1 in the first direction ① may increase, and the second edge E2 and the third edge E3 may be lengthened.

According to the embodiment, the first housing 21 may include a first frame (or a first frame structure, a first framework, or a first casing) 211 and/or a first cover 212 disposed on the first frame 211. The first frame 211 may include a first support portion 2111 and a first sidewall portion (or a first bezel, a first sidewall bezel, or a first sidewall bezel structure) 2112 connected to the first support portion 2111. In the embodiment, the first area ⓐ of the flexible display module 24 may be disposed on the first support portion 2111, and the first support portion 2111 may support the first area ⓐ. The first sidewall portion 2112 may include a first sidewall 201, a second sidewall 202, and/or a third sidewall 203. The first sidewall 201 may be positioned to correspond to the first edge E1 of the screen. The second sidewall 202 may be positioned to correspond to the second edge E2 of the screen. The third sidewall 203 may be positioned to correspond to the third edge E3 of the screen. When viewed from above the front surface of the slidable electronic device 2, the second sidewall 202 may extend from one end of the first sidewall 201 in the first direction ① (e.g., the slide-out direction), and the third sidewall 203 may extend from the other end of the first sidewall 201 in the first direction ①. When viewed from above the front surface of the slidable electronic device 2, the second sidewall 202 and the third sidewall 203 may be substantially parallel to each other and substantially perpendicular to the first sidewall 201. The first frame 211 may be provided as an integrated member or structure including the first support portion 2111 and the first sidewall portion 2112. As another example, the first support portion 2111 may be provided separately from the first sidewall portion 2112 and connected to the first sidewall portion 2112 by mechanical fastening, such as screw fastening (or bolt fastening) or bonding including an adhesive material (or a bonding material). In any embodiment, the first support portion 2111 may be defined or interpreted as an element provided separately from the first frame 211 or the first housing 21. The first cover 212 may be positioned at a rear surface side of the slidable electronic device 2 and referred to as the term such as a 'first back cover' or a 'first rear surface plate'. For example, various electronic components, such as a printed circuit board, may be disposed on the first support portion 2111 between the first support portion 2111 (or the first area ⓐ of the flexible display module 24) and the first cover 212. **In** the embodiment, the first cover 212 may be disposed on the first sidewall portion 2112. For example, the first sidewall portion 2112 may include a first cover arrangement area provided to correspond to a rim area of the first cover 212. For example, the first cover arrangement area may be a stepped portion provided on the first sidewall portion 2112 so that the first cover 212 may be fitted with and seated on the first sidewall portion 2112. As another example, the first cover arrangement area may be provided as a substantially planar area (or a planar portion). The first cover 212 may be disposed in the first cover arrangement area by using screw fastening. As another example, the first cover 212 may be disposed in the first cover arrangement area by using a snap-fit fastening (e.g., a method of fastening a hook to a hook fastening portion). As another example, an adhesive material (or a bonding material) may be disposed between the first cover arrangement area and the rim area of the first cover 212 to dispose the first cover 212 on the first sidewall portion 2112. In any embodiment, the first cover arrangement area may expand to at least partially overlap the first cover 212 when viewed from above the rear surface of the slidable electronic device 2. In any embodiment, the first cover arrangement area corresponding to the rim area of the first cover 212 may be provided by the first support portion 2111. A part of an outer surface of the slidable electronic device 2 provided by the first sidewall portion 2112 may be smoothly connected to a part of an outer surface of the slidable electronic device 2 provided by the first cover 212. In any embodiment, the first cover 212 may be excluded, and the first frame 211 may have a shape further including a portion corresponding to the first cover 212. In any embodiment, the first cover 212 may be defined or interpreted as an element provided separately from the first housing 21.

According to the embodiment, the third housing 23 may provide an external appearance of the slidable electronic device 2 together with the first housing 21 of a movable assembly provided as a combination of the first housing 21 and the second housing 22, which are slidably connected to each other, and the flexible display module 24 operatively disposed on the first housing 21 and the second housing 22. For example, the third housing 23 may include a third frame (or a third frame structure, a third framework, or a third casing) 231, a second cover 232 disposed on the third frame 231, and/or a third cover 233 disposed on the third frame 231. The third frame 231 may be provided as an integrated member or structure including a second support portion (or a bottom portion or a bottom) (e.g., a plate) 2311 and a second sidewall portion 2312. As another example, the second support portion 2311 may be provided separately from the second sidewall portion 2312 and connected to the second sidewall portion 2312 by a method such as screw fastening (or bolt fastening). The second sidewall portion 2312 may extend from a rim of the second support portion 2311. With a combination of the second support portion 2311 and the second sidewall portion 2312, the third housing 23 may have a space capable of accommodating the first housing 21 and the second housing 22. For example, the second sidewall portion 2312 may include a fourth sidewall 204, a fifth sidewall 205, and/or a sixth sidewall 206. The fourth sidewall 204 may be positioned to be spaced apart from the first sidewall 201 in the first direction ① (e.g., the slide-out direction) and substantially parallel to the first sidewall 201. When viewed from above the front surface of the slidable electronic device 2 (e.g., when viewed in the -z-axis direction), the fifth sidewall 205 may be positioned to correspond to the second sidewall 202 and extend from one end of the fourth sidewall 204 in the second direction ② (e.g., the slide-in direction). The sixth sidewall 206 may be positioned to correspond to the third sidewall 203 and extend from the other end of the fourth sidewall 204 in the second direction ②. When viewed from above the front surface of the slidable electronic device 2, the fifth sidewall 205 and the sixth sidewall 206 may be substantially parallel to each other and substantially perpendicular to the fourth sidewall 204. A distance by which the fourth sidewall 204 is spaced apart from the first sidewall 201 in the first direction ①, an area in which the fifth sidewall 205 covers the second sidewall 202, and an area in which the sixth sidewall 206 covers the third sidewall 203 may increase during the slide-in of the second housing 22 and decrease during the slide-out of the second housing 22. In the embodiment, the second cover 232 may be positioned at the rear surface side of the slidable electronic device 2 and referred to as the term such as a 'second back cover' or a 'second rear surface plate'. The second support portion 2311 may include a third surface substantially directed toward the front surface of the slidable electronic device 2, and a fourth surface substantially directed toward the rear surface of the slidable electronic device 2. The second cover 232 may be disposed on the fourth surface of the second support portion 2311. The fourth surface of the second support portion 2311 may include a seating structure for the second cover 232. For example, the seating structure may include a recess that enables the second cover 232 to be stably disposed on the second support portion 2311 without swaying, and the second cover 232 may be inserted into the recess. The second cover 232 may be coupled to the second support portion 2311 by using screw fastening. As another example, the second cover 232 may be coupled to the second support portion 2311 by using snap-fit fastening. As another example, the second cover 232 may be coupled to the second support portion 2311 by using an adhesive material (or a bonding material). A part of the outer surface of the slidable electronic device 2 provided by the second support portion 2311 may be smoothly connected to a part of the outer surface of the slidable electronic device 2 provided by the second cover 232. When viewed from above the rear surface of the slidable electronic device 2 (e.g., when viewed in the +z-axis direction), an area in which the first cover 212 and the second cover 232 (or the second support portion 2311) overlap each other may increase during the slide-out of the second housing 22 and decrease during the slide-in of the second housing 22. In any embodiment, the second cover 232 may be excluded, and the second support portion 2311 may have a shape further including a portion corresponding to the second cover 232. In any embodiment, the second cover 232 may be defined or interpreted as an element provided separately from the third housing 23. In the embodiment, the third cover 233 may be disposed on the fourth sidewall 204 and referred to as a 'side cover'. A part of the outer surface of the slidable electronic device 2 provided by the fourth sidewall 204 may be smoothly connected to a part of the outer surface of the slidable electronic device 2 provided by the third cover 233. In any embodiment, the third cover 233 may be excluded, and the second sidewall portion 2312 may have a shape further including a portion corresponding to the third cover 233.

According to various embodiments, the second cover 232 may be disposed on the second sidewall portion 2312. For example, the second sidewall portion 2312 may include a second cover arrangement area provided to correspond to a rim area of the second cover 232. For example, the second cover arrangement area may be a stepped portion provided on the second sidewall portion 2312 so that the second cover 232 may be fitted with and seated on the second sidewall portion 2312. As another example, the second cover arrangement area may be provided as a substantially planar area (or a planar portion). The second cover 232 may be disposed in the second cover arrangement area by screw fastening. As another example, the second cover 232 may be disposed in the second cover arrangement area by using snap-fit fastening. As another example, An adhesive material (or a bonding material) may be disposed between the second cover arrangement area and the rim area of the second cover 232 to dispose the second cover 232 on the second sidewall portion 2312.

According to various embodiments, the second housing 22 may be defined or interpreted as a part of the third housing 23. In this case, a portion of the third housing 23, which includes the third frame 231, the second cover 232, and the third cover 233, may be referred to as the term such as a 'cover housing', and the second housing 22 may be referred to as the term such as a 'support body,' a 'support portion,' a 'support member,' or a 'sliding structure' accommodated in the third housing 23.

According to the embodiment, a part of the outer surface of the slidable electronic device 2 provided by the slidable housing 20 may be provided by the first sidewall 201 and the third housing 23 in the closed state (see FIG. 2) of the slidable electronic device 2. For example, in the closed state of the slidable electronic device 2, the remaining part of the first housing 21 may be covered by the third housing 23 without being exposed to the outside. In the closed state of the slidable electronic device 2, a part of the outer surface of the slidable electronic device 2 provided by the first sidewall 201 may be smoothly connected to a part of the outer surface of the slidable electronic device 2 provided by the third housing 23. When the slidable electronic device 2 switches from the closed state to the open state (see FIG. 3), a part of the outer surface of the slidable electronic device 2 provided by the slidable housing 20 may further include an outer surface area provided by the second sidewall 202, the third sidewall 203, and the first cover 212. In any embodiment, in the closed state of the slidable electronic device 2, a part of the first housing 21 may protrude relative to the third housing 23 in the second direction ②. In this case, in the closed state of the slidable electronic device 2, a part of the first housing 21 protruding relative to the third housing 23 in the second direction ② (e.g., a part of the second sidewall 202, a part of the third sidewall 203, and a part of the first cover 212) may provide a part of the outer surface of the slidable electronic device 2.

According to the embodiment, a combination of the first sidewall portion 2112 of the first housing 21 and the second sidewall portion 2312 of the third housing 23 may provide a bezel (or a bezel structure, a screen bezel, or a screen bezel structure) that surrounds the screen. For example, when the slidable electronic device 2 (see FIG. 2) in the closed state is viewed from above the screen, a combination of the first sidewall 201, the fourth sidewall 204, the fifth sidewall 205, and sixth bezel 206 may provide the bezel that surrounds the screen. For example, when the slidable electronic device 2 (see FIG. 3) in the open state is viewed from above the screen, a combination of the first sidewall 201, the second sidewall 202, the third sidewall 203, the fourth sidewall 204, the fifth sidewall 205, and the sixth sidewall 206 may provide the bezel that surrounds the screen.

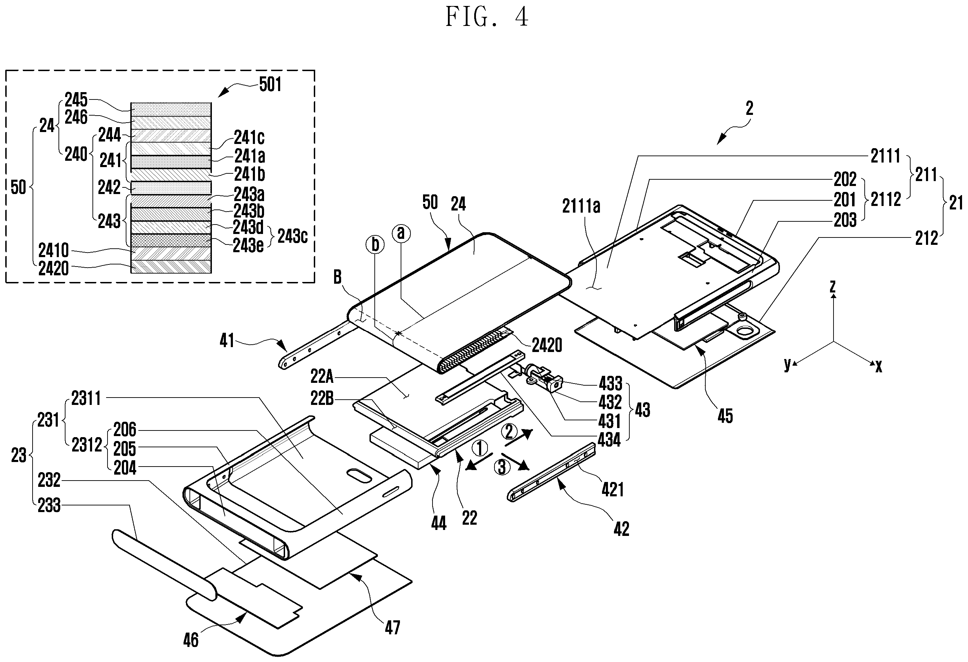

According to the embodiment, the second housing 22 (e.g., the second frame, the second frame structure, the second framework, or the second casing) may include a first support surface (reference numeral '22A' in FIG. 4) directed toward the front surface of the slidable electronic device 2, a second support surface (reference numeral '22B' in FIG. 4) corresponding to the bending portion of the second area ⓑ included in the flexible display module 24, and a third support surface directed toward the rear surface of the slidable electronic device 2. The first and second support surfaces may support the second area ⓑ of the flexible display module 24. In any embodiment, the second housing 22 may be elements for supporting the second area ⓑ of the flexible display module 24 and referred to as various terms such as a 'display support body,' a 'display support member,' a 'display support structure,' a 'display support plate,' or a 'display support board'. A part of the second area ⓑ, which provides the second screen area S2, may be supported by the first support surface. The second support surface may face the bending portion of the second area ⓑ and include a curved surface corresponding to the bending portion of the second area ⓑ. The second support surface may support the bending portion of the second area ⓑ. In the embodiment, various electronic components such as a battery may be disposed on the third support surface. The bending portion of the second area ⓑ may be positioned between the second support surface and the fourth sidewall 204 of the third housing 23. In the embodiment, one surface of the fourth sidewall 204, which faces the bending portion of the second area ⓑ, may include a curved surface corresponding to the bending portion of the second area ⓑ. During the slide-out of the second housing 22, at least a part of the second area ⓑ may be slid to the outside (e.g., the position visible to the outside from the slidable electronic device 2) from the space between the second housing 22 and the third housing 23 through a curved space between the fourth sidewall 204 and the second support surface. During the slide-in of the second housing 22, at least a part of the second area ⓑ may be slid into the space between the second housing 22 and the third housing 23 from the outside through the curved space between the fourth sidewall 204 and the second support surface.

According to various embodiments, in a state (e.g., the closed state in FIG. 2) in which the second area ⓑ of the flexible display module 24 is at least partially slid into the space between the second housing 22 and the third housing 23, a part of the second area ⓑ may provide an additional screen visible through the first cover 212 of the first housing 21 when viewed from above the rear surface of the slidable electronic device 2. In this case, an area of the third housing 23 corresponding to the additional screen may be provided to be transparent or semi-transparent. In any embodiment, in case that there is a member positioned between the second support portion 2311 and at least a part of the second area ⓑ in the closed state of the slidable electronic device 2, the area of the member corresponding to the additional screen may include an opening (opening) or be provided to be transparent or semi-transparent.

According to the embodiment, at least a part of the first housing 21, at least a part of the second housing 22, or at least a part of the third housing 23 may include a metallic material and/or a nonmetallic material. For example, the first housing 21 or the third housing 23 may include at least one conductive structure including a metallic material, and at least one non-conductive structure including a nonmetallic material and connected to at least one conductive structure. For example, the metallic material included in the first housing 21, the second housing 22, or the third housing 23 may be various materials such as magnesium, magnesium alloy, aluminum, aluminum alloy, zinc alloy, copper alloy, titanium, amorphous alloy, metal-ceramic composite material (e.g., cermet), or stainless steel (STS). The nonmetallic material included in the first housing 21, the second housing 22, or the third housing 23 may be various materials such as ceramic or polymer. In any embodiment, the first housing 21 and the third housing 23 may include the same metallic or nonmetallic material. In any embodiment, the first housing 21 and the third housing 23 may include different metallic or nonmetallic materials.

According to the embodiment, at least one conductive portion (or conductive area) included in the first housing 21 or the third housing 23 may be electrically connected to a wireless communication circuit (e.g., the wireless communication module 192 in FIG. 1) included in the slidable electronic device 2 and used as an antenna radiator.

According to the embodiment, the sliding structure in which the second housing 22 is slidable relative to the first housing 21 may include a sliding drive part capable of providing driving power for sliding the second housing 22 relative to the first housing 21 in response to an electrical signal. For example, the sliding drive part may include a motor and at least one gear operatively connected to the motor. When a signal is generated by an input module included in the slidable electronic device 2, the sliding drive part may provide driving power that enables the slidable electronic device 2 to switch between the closed state (see FIG. 2) and the open state (see FIG. 3). For example, when a signal is generated by a hardware button or a software button provided on the screen, the slidable electronic device 2 may switch from the closed state to the open state or from the open state to the closed state. As another example, when a signal is generated from various sensors such as a pressure sensor, the slidable electronic device 2 may switch from the closed state to the open state or from the open state to the closed state. The sensor may detect a squeeze gesture when a part of a user's hand (e.g., palm or finger) presses a designated section of the slidable electronic device 2 when the user carries or grips the slidable electronic device 2, and the slidable electronic device 2 switches from the closed state to the open state or from the open state to the closed state in response to the squeeze gesture. The sliding drive part is not limited to the motor. For example, the sliding drive part may include various actuators such as a solenoid or a hydraulic cylinder. For example, the solenoid may include a coil and a plunger positioned to correspond to the coil. When electric current is supplied to the coil, the coil may generate a mechanical motion of the plunger.

According to the embodiment, the slidable electronic device 2 may include at least one of one or more audio modules (e.g., the audio module 170 in FIG. 1), one or more sensor modules (e.g., the sensor module 176 in FIG. 1), one or more camera modules (e.g., the camera module 180 in FIG. 1), one or more light-emitting modules, one or more input modules (e.g., the input module 150 in FIG. 1), and/or one or more connection terminal modules (e.g., the interface 177 or the connection terminal 178 in FIG. 1). In some embodiments, the slidable electronic device 2 may exclude at least one of the above constituent elements or may additionally include other constituent elements. The positions of the constituent elements or the number of constituent elements may be variously implemented.

For example, any one of the one or more audio modules may include a microphone positioned in the slidable electronic device 2, and a microphone hole 301 provided in an external appearance of the slidable electronic device 2 while corresponding to the microphone. In the illustrated example, the microphone hole 301 may be provided in the first sidewall 201. The location or number of audio modules with respect to the microphone may vary, without being limited to the examples illustrated.

For example, any one of the one or more audio modules may include a first speaker for multimedia playback (or recording playback) positioned in the slidable electronic device 2, and a first speaker hole 302 provided in the external appearance of the slidable electronic device 2 while corresponding to the first speaker. For example, any one of the one or more audio modules may include a telephone second speaker (e.g., a telephone receiver) positioned in the slidable electronic device 2, and a second speaker hole 303 (e.g., a receiver hole) provided in the external appearance of the slidable electronic device 2 while corresponding to the second speaker. In the illustrated example, the first speaker hole 302 and the second speaker hole 303 may be provided in the first sidewall 201. The location or number of audio modules with respect to the speaker may be variously determined. In any embodiment, the microphone hole and the speaker hole may be implemented as a single hole. In some embodiments, the audio module related to the speaker may include a piezo speaker with no speaker hole.

For example, one or more sensor modules may generate electrical signals or data values corresponding to an internal operating state of the slidable electronic device 2 or an external environment state. In the embodiment, any one of the one or more sensor modules may include an optical sensor positioned in an internal space of the housing 20 while corresponding to the screen. The optical sensor may be disposed to at least partially overlap the screen when viewed from above the front surface of the slidable electronic device 2 (e.g., when viewed in the -z-axis direction). In this case, the sensing function of the optical sensor may be performed in a state in which the optical sensor or the position of the optical sensor is not visually distinguished (or exposed). The optical sensor may include, for example, a proximity sensor or an illumination sensor. In the embodiment, the optical sensor may be positioned below or beneath the first area ⓐ or the rear surface of the first area ⓐ included in the flexible display module 24, and the optical sensor or the position of the optical sensor may not be visually distinguished (or exposed). In any embodiment, the optical sensor may be positioned to be aligned with the recess provided in the rear surface of the first area ⓐ, or the optical sensor may be at least partially inserted into the recess. A partial area of the first area ⓐ, which at least partially overlaps the optical sensor, may include a pixel structure and/or a wiring structure different from those in another area. For example, a partial area of the first area ⓐ, which at least partially overlaps the optical sensor, may have a different pixel density compared to other areas. The pixel structure and/or wiring structure, which is formed in the partial area of the first area ⓐ at least partially overlapping the optical sensor, may reduce a loss of light between the outside and the optical sensor. As another example, a plurality of pixels may not be disposed in the partial area of the first area ⓐ that at least partially overlaps the optical sensor.

According to various embodiments, the optical sensor may be positioned to be aligned with an opening provided in the first area ⓐ of the flexible display module 24, or the optical sensor may be at least partially inserted into the opening. External light may reach the optical sensor through the transparent cover and the opening provided in the first area ⓐ. The transparent cover may serve to protect the flexible display module 24. For example, the transparent cover may include a flexible film or plate such as a plastic film (e.g., a polyimide film) or an ultra-thin glass (UTG).

According to various embodiments, the sensor is not limited to the optical sensor such as a proximity sensor or an illuminance sensor. Various other sensors may be positioned below the first area ⓐ or the rear surface of the first area ⓐ of the flexible display module 24 or positioned to correspond to the opening provided in the first area ⓐ. For example, an optical, electrostatic, or ultrasonic biosensor (e.g., a fingerprint sensor) may be positioned below the first area ⓐ or the rear surface of the first area ⓐ of the flexible display module 24 or positioned to correspond to the opening provided in the first area ⓐ. In various embodiments, the slidable electronic device 2 may include various other sensors (e.g., a gesture sensor, a gyro sensor, a barometric pressure sensor, a magnetic sensor, an acceleration sensor, a grip sensor, a color sensor, an infrared (IR) sensor, a temperature sensor, or a humidity sensor), and the positions of the sensors may be variously determined.

According to the embodiment, the one or more camera modules may include one or more lenses, an image sensor, and/or an image signal processor. For example, any one of the one or more camera modules may include a first camera module 304 (e.g., a front surface camera module) positioned to correspond to the front surface of the slidable electronic device 2. In the embodiment, the first camera module 304 may be positioned in the internal space of the housing 20 while corresponding to the screen. When viewed from above the front surface of the slidable electronic device 2 (e.g., when viewed in the -z-axis direction), the first camera module 304 may be disposed to at least partially overlap the screen. In this case, the image capturing function of the first camera module 304 may be performed in the state in which the position of the first camera module 304 or the first camera module 304 is not visually distinguished (or exposed). In the embodiment, the first camera module 304 may be positioned below or beneath the first area ⓐ or the rear surface of the first area ⓐ included in the flexible display module 24, and the position of the first camera module 304 or the first camera module 304 may not be visually distinguished (or exposed). In any embodiment, the first camera module 304 may be positioned to be aligned with the recess provided in the rear surface of the first area ⓐ, or the optical sensor may be at least partially inserted into the recess. For example, the first camera module 304 may include a hidden display rear surface camera (e.g., an under-display camera (UDC)). A partial area of the first area ⓐ, which at least partially overlaps the first camera module 304, may include a pixel structure and/or a wiring structure different from those in another area. For example, a partial area of the first area ⓐ, which at least partially overlaps the first camera module 304, may have a different pixel density compared to other areas. The pixel structure and/or wiring structure, which is formed in the partial area of the first area ⓐ at least partially overlapping the first camera module 304, may reduce a loss of light between the outside and the optical sensor. As another example, the plurality of pixels may not be disposed in the partial area of the first area ⓐ that at least partially overlaps the first camera module 304.

According to various embodiments, the first camera module 304 may be positioned to be aligned with an opening provided in the first area ⓐ of the flexible display module 24, or the first camera module 304 may be at least partially inserted into the opening. External light may reach the first camera module 304 through the transparent cover (e.g., a polyimide film or an ultra-thin glass), which protects the flexible display module 24 from the outside, and the opening provided in the first area ⓐ. The opening of the first area ⓐ, which is aligned with or overlaps the first camera module 304, may be provided in the form of a through-hole or notch. In any embodiment, the first camera module 304 may be positioned to correspond to a camera hole provided in the fourth sidewall 204 when viewed from above the front surface of the slidable electronic device 2. In various embodiments, the slidable electronic device 2 may include a light-emitting module (e.g., a light emitting diode (LED), an IR LED, or a xenon lamp) capable of providing state information in the form of light of the slidable electronic device 2. In any embodiment, the light-emitting module may provide a light source that operates in conjunction with an operation of the first camera module 304.

According to the embodiment, the slidable electronic device 2 may include a second camera module 305, a third camera module 306, and/or a light-emitting module 307 (e.g., a flash) positioned in the first housing 21 while corresponding to the first cover 212. The first cover 212 may include a first opening (e.g., a first camera hole) first opening (e.g., a first camera hole) provided to correspond to a second camera module 305 (e.g., a first rear surface camera module), a second opening (e.g., a second camera hole) provided to correspond to a third camera module 306 (e.g., a second rear surface camera module), and/or a third opening (e.g., a flash hole) provided to correspond to a light-emitting module 307. The second camera module 305 may be positioned in the first housing 21 while corresponding to the first opening. The third camera module 306 may be positioned in the first housing 21 while corresponding to the second opening. The light-emitting module 307 may be positioned in the first housing 21 while corresponding to the third opening. In the open state (see FIG. 3) of the slidable electronic device 2, the second camera module 305, the third camera module 306, and the light-emitting module 307 may be exposed to the outside without overlapping a part of the third housing 23 including the second support portion 2311 and the second cover 232 when viewed from above the rear surface of the slidable electronic device 2 (e.g., when viewed in the +z-axis direction). In the embodiment, in the closed state (see FIG. 2) of the slidable electronic device 2, a part of the third housing 23 including the second support portion 2311 and the second cover 232 may overlap the second camera module 305, the third camera module 306, and the light-emitting module 307 when viewed from above the rear surface of the slidable electronic device 2. A part of the third housing 23 including the second support portion 2311 and the second cover 232 may include a light transmission area 308 corresponding to the second camera module 305, the third camera module 306, and the light-emitting module 307. The light transmission area 308 may overlap the second camera module 305, the third camera module 306, and the light-emitting module 307 in the closed state of the slidable electronic device 2. In the closed state of the slidable electronic device 2, external light may reach the second camera module 305 or the third camera module 306 through the light transmission area 308. In the closed state of the slidable electronic device 2, the light outputted from the light-emitting module 307 may propagate to the outside of the slidable electronic device 2 through the light transmission area 308. In the embodiment, the light-emitting module 307 may include a light source for the second camera module 305 and/or the third camera module 306. The light emitting module 307 may include, for example, an LED or a xenon lamp. In any embodiment, a part of the third housing 23 including the second support portion 2311 and the second cover 232 may include an opening having a through-hole or notch shape and substituted for the light transmission area 308. The number or positions of the rear surface camera modules or light-emitting modules positioned in the first housing 21 while corresponding to the first cover 212 may be variously implemented without being limited to the illustrated example. As another example, the second camera module 305 or the third camera module 306 may be excluded. In the embodiment, the second camera module 305 and the third camera module 306 may have different attributes (e.g., view angles) or functions. A dual camera module is illustrated, but the present disclosure is not limited thereto. An example including two or more camera modules (e.g., triple camera modules) may be provided. The two or more camera modules (e.g., rear surface camera modules) may have different attributes (e.g., view angles) or functions. The two or more camera modules may provide different view angles (or a lens with different view angles), and the slidable electronic device 2 may selectively use the corresponding camera module on the basis of the user's selection related to the view angle. Any one of the two or more camera modules may include a wide-angle camera module, a telephoto camera module, a color camera module, a monochrome camera module, or an infrared (IR) camera module (e.g., a TOF (time of flight) camera module or a structured light camera module). In some embodiments, the IR camera module may be operated as at least a portion of the sensor module.

According to the embodiment, the one or more key input modules may include a first key input device 309 or a second key input device 310. In the illustrated example, the first key input device 309 may be positioned on the first sidewall 201, and the second key input device 310 may be positioned on the sixth sidewall 206. The position of the input module or the number of input modules may be variously implemented without being limited to the illustrated example. In some embodiments, the slidable electronic device 2 may not include some or all of the key input devices, and the key input devices that are not included may be implemented as soft keys using the screen. In any embodiment, the input module or the key input device may include at least one sensor module.

For example, any one of the one or more connection terminal modules (or connector modules or interface terminal modules) may include a connector (or an interface terminal) positioned in the slidable electronic device 2, and a connector hole 311 formed in the external appearance of the slidable electronic device 2 while corresponding to the connector. In the illustrated example, the connector hole 311 may be provided in the second sidewall 202. The location or number of connection terminal modules may be variously determined. The slidable electronic device 2 may transmit and/or receive power and/or data with an external electronic device electrically coupled to the connector. In the embodiment, the connector may include a USB connector or an HDMI connector. In various embodiments, any one of the one or more connection terminal modules may include an audio connector (e.g., a headphone connector or an earset connector) positioned in the slidable electronic device 2, and a connector hole provided in the external appearance of the slidable electronic device 2 while corresponding to the audio connector. In various embodiments, any one of one or more connection terminal modules may include a memory card connector positioned in the slidable electronic device 2, and a connector hole formed in the external appearance of the slidable electronic device 2 while corresponding to the memory card connector. In the illustrated example, the memory card connector may be positioned in the slidable electronic device 2 while corresponding to the first sidewall 201, and the connector hole may be covered by a detachable cover 312.

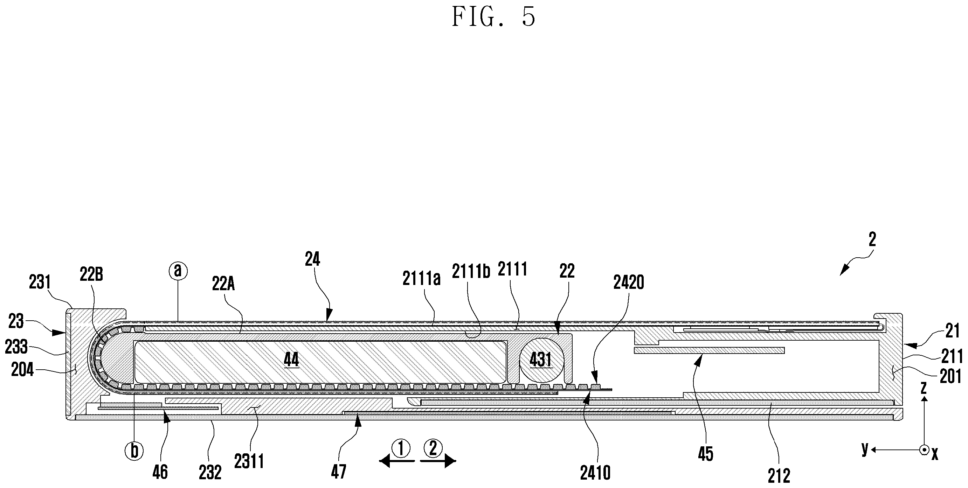

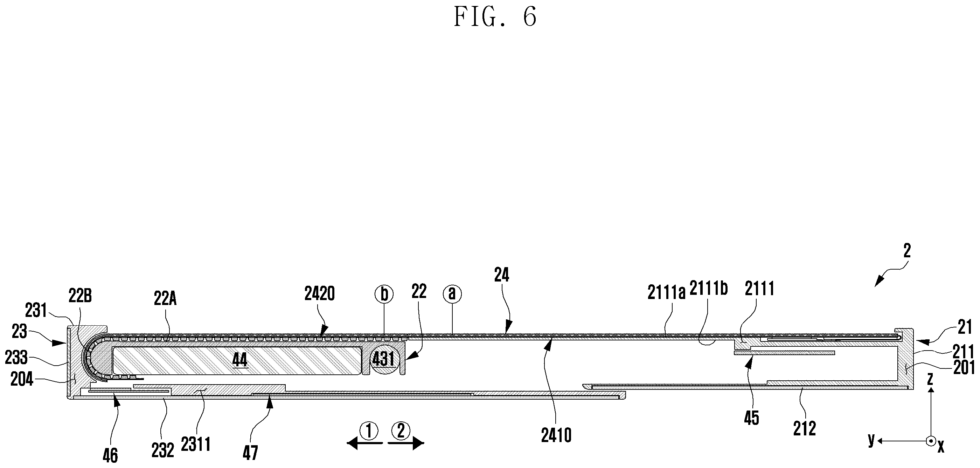

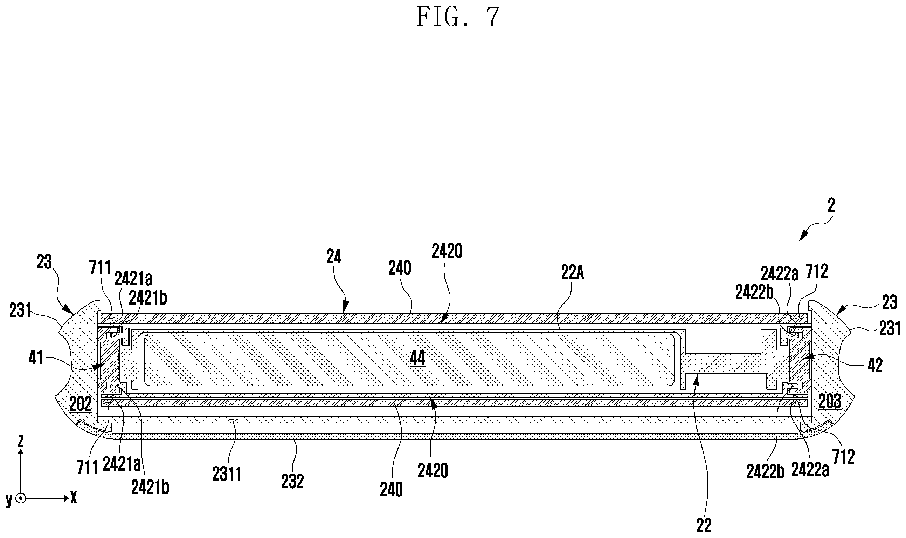

FIG. 4 is an exploded perspective view (exploded perspective view) of the slidable electronic device 2 and a cross-sectional view 501 of a display assembly 50 according to the embodiment of the present disclosure. FIG. 5 is a cross-sectional view of the slidable electronic device 2 taken along line A-A' in FIG. 2 according to the embodiment of the present disclosure. FIG. 6 is a cross-sectional view of the slidable electronic device 2 taken along line B-B' in FIG. 3 according to the embodiment of the present disclosure. FIG. 7 is a cross-sectional view of the slidable electronic device 2 taken along line C-C' in FIG. 2 according to the embodiment of the present disclosure.

With reference to FIGS. 4, 5, 6, and 7, the slidable electronic device 2 may include the first housing 21, the second housing 22, the third housing 23, the display assembly 50, a first guide rail 41, a second guide rail 42, a sliding drive device 43, a battery 44, a first printed circuit board 45, a second printed circuit board 46, and/or an antenna structure 47.

According to the embodiment, the first frame 211 of the first housing 21 may be provided as an integrated structure including the first support portion 2111 and the first sidewall portion 2112. The first support portion 2111 of the first frame 211 may be positioned in the slidable electronic device 2 while corresponding to the first housing 21. At least a part of the first support portion 2111 may include a metallic material and/or a nonmetallic material. Electronic components or various members related to the electronic components may be disposed on the first frame 211 or supported by the first frame 211. In the embodiment, the first area ⓐ of the flexible display module 24 may be disposed on the first support portion 2111. The first support portion 2111 may provide a first surface 2111a directed toward the front surface of the slidable electronic device 2, and the first area ⓐ of the flexible display module 24 may be disposed on the first surface 2111a. In any embodiment, the first support portion 2111 may be referred to as various other terms such as a 'bracket,' a 'support body (support),' an 'inner support body,' a 'support member,' a 'support structure,' or an 'inner support structure'. The first support portion 2111 may be defined or interpreted as a part of the first housing 21 or an element provided separately from the first housing 21. The first cover 212 may be disposed on the first frame 211 of the first housing 21. For example, the first cover 212 may be a plate including a first front surface directed toward the front surface of the slidable electronic device 2, and a first rear surface configured to provide at least a part of the rear surface of the slidable electronic device 2.

According to the embodiment, the second housing (or the second frame) 22 may be operatively connected to the first housing 21 so as to be slidable relative to the first housing 21. The second housing 22 may support the second area ⓑ of the flexible display module 24. For example, at least a part of the second housing 22 may include a metallic material and/or a nonmetallic material.

According to the embodiment, the third housing 23 may have a space provided by a combination of the second support portion 2311 and the second sidewall portion 2312 of the third frame 231. The second housing 22 may be positioned in the space of the third housing 23 and coupled to the third housing 23. For example, at least a part of the third housing 23 may include a metallic material and/or a nonmetallic material. The second cover 232 and/or the third cover 233 may be disposed on the third frame 231. For example, the second cover 232 may be a plate including a second front surface directed toward the front surface of the slidable electronic device 2, and a second rear surface configured to provide at least a part of the rear surface of the slidable electronic device 2. In any embodiment, the third cover 233 may be excluded. In this case, the second sidewall portion 2312 may have a shape further including a portion corresponding to the third cover 233.

According to the embodiment, when viewed from above the front surface of the slidable electronic device 2 (e.g., when viewed in the -z-axis direction), an area in which the first support portion 2111 of the first housing 21 and the second housing 22 overlap each other may decrease during the slide-out of the second housing 22 and increase during the slide-in of the second housing 22.

According to the embodiment, the first area ⓐ of the flexible display module 24 may be disposed on the first support portion 2111 of the first housing 21. For example, the first area ⓐ of the flexible display module 24 may be disposed on the first support portion 2111 by using a thermally reactive adhesive material (or a thermally reactive bonding material), a photoreactive adhesive material (or a photoreactive bonding material), a general adhesive agent (or a general bonding agent), a double-sided tape, or an organic adhesive material (or an organic bonding material). In any embodiment, the first area ⓐ of the flexible display module 24 may be inserted into the first frame 211 in the first direction ① in a sliding manner and disposed in a recess provided in the first surface 2111a of the first support portion 2111. Because the first area ⓐ of the flexible display module 24 is disposed on the first housing 21, the second area ⓑ of the flexible display module 24 may be slid to the outside (e.g., the position visible to the outside from the slidable electronic device 2) from the space between the second housing 22 and the third housing 23 during the slide-out of the second housing 22.

According to the embodiment, the second housing 22 may include a first support surface 22A and a second support surface 22B for supporting the second area ⓑ of the flexible display module 24. The first support surface 22A may include a planar area. When viewed from above the front surface of the slidable electronic device 2 (e.g., when viewed in the -z-axis direction), an area in which the first support surface 22A faces the first support portion 2111 of the first housing 21 may decrease during the slide-out of the second housing 22 and increase during the slide-in of the second housing 22. In the closed state (see FIG. 2) or the open state (see FIG. 3) of the slidable electronic device 2 or during the sliding motion of the second housing 22 relative to the first housing 21, at least a part of the first support surface 22A, which faces and overlap the first support portion 2111 of the first housing 21, may support the first support portion 2111 of the first housing 21. In the open state of the slidable electronic device 2 or during the sliding motion of the second housing 22 relative to the first housing 21, the first support surface 22A may support a part of the second area ⓑ of the flexible display module 24 that provides the screen. An area of the first support surface 22A, which supports the second area ⓑ of the flexible display module 24 without being covered by the first support portion 2111 of the first housing 21, may increase during the slide-out of the second housing 22. In the embodiment, the second support surface 22B may include a curved surface area (or a support area of a curved surface). The second support surface 22B may be positioned to correspond to the fourth sidewall 204 of the third housing 23. The second support surface 22B may support a bending portion B of the second area ⓑ of the flexible display module 24. The bending portion B of the flexible display module 24 may be a portion disposed and maintained in a bent shape in the second area ⓑ so that the second area ⓑ switches the direction and moves when the second housing 22 slides relative to the first housing 21. During the slide-out of the second housing 22, at least a part of the second area ⓑ may be slid to the outside from the inside of the slidable electronic device 2 through the curved space between the fourth sidewall 204 and the second support surface 22B of the second housing 22 by the relative position between the first housing 21 coupled to the first area ⓐ and the second housing 22 corresponding to the second area ⓑ. During the slide-in of the second housing 22, at least a part of the second area ⓑ may be slid into the inside of the slidable electronic device 2 through the curved space between the fourth sidewall 204 and the second support surface 22B of the second housing 22 by the relative position between the first housing 21 coupled to the first area ⓐ and the second housing 22 corresponding to the second area ⓑ.

According to various embodiments, a rotary member such as a roller or a pulley may be positioned to be substituted for the portion of the second housing 22 that provides the second support surface 22B. For example, one end and the other end of a rotary shaft related to the rotary member may be rotatably coupled to the second housing 22 or the third housing 23. In any embodiment, the rotary member may be interpreted as a curved surface member, a curved surface support member, or a curved surface support structure rotatably implemented on the basis of friction with a display support structure 2420 (e.g., a multi-bar structure).

According to the embodiment, with reference to the cross-sectional view 501 of the display assembly 50, the display assembly 50 may include the flexible display module 24, a support sheet 2410, and/or the display support structure 2420.

According to the embodiment, the flexible display module 24 may include a flexible display 240, a transparent cover 245, and/or an optically transparent adhesive member (or an optically transparent bonding member) 246. For example, the flexible display 240 may be coupled to the transparent cover 245 by using the optically transparent adhesive member 246 (e.g., optical clear adhesive (OCA), optical clear resin (OCR), or super view resin (SVR)). The transparent cover 245 (e.g., a window) may cover the flexible display 240 and protect the flexible display 240 from the outside. The transparent cover 245 may be implemented in the form of a thin film (e.g., a thin-film layer) having flexibility. For example, the transparent cover 245 may include a plastic film (e.g., a polyimide film) or a thin-film glass (e.g., ultra-thin glass). In any embodiment, the transparent cover 245 may include a plurality of layers. For example, the transparent cover 245 may have a shape in which various coating layers are disposed on a plastic film or a thin-film glass. For example, the transparent cover 245 may have a shape in which at least one protective layer or coating layer including a polymer material (e.g., PET (polyester), PI (polyimide), or TPU (thermoplastic polyurethane)) is disposed on a plastic film or thin-film glass. In any embodiment, the transparent cover 245 and the optically transparent adhesive member 246 may be defined or interpreted as a part of the flexible display 240. For example, the flexible display 240 may include a display panel 241, a base film 242, a lower panel 243, or an optical layer 244. The display panel 241 may be positioned between the optical layer 244 and the base film 242. The base film 242 may be positioned between the display panel 241 and the lower panel 243. The optical layer 244 may be positioned between the optically transparent adhesive member 246 and the display panel 241. Various polymer adhesive materials (or adhesive members) or various bonding materials (or bonding members) may be disposed between the display panel 241 and the base film 242, between the base film 242 and the lower panel 243, and/or between the display panel 241 and the optical layer 244. For example, the display panel 241 may include a light-emitting layer 241a, a thin film transistor (TFT) film (or a TFT substrate) 241b, and/or an encapsulation layer (e.g., a thin-film encapsulation (TFE) layer) 241c. For example, the light-emitting layer 241a may include a plurality of pixels implemented by light-emitting elements such as organic light-emitting diodes (OLEDs) or micro LEDs. The light-emitting layer 241a may be disposed on the TFT film 241b by depositing (evaporating) organic materials. The TFT film 241b may be positioned between the light-emitting layer 241a and the base film 242. The TFT film 241b may refer to a film structure in which at least one TFT is disposed on a flexible substrate (e.g., a polyimide (PI) film) by a series of processes such as deposition, patterning, and/or etching. At least one TFT may turn on or off the pixel or adjust brightness of the pixel by controlling electric current in respect to the light-emitting element of the light-emitting layer 241a. For example, at least one TFT may be implemented as an a-Si (amorphous silicon) TFT, an LCP (liquid crystalline polymer) TFT, an LTPO (low-temperature polycrystalline oxide) TFT, or an LTPS (low-temperature polycrystalline silicon) TFT. In the embodiment, the display panel 241 may include a storage capacitor. The storage capacitor may maintain a voltage signal in the pixel, maintain a voltage applied to the pixel in a single frame, or reduce a change in gate voltage of the TFT caused by leakage current (leakage) for a light-emitting time. A routine (e.g., initialization or data write) for controlling at least one TFT may allow the storage capacitor to maintain the voltage applied to the pixel at a predetermined time interval. In the embodiment, the display panel 241 may be implemented by an OLED, and the encapsulation layer 241c may cover the light-emitting layer 241a. The organic material and the electrode of the OLED, which emit light, are very sensitive to oxygen and/or moisture and may lose the light-emitting characteristics. In order to reduce or prevent the loss of the light-emitting characteristics, the encapsulation layer 241c may seal the light-emitting layer 241a so that oxygen and/or moisture is not introduced into the OLED. The base film 242 may include a flexible film made of polymer or plastic such as polyimide or polyester (PET). The base film 242 may serve to support and protect the display panel 241. In any embodiment, the base film 242 may be called a 'protective film,' a 'back film,' or a backplate. The lower panel 243 may include a plurality of layers for various functions. Various polymer adhesive members (or bonding members) (not illustrated) may be disposed between the plurality of layers included in the lower panel 243. For example, the lower panel 243 may include a light-blocking layer 243a, a buffer layer 243b, and/or a lower layer 243c. The light-blocking layer 243a may be positioned between the base film 242 and the buffer layer 243b. The buffer layer 243b may be positioned between the light-blocking layer 243a and the lower layer 243c. The light-blocking layer 243a may block at least a part of light introduced from the outside. For example, the light-blocking layer 243a may include an embossed layer. The embossed layer may be a black layer including an uneven pattern. The buffer layer 243b may mitigate external impact applied to the flexible display 240. For example, the buffer layer 243b may include a sponge layer or a cushion layer. The lower layer 243c may diffuse, disperse, or dissipate heat generated from the slidable electronic device 2 or the flexible display 240. The lower layer 243c may absorb or block electromagnetic waves. The lower layer 243c may mitigate external impact applied to the slidable electronic device 2 or the flexible display 240. For example, the lower layer 243c may include a composite sheet 243d or a copper sheet 243e. In the embodiment, the composite sheet 243d may be a sheet made by combining and processing layers or sheets having different properties. For example, the composite sheet 243d may include at least one of polyimide and graphite. The composite sheet 243d may be substituted with a single sheet including a single material (e.g., polyimide or graphite). The composite sheet 243d may be positioned between the buffer layer 243b and the copper sheet 243e. The copper sheet 243e may be substituted with various other metal sheets. In any the embodiment, at least a part of the lower layer 243c may be configured as a conductive member (e.g., metal plate) and assist in reinforcing the rigidity of the slidable electronic device 2. The at least a part of the second layer may be used to block peripheral noise and disperse heat discharged from a peripheral heat dissipation component (e.g., a display drive circuit) (e.g., a display drive integrated circuit (DDI)). For example, the conductive member may include at least one of copper (Cu), aluminum (Al), SUS (stainless steel), and CLAD (e.g., a stack member in which SUS and Al are alternately disposed). The lower layer 243c may include various layers for various other functions. In any embodiments (not illustrated), at least one of additional polymer layers (e.g., layers including PI, PET, or TPU) may be further disposed on the rear surface of the display panel 241 in addition to the base film 242. In any embodiment, at least one of the plurality of layers (e.g., the light-blocking layer 243a, the buffer layer 243b, the composite sheet 243d, and the copper sheet 243e) included in the lower panel 243 may be excluded. In any embodiment, the arrangement order of the plurality of layers included in the lower panel 243 may be variously changed without being limited to the illustrated embodiment. For example, the optical layer 244 may include a polarizing layer (a polarizing layer or polarizer), or a phase delay layer (a retardation layer or retarder). The polarizing layer and phase delay layer may improve outdoor visibility of the screen. For example, the optical layer 244 may selectively transmit light that is generated from a light source of the display panel 241 and vibrates in a predetermined direction. In any embodiment, the polarizing layer and the phase delay layer may be combined to provide a single layer, and this layer may be interpreted as a 'circularly polarized light layer'. The optically transparent adhesive member 246 may be positioned between the transparent cover 245 and the optical layer 244. In any embodiment, the polarizing layer (or the circularly polarized light layer) may be excluded. In this case, the black PDL (pixel define layer) and/or a color filter for substituting for the polarizing layer may be provided. The slidable electronic device 2 may include a touch detection circuit (e.g., a touch sensor) (not illustrated). The touch detection circuit may be implemented as a transparent conductive layer (or film) based on various electrically conductive materials such as ITO (indium tin oxide). In the embodiment, the touch detection circuit may be disposed between the transparent cover 245 and the optical layer 244 (e.g., add-on type). In another embodiment, the touch detection circuit may be disposed between the optical layer 244 and the display panel 241 (e.g., on-cell type). In another embodiment, the display panel 241 may include a touch detection circuit or a touch detection function (e.g., in-cell type). In any embodiment, the display panel 241 may be based on OLEDs and include the encapsulation layer 241c disposed between the light-emitting layer 241a and the optical layer 244. The encapsulation layer 241c may serve as a pixel protection layer for protecting the plurality of pixels of the light-emitting layer 241a. In the embodiment (not illustrated), the flexible display 240 may be a touch detection circuit provided between the encapsulation layer 241c and the optical layer 244 and disposed on the encapsulation layer 241c and include a conductive pattern such as a metal mesh (e.g., an aluminum metal). For example, to correspond to the curved flexible display 240, the metal mesh may have higher durability than the transparent conductive layer implemented by ITO. In any embodiment, the flexible display 240 may further include a pressure sensor (not illustrated) capable of measuring intensity (pressure) of a touch. The plurality of layers included in the display panel 241 or the lower panel 243, the layered structure thereof, or the stacking order may be variously implemented. The flexible display 240 may be implemented by excluding some of the constituent elements or adding other constituent elements in accordance with the tendency of the provided form or convergence.

According to the embodiment, the support sheet (or a support plate or a support layer) 2410 may be disposed on the rear surface of the flexible display module 24. The rear surface of the flexible display module 24 may refer to a surface positioned opposite to a surface through which light is emitted from the display panel 241 including the plurality of pixels. For example, the support sheet 2410 may cover at least a part of the lower panel 243 of the flexible display module 24 and be disposed on (e.g., attached to) the rear surface of the lower panel 243. The support sheet 2410 may be coupled to the lower panel 243 by using an adhesive material (or a bonding material). The support sheet 2410 may be positioned between the lower panel 243 and the display support structure 2420, and the display support structure 2420 may be coupled to the support sheet 2410. The display support structure 2420 may be coupled to the support sheet 2410 by using an adhesive or bonding material. For example, an adhesive material (or a bonding material) between the flexible display 240 and the support sheet 2410 and/or an adhesive material (or a bonding material) between the support sheet 2410 and the display support structure 2420 may include a thermally reactive adhesive material (or a thermally reactive bonding material), a photoreactive adhesive material (or a photoreactive bonding material), a general adhesive agent (or a general bonding agent), or a double-sided tape. As another example, an adhesive material (or a bonding material) may include various polymers such as triazine thiol, dithiodipyridine, or silane-based compound or an organic adhesive material (or an organic bonding material) such as sealant. The support sheet 2410 may contribute to improving the durability (e.g., reinforcing the rigidity) of the flexible display module 24. The support sheet 2410 may reduce an influence of a load or stress on the flexible display module 24 that may occur when the second housing 22 slides relative to the first housing 21. The support sheet 2410 may reduce or prevent damage to the flexible display module 24 caused by a force transmitted when the second housing 22 slides relative to the first housing 21. In the embodiment, the support sheet 2410 may include a metallic material. For example, the support sheet 2410 may include stainless steel. The support sheet 2410 may include various other metallic materials. In any embodiment, the support sheet 2410 may include engineering plastic.

According to the embodiment, the support sheet 2410 may include a lattice structure that at least partially overlaps the second area ⓑ of the flexible display module 24. For example, the lattice structure may include a plurality of openings (or slits) formed through a portion between one surface of the support sheet 2410 facing the display support structure 2420 and the other surface of the support sheet 2410 facing the lower panel 243 of the flexible display module 24. The lattice structure may refer to a pattern structure in which the plurality of openings is regularly arranged. The plurality of openings may be periodically formed and have substantially the same shape, and the plurality of openings may be arranged repeatedly at predetermined intervals. The lattice structure may contribute to the flexibility of the second area ⓑ, and the lattice structure may allow the second area ⓑ to be more flexible than the first area ⓐ. In any embodiment, the lattice structure including the plurality of openings may be referred to as other terms such as an 'opening pattern,' a 'hole pattern,' or a 'lattice pattern'. **In** any embodiment, the support sheet 2410 may include a recess pattern (not illustrated) that may be substituted for the lattice structure and include a plurality of recesses. For example, the recess pattern may refer to a pattern structure in which a plurality of recesses having a recessed shape is regularly arranged in a surface of the support sheet 2410 facing the display support structure 2420 or a surface of the support sheet 2410 facing the lower panel 243 of the flexible display module 24. **In** any embodiment, the lattice structure or the recess pattern may be expanded to the first area ⓐ of the flexible display module 24. **In** any embodiment, the support sheet 2410 including the lattice structure or the recess pattern may have a plurality of layers, or the conductive member corresponding to the support sheet 2410 may have a plurality of layers. The support sheet 2410 may prevent the elements (e.g., the display support structure 2420), which are positioned in the slidable electronic device 2, from being visible from the outside of the slidable electronic device 2 through the flexible display module 24. Even though the lattice structure of the support sheet 2410 corresponding to the second area ⓑ of the flexible display module 24 includes the plurality of openings, the display support structure 2420 may transmit light at a level at which the display support structure 2420 is substantially invisible through the flexible display module 24.

According to various embodiments, the support sheet 2410 may reduce electromagnetic interference (EMI) related to the flexible display module 24. In any embodiment, the support sheet 2410 may diffuse or display heat dispersed from the heat-radiating component (e.g., the display drive circuit such as a DDI or DDI chip).

According to the embodiment, the display support structure (or the display support member) 2420 may be disposed on or coupled to the support sheet 2410. In case that the support sheet 2410 is excluded, the display support structure 2420 may be disposed on or coupled to the rear surface of the flexible display module 24. The display support structure 2420 may be positioned between the second area ⓑ of the flexible display module 24 and the first support surface 22A of the second housing 22 and support the second area ⓑ. The area of the first support surface 22A of the second housing 22, which supports the display support structure 2420 without being covered by the first support portion 2111 of the first housing 21, may increase during the slide-out of the second housing 22. The area of the first support surface 22A of the second housing 22, which supports the display support structure 2420 without being covered by the first support portion 2111 of the first housing 21, may decrease during the slide-in of the second housing 22. The display support structure 2420 may support the bending portion B of the flexible display module 24 between the bending portion B of the flexible display module 24 and the second support surface 22B of the second housing 22. The second housing 22 and the display support structure 2420 may move while generating friction therebetween during the slide-out or slide-in of the second housing 22.

According to the embodiment, the display support structure 2420 may contribute to providing a smooth screen by reducing a situation in which the screen (see FIG. 2 or 3) is separated by elasticity of the flexible display module 24 and/or elasticity of the support sheet 2410. The display support structure 2420 may contribute to maintaining the shape in which the second area ⓑ is smoothly connected to the first area ⓐ by supporting the second area ⓑ so that the second area ⓑ of the flexible display module 24 is not separated by the elasticity of the flexible display module 24 and/or the elasticity of the support sheet 2410. The display support structure 2420 may support the second area ⓑ to maintain the shape in which the second area ⓑ of the flexible display module 24 is smoothly connected to the first area ⓐ of the flexible display module 24. The display support structure 2420 may contribute to the smooth movement of the flexible display module 24 when the second housing 22 slides relative to the first housing 21. For example, the display support structure 2420 may contribute to the movement of the second area ⓑ of the flexible display module 24 while maintaining the shape in which the second area ⓑ of the flexible display module 24 is smoothly connected to the first area ⓐ of the flexible display module 24 when the second housing 22 slides relative to the first housing 21.

According to the embodiment, the display support structure 2420 may include a multi-bar structure (or a multi-bar or a multi-bar assembly). For example, the multi-bar structure may include a plurality of support bars extending in a third direction ③ orthogonal to the first direction ① (e.g., the slide-out direction) and orthogonal to the direction directed toward the front surface of the slidable electronic device 2. The multi-bar structure may include a shape in which the plurality of support bars is arranged at the other surface positioned opposite to one surface of the display support structure 2420 directed toward the second area ⓑ of the flexible display module 24. The multi-bar structure may have flexibility because of portions having relatively small thicknesses between the plurality of support bars. In any embodiment, the multi-bar structure may be provided without a portion that connects the two adjacent support bars. The multi-bar structure may be referred to as other terms such as a 'flexible track'. The display support structure 2420 may include a metallic material, such as stainless steel, and/or a nonmetallic material such as polymer. Even though the support sheet 2410 corresponding to the second area ⓑ of the flexible display module 24 may provide the lattice structure including the plurality of openings, it is possible to reduce or prevent a situation in which the plurality of support bars of the multi-bar structure protrudes through the flexible display module 24 and is visible, in comparison with a comparative example in which the support sheet 2410 is excluded.

According to various embodiments, the display support structure 2420 may serve as the support sheet 2410. In this case, the support sheet 2410 may be excluded.

According to various embodiments, the support sheet 2410 may be defined or interpreted as a display support structure different from the display support structure 2420.

According to various embodiments, the support sheet 2410 may be defined or interpreted as a part of the display support structure 2420.

According to the embodiment, a lubricant (e.g., grease) may be disposed (e.g., applied) between the display support surface of the second housing 22 and the display support structure 2420 in order to reduce a frictional force between the display support surface (e.g., the first support surface 22A and the second support surface 22B) of the second housing 22 and the display support structure 2420. In any embodiment, the display support surface of the second housing 22 or the surface of the display support structure 2420 may be formed as lubrication coating (e.g., coating using various lubricating materials such as Teflon).

According to the embodiment, the first guide rail 41 and the second guide rail 42 may guide the movement of the display support structure 2420. The first guide rail 41 may include a first rail part on which one side portion of the display support structure 2420 is positioned, and the first rail part may guide a movement of the display support structure 2420. The second guide rail 42 may include a second rail part on which the other side portion of the display support structure 2420 is positioned, and the second rail part may guide the movement of the display support structure 2420. For example, the first and second rail parts may include recesses that provide patterns corresponding to a movement path of the display assembly 50 when the second housing 22 slides relative to the first housing 21. The first guide rail 41 may be positioned between the second housing 22 and the fifth sidewall 205 of the third housing 23 and disposed on the second housing 22 by using a method such as screw fastening. The second guide rail 42 may be positioned between the second housing 22 and the sixth sidewall 206 of the third housing 23 and disposed on the second housing 22 by using a method such as screw fastening. The first guide rail 41 may be coupled to the fifth sidewall 205 of the third housing 23 by using a method such as screw fastening. The second guide rail 42 may be coupled to the sixth sidewall 206 of the third housing 23 by using a method such as screw fastening.

In the embodiment, with reference to FIG. 7, the plurality of support bars included in the display support structure 2420 may each include a first edge support portion 2421a configured to support a first edge area (or a first rim area) 711 of the flexible display module 24 positioned to correspond to the first guide rail 41. The plurality of support bars may each include a first pin 2421b extending from the first edge support portion 2421a and inserted into the first rail part of the first guide rail 41. The plurality of support bars may each include a second edge support portion 2422a configured to support a second edge area (or a second rim area) 712 of the flexible display module 24 positioned to correspond to the second guide rail 42. The plurality of support bars may each include a second pin 2422b extending from the second edge support portion 2422a and inserted into the second rail part of the second guide rail 42. In any embodiment, the integrated metal or nonmetallic member including the first edge support portion 2421a and the first pin 2421b and the integrated metal or nonmetallic member including the second edge support portion 2422a and the second pin 2422b may be provided separately and coupled to the support bars.

According to various embodiments, the fifth sidewall 205 of the third housing 23 may be implemented to include the first guide rail. In this case, the first guide rail 41 may be excluded. The sixth sidewall 206 of the third housing 23 may be implemented to include the second guide rail. In this case, the second guide rail 42 may be excluded.

According to the embodiment, the sliding drive device 43 may include a motor assembly 431, a bracket (or a motor bracket) 432, a circular gear (or a round gear) 433, and/or a linear gear (or a linear gear structure) 434.

According to the embodiment, the motor assembly 431 may provide power (or driving power) for sliding the second housing 22 relative to the first housing 21. The motor assembly 431 may be disposed in the second housing 22. For example, the motor assembly 431 may be disposed on one surface of the second housing 22 directed toward the rear surface of the slidable electronic device 2. The motor assembly 431 may provide power for sliding the second housing 22 relative to the first housing 21. When the second housing 22 is slid relative to the first housing 21 by the power provided by the motor assembly 431, a relative position between the first guide rail 41 and one side portion of the display support structure 2420 positioned on the first guide rail 41 may be changed, and a relative position between the second guide rail 42 and the other side portion of the display support structure 2420 positioned on the second guide rail 42 may change. Because the flexible display assembly 50 is coupled to the first support portion 2111 of the first housing 21, the change in the relative position between the first housing 21 and the second housing 22, the change in the relative position between the first guide rail 41 and one side portion of the display support structure 2420, and the change in the relative position between the second guide rail 42 and the other side portion of the display support structure 2420 may act as a force for moving the portion of the display support structure 2420 on which the second area ⓑ of the flexible display module 24 is disposed.

According to the embodiment, the motor assembly 431 may include a motor and a gear structure operatively connected to the motor. For example, the motor may include a step motor. In addition, various types of motors may be implemented, and the configuration of the motor is not limited. For example, the gear structure may be disposed between the motor and the circular gear 433 and operatively connect the motor and the circular gear 433. The gear structure may be connected to a first rotary shaft (or a first shaft or an input shaft) of the motor or may include a second rotary shaft (or a second shaft or an output shaft) connected to the circular gear 433. The first and second rotary shafts may be substantially parallel to the third direction ③. A rotation center line of the first rotary shaft and a rotation center line of the second rotary shaft may be substantially consistent with each other. In any embodiment, the center line of the first rotary shaft and the rotation center line of the second rotary shaft may be parallel to each other and spaced apart from each other. In any embodiment, the first rotary shaft and the second rotary shaft may not be parallel to each other. Accordingly, the motor assembly 431 may be positioned and modified to be different from the illustrated example. For example, the first rotary shaft and the second rotary shaft may be orthogonal to (or intersect) each other, and the gear structure may be implemented to transmit power or a motion from the first rotary shaft to the second rotary shaft by using a conical gear (e.g., a bevel gear). In the embodiment, the gear structure may include a reduction gear. For example, the gear structure may allow the second rotary shaft to rotate at a lower rotational speed or with a smaller number of rotations than the first rotary shaft. The gear structure may increase torque of the second rotary shaft by reducing power of the first rotary shaft. The gear structure (e.g., the reduction gear) may contribute to the stable sliding motion of the second housing 22 relative to the first housing 21 by increasing torque while reducing a speed of the second rotary shaft in comparison with the first rotary shaft. The power for sliding the second housing 22 relative to the first housing 21 may be outputted from the second rotary shaft, and the second rotary shaft may be defined or interpreted as a rotary shaft, a driving shaft, or a power transmission shaft of the motor assembly 431. In any embodiment, the circular gear 433 may be defined or interpreted as a part of the gear structure. In any embodiment, the motor may be implemented in an integrated shape including the gear structure. In any embodiment, the gear structure may be excluded. In this case, the first rotary shaft of the motor may be connected to the circular gear 433.

According to the embodiment, the motor assembly 431 may be disposed on (or connected to) the second housing 22 by using the bracket 432. The bracket 432 may contribute to stably positioning the motor assembly 431 in the second housing 22. The bracket 432 may contribute to the durability of the motor assembly 431. In the embodiment, the bracket 432 may be coupled to the gear structure of the motor assembly 431 and coupled to the second housing 22 by using screw fastening. For example, the circular gear 433 may be accommodated in the bracket 432, and the rotary shaft of the circular gear 433 may be rotatably supported by the bracket 432. The bracket 432 may be an element for stably positioning the motor assembly 431 in the second housing 22 and referred to as various other terms such as a 'connection structure,' a 'connection member,' a 'motor assembly support member,' a 'motor assembly support structure,' a 'motor assembly bracket,' or a 'frame'.

According to the embodiment, the circular gear 433 may include a cylindrical or circular plate-shaped rotary body, and a plurality of gear teeth formed along a circumference of the rotary body. The linear gear 434 may have a gear structure in which the plurality of gear teeth is linearly arranged in the first direction ① (e.g., the slide-out direction). For example, the linear gear 434 may have a plate shape including one surface including the plurality of gear teeth, and the other surface positioned opposite to one surface. The linear gear 434 may be disposed on the first support portion 2111 of the first housing 21. The linear gear 434 may be disposed on a second surface 2111b of the first support portion 2111 by various methods such as screw fastening or bonding. The circular gear 433 and the linear gear 434 may be in an engaged state. The circular gear 433 may be rotated by the second rotary shaft of the motor assembly 431, and the linear gear 434, which engages with the circular gear 433, may rectilinearly move. The rotational motion of the circular gear 433 may be converted into the rectilinear motion of the linear gear 434, such that a mutual sliding motion may be provided between the first housing 21 coupled to the linear gear 434 and the second housing 22 coupled to the motor assembly 431. When viewed from above the front surface of the slidable electronic device 2 (e.g., when viewed in the -z-axis direction), the area in which the second housing 22 covers the first support portion 2111 of the first housing 21 and the linear gear 434 disposed on the first support portion 2111 may decrease during the slide-out of the second housing 22 and increase during the slide-in of the second housing 22. In any embodiment, the circular gear 433 may be referred to as a 'pinion' or a 'pinion gear', and the linear gear 434 may be referred to as a 'rack' or a 'rack gear'. The circular gear 433 and the linear gear 434 may be made of a material (e.g., metal or engineering plastic) having rigidity or durability that prevents substantial deformation of the circular gear 433 and the linear gear 434 while corresponding to a force applied to the mutual sliding motion between the first housing 21 and the second housing 22.

According to various embodiments, the first support portion 2111 of the first housing 21 may have an integrated shape including the linear gear 434.

According to the embodiment, to reduce a loss of motion transmission or a loss of power transmission, a lubricant (e.g., grease) may be positioned between the circular gear 433 and the linear gear 434, thereby ensuring the smooth motion and/or durability between the circular gear 433 and the linear gear 434. In any embodiment, the circular gear 433 and/or the linear gear 434 may be coated with lubrication coating (e.g., coating using various lubricating materials such as Teflon coating), thereby reducing a kinetic frictional force.

According to various embodiments, the motor assembly 431 and the circular gear 433 may be disposed on the first support portion 2111 of the first housing 21 by using the bracket 432, and the linear gear 434 may be disposed in the second housing 22.

According to the embodiment, the slidable electronic device 2 may include a motor drive circuit (e.g., a motor controller or a motor driver) electrically connected to the motor assembly 431. The motor drive circuit may control the motor assembly 431 on the basis of a control signal received from the processor (e.g., the processor 120 in FIG. 1), and a rotation direction, a rotation angle, a rotation amount, a rotational speed, a rotation acceleration, or a rotation angular velocity of the circular gear 433 operatively connected to the motor assembly 431. In the embodiment, the motor drive circuit may include a motor encoder for detecting a driving state of the motor. For example, the motor encoder may include a circular plate coupled to the rotary shaft of the motor, and a detector capable of detecting a rotation direction, a rotation angle, a rotation amount, a rotational speed, a rotation acceleration, or a rotation angular velocity of the rotary shaft of the motor on the basis of electronically recognition graduation and indication marked on the circular plate. The processor may control the motor drive circuit on the basis of instructions stored in the memory (e.g., the memory 130 in FIG. 1) and related to the mutual sliding motion between the first housing 21 and the second housing 22.

A collision in which the first housing 21 and the second housing 22, which operate relative to each other, strongly interact within a comparatively short time in case that a speed (or movement speed) at which the second housing 22 slides relative to the first housing 21 is not 0 at a switching completion time point when the slidable electronic device 2 switches from the closed state (see FIG. 2) to the open state (see FIG. 3) or switches from the open state to the closed state. The collision may make it difficult to provide a soft sliding motion to the user. Alternatively, an impact caused by the collision may damage the constituent elements (or driving elements) included in the sliding drive device 43. In the embodiment, the slidable electronic device 2 may control a rotational speed of the circular gear 433 to reduce the collision by controlling the motor drive circuit. For example, the rotational speed of the circular gear 433 may be controlled so that the speed at which the second housing 22 slides relative to the first housing 21 may decrease, and the second housing 22 may be stopped at the state switching completion time point when the slidable electronic device 2 switches from the closed state to the open state or switches from the open state to the closed state.

According to the embodiment, the slidable electronic device 2 may include the sliding structure for the stable, smooth mutual sliding motion between the first housing 21 and the second housing 22. For example, the sliding structure may include a linear motion guide (LM guide) configured to connect the first housing 21 and the second housing 22. With the LM guide, the second housing 22 may rectilinearly move softly and smoothly in the first direction ① or the second direction ② relative to the first housing 21. For example, the LM guide may include a rail, a block, and/or a bearing. The rail may have a bar shape extending from a first end to a second end in the direction (e.g., the first direction ①) in which the second housing 22 slides relative to the first housing 21. The rail and the block may be coupled to be slidable relative to each other. The bearing may be positioned between the rail and the block and reduce friction between the rail and the block. For example, the bearing may include a plurality of bearing balls and a retainer. In any embodiment, the block may have a shape including the bearing. In the embodiment, although not illustrated, the slidable electronic device 2 may include a first LM guide and a second LM guide. A first end of a rail of a first LM guide may be coupled to the second sidewall 202 of the first housing 21, and the block of the first LM guide may be disposed on (coupled to) one surface of the second housing (or the second frame) 22 corresponding to the first guide rail 41. The first guide rail 41 may include a first recess provided to correspond to the rail of the first LM guide. When the second housing 22 coupled to the block of the first LM guide slides inward or outward relative to the first housing 21 coupled to the rail, the first recess may prevent the first guide rail and the rail of the first LM guide from interfering with each other. A first end of a rail of a second LM guide may be coupled to the third sidewall 203 of the first housing 21, the block of the second LM guide may be disposed on (or coupled to) one surface of the second housing 22 corresponding to the second guide rail 42. The first LM guide and the second LM guide may be disposed symmetrically with respect to a center line D (see FIGS. 2 and 3) of the slidable electronic device 2 when viewed from above the rear surface of the slidable electronic device 2 (e.g., when viewed in the +z-axis direction). When viewed from above the screen (e.g., when viewed in the - z-axis direction), the center line D of the slidable electronic device 2 may be positioned between the second edge E2 and the third edge E3 of the screen, and the center line D may be an imaginary straight line positioned at substantially the same distance as the second edge E2 and the third edge E3. The second guide rail 42 may include a second recess 421 provided to correspond to the rail of the second LM guide. When the second housing 22 coupled to the block of the second LM guide slides inward or outward relative to the first housing 21 coupled to the rail, the second recess 421 may prevent the second guide rail and the rail of the second LM guide from interfering with each other. A degree to which the rail of the first LM guide is positioned in the first recess of the first guide rail 41 and a degree to which the rail of the second LM guide is positioned in the second recess 421 of the second guide rail 42 may vary depending on the relative position between the first housing 21 and the second housing 22.

According to various embodiments, the rail of the LM guide may be coupled to the first support portion 2111 of the first housing 21.

According to various embodiments, the rail of the LM guide may be coupled to the second housing (or the second frame) 22, and the block of the LM guide may be coupled to the first frame 211 of the first housing 21.

The structure for the smooth mutual sliding motion between the first housing 21 and the second housing 22 may be provided in various ways. The internal space of the slidable electronic device 2 may increase during the slide-out of the second housing 22 and decrease during the slide-in of the second housing 22. The constituent elements accommodated in the internal space of the slidable electronic device 2 may be positioned so as not to interfere with the mutual sliding motion between the first housing 21 and the second housing 22.

According to the embodiment, the slidable electronic device 2 may include a tension device to allow the second housing 22 to softly and smoothly slide relative to the first housing 21. The tension device may smoothly transmit the motion or force between the driving elements related to the sliding motion of the second housing 22 relative to the first housing 21, thereby enabling the soft, smooth sliding motion. The tension device may allow the slidable electronic device 2 to slide softly and smoothly, thereby reducing an effect of stress on the driving elements and reducing or preventing damage.

According to the embodiment, the battery 44 may be positioned between the second housing (or the second frame) 22 and the second support portion 2311 of the third housing 23. The battery 44 may be disposed in the second housing 22. For example, one surface of the second housing 22 directed toward the rear surface of the slidable electronic device 2 may provide the battery seating structure. For example, the battery seating structure may include a fitting structure or a recess structure that enables the battery 44 to be stably positioned in the second housing 22. The battery 44 is a device for powering at least one constituent element of the slidable electronic device 2 and may include, for example, a non-rechargeable primary cell, a rechargeable secondary cell, or a fuel cell.

According to various embodiments, the slidable electronic device 2 may further include an additional battery disposed in the first housing 21.

According to the embodiment, the first printed circuit board 45 may be positioned between the first cover 212 and the first support portion 2111 of the first housing 21. The first printed circuit board 45 may be disposed on the first support portion 2111 of the first housing 21. One surface of the first support portion 2111 directed toward the rear surface of the slidable electronic device 2 may provide the substrate seating structure. The substrate seating structure may include a fitting structure or a recess structure that enables the first printed circuit board 45 to be stably positioned on the first support portion 2111. The first printed circuit board 45 may be disposed on the substrate seating structure by using various methods such as screw fastening. Various electronic components (e.g., some of the constituent elements in FIG. 1) may be disposed on the first printed circuit board 45. Various constituent elements electrically connected to the first printed circuit board 45 may be disposed in the first housing 21. For example, the constituent elements, such as the second camera module 305 or the third camera module 306, may be disposed on the first support portion 2111 between the first support portion 2111 and the first cover 212.

According to the embodiment, the second printed circuit board 46 may be positioned between the second support portion 2311 and the second cover 232 of the third housing 23. The second printed circuit board 46 may be disposed on the second support portion 2311 of the third housing 23. The surface of the second support portion 2311 facing the second cover 232 may include the substrate seating structure. The substrate seating structure may include a fitting structure or a recess structure that enables the second printed circuit board 46 to be stably positioned on the second support portion 2311. The second printed circuit board 46 may be disposed on the substrate seating structure by using various methods such as bonding or screw fastening. Various electronic components (e.g., some of the constituent elements in FIG. 1) may be disposed on the second printed circuit board 46. For example, the first printed circuit board 45 or the second printed circuit board 46 may each include a printed circuit board (PCB), a flexible printed circuit board (FPCB), or a rigid flexible printed circuit board (RFPCB). The second printed circuit board 46 may be electrically connected to the first printed circuit board 45 by using an electrical connection member. For example, the first printed circuit board 45 may be electrically connected to the second printed circuit board 46 by means of a flexible RF cable (FRC).

According to the embodiment, the antenna structure 47 may be positioned between the second cover 232 and the second support portion 2311 of the third housing 23. The antenna structure 47 may be disposed on the second support portion 2311 of the third housing 23 or disposed on the second cover 232. The position of the antenna structure 47 may be variously implemented without being limited to the above-mentioned position. The antenna structure 47 may be implemented in the form of a film, such as an FPCB, for example. The antenna structure 47 may include at least one conductive pattern utilized as a looped radiator. For example, the at least one conductive pattern may include a planar pattern or a spiral conductive pattern (e.g., a flat coil or a pattern coil). In the embodiment, at least one conductive pattern included in the antenna structure 47 may be electrically connected to the first printed circuit board 45 or the wireless communication circuit (e.g., the wireless communication module 192 in FIG. 1) disposed on the second printed circuit board 46. For example, at least one conductive pattern may be used for near-field wireless communication such as near-field communication (NFC). In another example, at least one conductive pattern may be used for magnetic secure transmission (MST) to transmit and/or receive magnetic signals. In any embodiment, at least one conductive pattern included in the antenna structure 47 may be electrically connected to the first printed circuit board 45 or an electric power transmitting/receiving circuit disposed on the second printed circuit board 46. The power transmitting/receiving circuit may receive power from an external electronic device in a wireless manner or transmit power to the external electronic device in a wireless manner by using at least one conductive pattern. The power transmitting/receiving circuit may include a power management module. For example, the power transmitting/receiving circuit may include a power management integrated circuit (PMIC) or a charger integrated circuit (IC). The power transmission and reception circuit may utilize power received wirelessly using the conductive pattern to charge the battery 44.

According to various embodiments, a processor (e.g., the processor 120 in FIG. 1) electrically coupled to the wireless communication circuit (e.g., the wireless communication module 192 in FIG. 1) may utilize the antenna structure 47 to perform a position localization function (e.g., an angle of arrival (AOA)) for a signal source (e.g., a responder, transmitter, or transmitter (Tx) device). The processor may simultaneously perform a function of measuring an angle (AOA) and a function of measuring a distance (ranging). In an embodiment, the processor may identify (or estimate) a distance between the slidable electronic device 2 and the signal source using at least one antenna element (e.g., the first antenna element, the second antenna element, and/or the third antenna element) included in the antenna structure 47. In an embodiment, the processor may identify or estimate an angle of reception (e.g., a direction of a signal) of a signal with respect to a configured axis of the slidable electronic device 2 using at least one of a difference in arrival time of a response message to a request message via the at least two antenna elements included in the antenna structure 47, a difference in a reach distance between the received signals, or a phase difference. The slidable electronic device 2 may support the position measurement function by using a bandwidth of broadband (e.g., ultra-wide band (UWB)). For example, the UWB may refer to a technology that follows the international standard of IEEE 802.15.4 to perform communication with the bandwidth of broadband. In the embodiment, the processor may identify or estimate a position of the signal source (e.g., a responder, a transmitter, or a Tx device) with respect to the slidable electronic device 2 (e.g., an initiator, a receiver, or an Rx device) using a phase difference in the signals received through the plurality of antenna elements included in the antenna structure 47. The antenna structure 47 may be provided as a printed circuit board (e.g., a flexible printed circuit board (FPCB)) and may be, for example, a patch antenna including a plurality of patches (e.g., the first antenna element, the second antenna element, and the third antenna element).

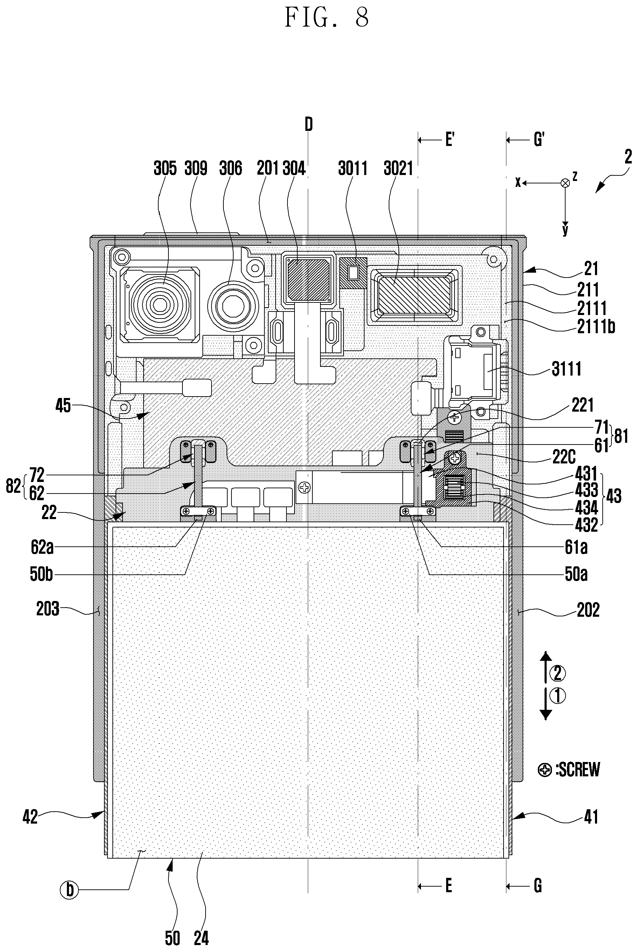

According to the embodiment, the slidable electronic device 2 may include the tension device to allow the second housing 22 to softly and smoothly slide relative to the first housing 21. The tension device may smoothly transmit the motion or force between the driving elements related to the sliding motion of the second housing 22 relative to the first housing 21, thereby enabling the soft, smooth sliding motion. The tension device may allow the slidable electronic device 2 to slide softly and smoothly, thereby reducing an effect of stress on the driving elements and reducing or preventing damage. The tension device may allow the portion of the second area ⓑ between the bending portion and the first area ⓐ to be disposed substantially flat while reducing a situation in which the portion of the second area ⓑ between the bending portion and the first area ⓐ is separated by elasticity of the flexible display module 24 in the open state of the slidable electronic device 2. Hereinafter, the tension device will be described with reference to FIGS. 8, 9, 10, 11, 12, 13, 14, 15, 16, and 17.

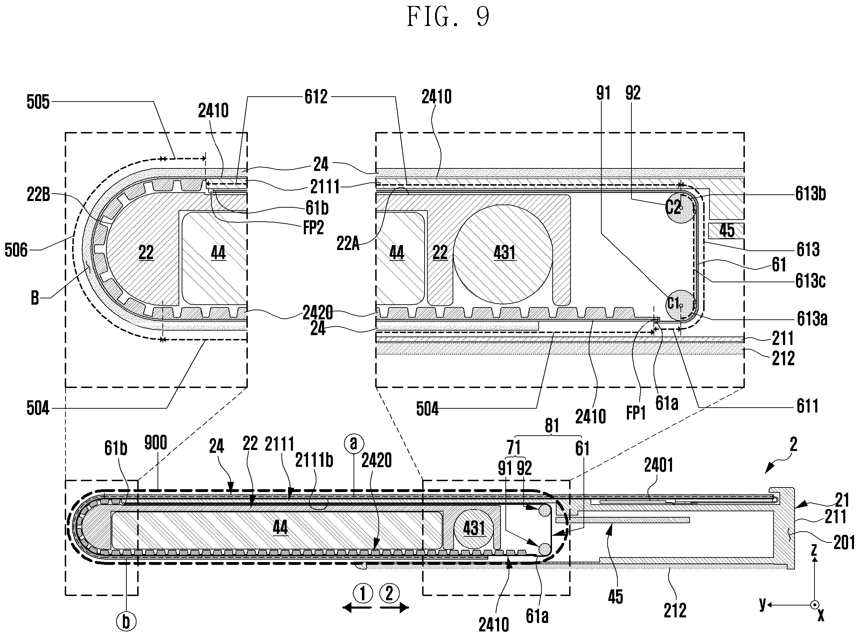

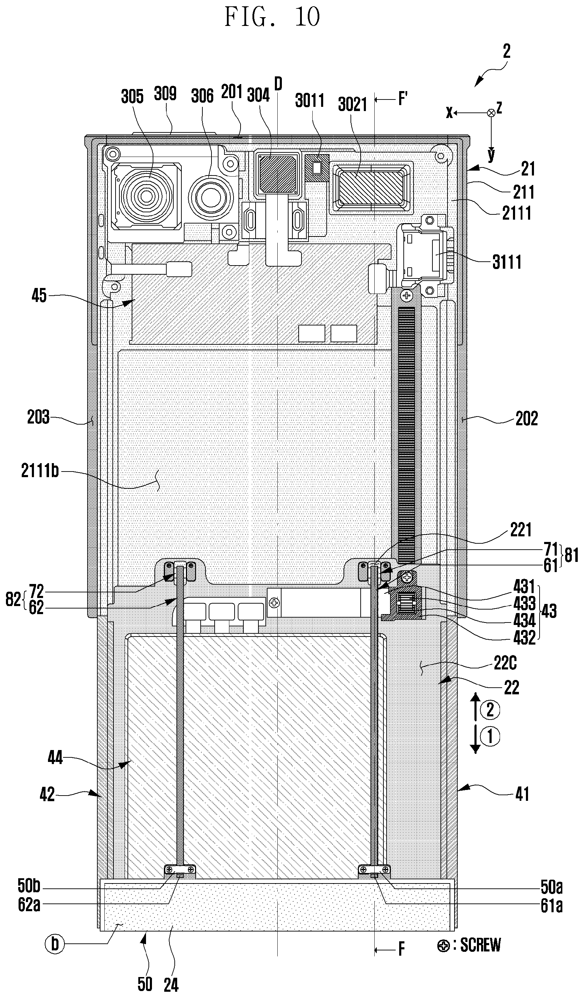

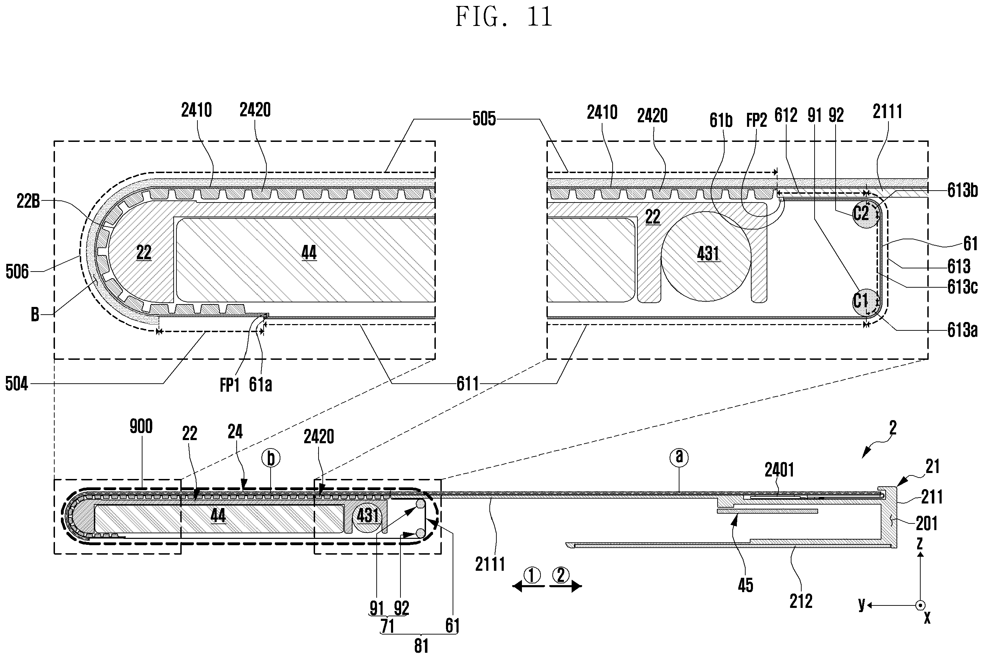

FIG. 8 is a view illustrating the slidable electronic device 2 in the closed state according to the embodiment of the present disclosure. FIG. 9 is a cross-sectional view of the slidable electronic device 2 taken along line E-E' in FIG. 8 according to the embodiment of the present disclosure. FIG. 10 is a view illustrating the slidable electronic device 2 in the open state according to the embodiment of the present disclosure. FIG. 11 is a cross-sectional view of the slidable electronic device 2 taken along line F-F' in FIG. 10 according to the embodiment of the present disclosure.

With reference to FIGS. 8, 9, 10, and 11, the slidable electronic device 2 may include the first housing 21, the second housing 22, the sliding drive device 43, the battery 44, the first printed circuit board 45, the display assembly 50, a first belt power transmission device 81, and/or a second belt power transmission device 82.

According to the embodiment, the first printed circuit board 45, a microphone 3011 (e.g., a microphone corresponding to the microphone hole 301 in FIG. 2), the first camera module 304, the second camera module 305, the third camera module 306, a speaker (or a speaker module) 3021 (e.g., a first speaker corresponding to the first speaker hole 302 in FIG. 2, or a connector 3111 (e.g., a connector corresponding to the connector hole 311 in FIG. 3) may be disposed on the second surface 2111b of the first support portion 2111 included in the first frame 211 of the first housing 21. The linear gear 434 of the sliding drive device 43 may be disposed on the second surface 2111b of the first support portion 2111 included in the first frame 211. The motor assembly 431 and the bracket 432 of the sliding drive device 43 may be disposed on a surface (e.g., a third support surface 22C) of the second housing 22 (e.g., the second frame) directed toward the rear surface of the slidable electronic device 2. The battery 44 may be disposed on the third support surface 22C of the second housing 22 directed toward the rear surface of the slidable electronic device 2. Various other non-illustrated constituent elements may be disposed in the first housing 21 or the second housing 22. The constituent elements, such as the microphone 3011, the first camera module 304, the second camera module 305, the third camera module 306, the speaker 3021, the connector 3111, the motor assembly 431, the battery 44, the flexible display module 24, or the antenna structure 47, may be electrically connected to the first printed circuit board 45 through the electrical connection member such as the FPCB.

According to the embodiment, a display drive circuit 2401 (see FIG. 9) may be disposed on the flexible display module 24 in a chip-on panel (COP) manner. The display drive circuit 2401 may include a display drive integrated circuit (DDI) or a DDI chip. The flexible display module 24 may include a third area extending from the first area ⓐ. For example, the third area may extend from the first area ⓐ at a side of the first sidewall 201. The third area may be disposed to be curved so as to be positioned between the support sheet 2410 and the first support portion 2111. For example, the third area may include an attachment area attached to the support sheet 2410 between the support sheet 2410 and the first support portion 2111, and a bending area between the first area ⓐ and the attachment area. An adhesive material (or a bonding material) may be disposed between the support sheet 2410 and the attachment area of the third area. In case that the support sheet 2410 is not expanded to the rear surface of the first area ⓐ, the attachment area of the third area may be disposed on the rear surface of the first area ⓐ by using the adhesive material. The display drive circuit 2401 may be disposed in the third area. In any embodiment, the display drive circuit 2401 may be disposed on the flexible display module 24 in a chip-on film (COF) manner. For example, the third area of the flexible display module 24 may be a flexible film substrate that connects the display panel 241 (see FIG. 4) and a flexible printed circuit board electrically connected to the first printed circuit board 45. The display drive circuit 24010 may be disposed on a film substrate.

According to the embodiment, the first belt power transmission device 81 may include a first belt 61, and a first pulley device (pulley apparatus) (or a first roller device (roller apparatus) or a first rolling part) 71 corresponding to the first belt 61. The second belt power transmission device 82 may include a second belt 62, and a second pulley device (or a second roller device or a second rolling part) 72 corresponding to the second belt 62. The belt power transmission device may be referred to as a 'wrapping connector driving gear'. The first belt power transmission device 81 and the second belt power transmission device 82 may be provided in substantially the same way. Hereinafter, the first belt power transmission device 81 will be described, and the description may be understood as being substantially equally or similarly applied to the second belt power transmission device 82.

According to the embodiment, the first belt 61 may connect the display assembly 50 and the first support portion 2111 of the first frame 211. The first pulley device 71 may be positioned in the second housing 22 while corresponding to the first belt 61. The first pulley device 71 may include at least one pulley (or roller) operatively connected to the first belt 61. The first pulley device 71 may be positioned to be spaced apart from the bending portion B of the flexible display module 24 in the second direction ② (e.g., the slide-in direction of the second housing 22). In the embodiment, when viewed from above the rear surface of the slidable electronic device 2 (e.g., when viewed in the +z-axis direction), the first pulley device 71 may be positioned to be spaced apart from the battery 44 in the second direction ②. In the embodiment, when viewed from above the rear surface of the slidable electronic device 2, the first pulley device 71 may be positioned to be spaced apart from the motor assembly 431 in the second direction ②.

According to the embodiment, the second housing 22 may include an opening 221 provided to correspond to the first pulley device 71. The second housing 22 may include the first support surface 22A and the second support surface 22B for supporting the second area ⓑ of the flexible display module 24. The first support surface 22A may be directed toward the front surface of the slidable electronic device 2, and the third support surface 22C may be directed toward the rear surface of the slidable electronic device 2. The opening 221 may have a hole shape formed through the first support surface 22A and the third support surface 22C. The first pulley device 71 may be positioned in the opening 221. The first belt 61 may be disposed to penetrate the opening 221. A first end 61a of the first belt 61 may be connected to the display assembly 50. A second end 61b of the first belt 61 may be connected to the first support portion 2111 of the first frame 21. When the second housing 22 slides relative to the first housing 21, the first pulley device 71 may guide a movement of the first belt 61 and a movement direction of the first belt 61 by means of at least one pulley connected to the first belt 61.

According to the embodiment, the first end 61a of the first belt 61 may be connected to a first fastening part (or a first fastener) FP1 provided at an end of the display support structure 2420. The first fastening part FP1 may have a shape that facilitates detachment of the first end 61a while reducing a clearance between the first end 61a of the first belt 61 and the display support structure 2420. The first fastening part FP1 may have a shape that makes it easy to separate the first end 61a from the display support structure 2420 when the first belt 61 is replaced with another belt. For example, the first fastening part FP1 may be provided by screw fastening. In various embodiments, instead of the display support structure 2420, the first end 61a of the first belt 61 may be connected to the support sheet 2410 and further connected to the support sheet 2410. The first end 61a of the first belt 61 may not be connected to the flexible display module 24 to reduce an effect of a load or stress on the flexible display module 24 that may occur when the second housing 22 slides relative to the first housing 21.

According to the embodiment, the second end 61b of the first belt 61 may be connected to a second fastening part (or a second fastener) FP2 provided on the rear surface (e.g., the second surface 2111b) of the first support portion 2111 included in the first frame 211. The second fastening part FP2 may have a shape that facilitates detachment of the second end 61b while reducing a clearance between the second end 61b and the first support portion 2111. The second fastening part FP2 may have a shape that makes it easy to separate the second end 61b from the first support portion 2111 when the first belt 61 is replaced with another belt. For example, the second fastening part FP2 may be provided by screw fastening.

According to the embodiment, the first belt 61 may include a first portion 611, a second portion 612, and a third portion 613 between the first portion 611 and the second portion 612 based on the first pulley device 71. The third portion 613 may be a part of the first belt 61 corresponding to the first pulley device 71. The first portion 611 may be a part of the first belt 61 including the first end 61a. The second portion 612 may be a part of the first belt 61 including the second end 61b. The first portion 611 may be positioned to be closer to the rear surface of the slidable electronic device 2 than the second portion 612 to the rear surface of the slidable electronic device 2, and the second portion 612 may be positioned to be closer to the front surface (or the screen) of the slidable electronic device 2 than the first portion 611 to the front surface (or the screen) of the slidable electronic device 2. The first belt 61 may have a total length extending from the first end 61a to the second end 61b, and the total length may be a sum of a first length of the first portion 611, a second length of the second portion 612, and a third length of the third portion 613. A part of the first belt 61 corresponding to the third portion 613 may vary depending on the position or distance at which the second housing 22 is slid relative to the first housing 21. However, the shape and third length of the third portion 613 may be maintained substantially constantly. A part of the first belt 61 corresponding to the first portion 611, the first length of the first portion 611, a part of the first belt 61 corresponding to the second portion 612, and a second length of the second portion 612 may vary depending on the position or distance at which the second housing 22 is slid relative to the first housing 21. As a slide-out distance of the second housing 22 increases, the first length of the first portion 611 may increase, and the second length of the second portion 612 may decrease. As a slide-in distance of the second housing 22 increases, the first length of the first portion 611 may decrease, and the second length of the second portion 612 may increase. In the closed state of the slidable electronic device 2, the first length of the first portion 611 may be a minimum length, and the second length of the second portion 612 may be a maximum length. In the open state of the slidable electronic device 2, the first length of the first portion 611 may be a maximum length, and the second length of the second portion 612 may be a minimum length.

According to the embodiment, the display assembly 50 may include a fourth portion 504, a fifth portion 505, and a sixth portion 506 between the fourth portion 504 and the fifth portion 505 based on the bending portion B of the flexible display module 24. The sixth portion 506 may be a part of the display assembly 50 that provides the bending portion B of the flexible display module 24. In any embodiment, the sixth portion 506 may be defined or interpreted as the bending portion of the display assembly 50. The sixth portion 506 may be disposed and maintained in the bent shape so that the display assembly 50 switches the direction and moves when the second housing 22 slides relative to the first housing 21. The fourth portion 504 may be a part of the display assembly 50 including the first fastening part FP1. The fifth portion 505 may be a part of the display assembly 50 corresponding a portion between the sixth portion 506 and the second fastening part FP2. The display assembly 50 may have a fourth length of the fourth portion 504, a fifth length of the fifth portion 505, and a sixth length of the sixth portion 506. A part of the display assembly 50 corresponding to the sixth portion 506 may vary depending on the position or distance at which the second housing 22 is slid relative to the first housing 21. However, the shape and sixth length of the sixth portion 506 may be maintained substantially constantly. A part of the display assembly 50 corresponding to the fourth portion 504, the fourth length of the fourth portion 504, a part of the display assembly 50 corresponding to the fifth portion 505, and the fifth length of the fifth portion 505 may vary depending on the position or distance at which the second housing 22 is slid relative to the first housing 21. As the slide-out distance of the second housing 22 increases, the fourth length of the fourth portion 504 may decrease, and the fifth length of the fifth portion 505 may increase. As the slide-in distance of the second housing 22 increases, the fourth length of the fourth portion 504 may increase, and the fifth length of the fifth portion 505 may decrease. In the closed state of the slidable electronic device 2, the fourth length of the fourth portion 504 may be a maximum length, and the fifth length of the fifth portion 505 may be a minimum length. In the open state of the slidable electronic device 2, the fourth length of the fourth portion 504 may be a minimum length, and the fifth length of the fifth portion 505 may be a maximum length.

According to the embodiment, the first guide rail 41 may include a first curved rail part (or a first curved shape rail part) for providing the sixth portion 506 (e.g., the bending portion) of the display assembly 50. The second guide rail 42 may include a second curved rail part (or a second curved shape rail part) for providing the sixth portion 506 of the display assembly 50. The first curved rail part of the first guide rail 41 and the second curved rail part of the second guide rail 42 may guide the movement of the display assembly 50 so that the display assembly 50 switches the direction and moves when the second housing 22 slides relative to the first housing 21. The first pulley device 71 or the second pulley device 72 may be defined or interpreted as a 'first power transmission part,' a 'first power transmission area,' a 'first power transmission portion,' or a 'first power transmission region' that allows the first belt 61 to switch the direction and move when the second housing 22 slides relative to the first housing 21. The first curved rail part of the first guide rail 41 and the second curved rail part of the second guide rail 42 may be defined or interpreted as a 'second power transmission part,' a 'second power transmission area,' a 'second power transmission portion,' or a 'second power transmission region' that allow the display assembly 50 to switch the direction and move. When the second housing 22 slides relative to the first housing 21, a closed loop-shaped power transmission path (or path of power transmission) 900 related to the movement of the flexible display module 24 may be provided based on the first power transmission part and the second power transmission part. The power transmission path 900 may be a path where a motion or force related to the movement of the flexible display is substantially transmitted.

According to the embodiment, in the closed or open state of the slidable electronic device 2, the first portion 611 of the first belt 61 may apply a first tensile force (e.g., first belt tension) to the fourth portion 504 of the display assembly 50. In the closed or open state of the slidable electronic device 2, the second portion 612 of the first belt 61 may apply a second tensile force (e.g., second belt tension) to the fifth portion 505 of the display assembly 50. In the closed or open state of the slidable electronic device 2, the first and second tensile forces may be provided to maintain the shape in which the portion of the second area ⓑ of the flexible display module 24, which provides the screen, is smoothly connected to the first area ⓐ of the flexible display module 24 without being separated. For example, the first and second tensile forces may be substantially equal to each other.

According to the embodiment, during the slide-out of the second housing 22, based on the first pulley device 71, tensile tension (or stretch tension) may be applied to the first portion 611 of the first belt 61, and release tension may be applied to the second portion 612 of the first belt 61. During the slide-in of the second housing 22, based on the first pulley device 71, release tension may be applied to the first portion 611 of the first belt 61, and tensile tension may be applied to the second portion 612 of the first belt 61. During the slide-out or slide-in of the second housing 22, a first load applied to the first pulley device 71 by the first belt 61 may be generated, and a second load applied to the second power transmission part (e.g., the first curved rail part of the first guide rail 41 and the second curved rail part of the second guide rail) by the display assembly 50 may be generated. The release tension and the tensile tension may be provided to reduce the first load and the second load while enabling the portion of the second area ⓑ of the flexible display module 24, which provides the screen, to maintain the shape smoothly connected to the first area ⓐ of the flexible display module 24 and move.

According to the embodiment, the tension applied to the display assembly 50 by the first belt 61 may be included in a threshold range. Therefore, in the closed or open state of the slidable electronic device 2, it is possible to maintain the shape in which a part of the second area ⓑ of the flexible display module 24, which provides the screen, is smoothly connected to the first area ⓐ of the flexible display module 24 without being separated. In case that the tension applied to the display assembly 50 by the first belt 61 is included in the threshold range, the second housing 22 may smoothly slide relative to the first housing 21. In case that the tension applied to the display assembly 50 by the first belt 61 is included in the threshold range, a part of the second area ⓑ, which provides the screen, may move while maintaining the shape smoothly connected to the first area ⓐ without being separated when the second housing 22 slides relative to the first housing 21.

For example, there may be a first comparative example in which the tension applied to the display assembly 50 by the first belt 61 is lower than the threshold range. In the first comparative example, a part of the second area ⓑ, which provides the screen, may be separated by elasticity of the display assembly 50 or it may be difficult to dispose the second area ⓑ in the shape smoothly connected to the first area ⓐ.

As another example, there may be a second comparative example in which the tension applied to the display assembly 50 by the first belt 61 is higher than the threshold range. In the second comparative example, a part of the second area ⓑ, which provides the screen, may be disposed in the shape smoothly connected to the first area ⓐ without being separated, but it may be difficult for the second housing 22 to smoothly slide relative to the first housing 21. In the second comparative example, a load applied to the rotary shaft of at least one pulley included in the first pulley device 71 may increase resistance against a rotation of the pulley, which may make it difficult for the second housing 22 to softly and smoothly slide relative to the first housing 21. In the second comparative example, the display assembly 50 may increase a frictional force to the first curved rail part of the first guide rail 41 and the second curved rail part of the second guide rail 42, which may make it difficult for the second housing 22 to softly and smoothly slide relative to the first housing 21.

According to various embodiments, the first belt 61 of the slidable electronic device 2 may serve to adjust the tension applied to the display assembly 50. For example, the first fastening part FP1 may be implemented to adjust a connection position between the first belt 61 and the display assembly 50, and the tension of the first belt 61 may vary depending on the connection position. As another example, the second fastening part FP2 may be implemented to adjust a connection position between the first belt 61 and the first support portion 2111 of the first frame 211, and the tension of the first belt 61 may vary depending on the connection position.

According to the embodiment, the first portion 611 of the first belt 61 and the fourth portion 504 of the display assembly 50 may be disposed substantially flat. The second portion 612 of the first belt 61 and the fifth portion 505 of the display assembly 50 may be disposed substantially flat.

According to the embodiment, based on the first pulley device 71, the first portion 611 of the first belt 61 may pull the fourth portion 504 of the display assembly 50 in the second direction ② (e.g., the slide-in direction). Based on the first pulley device 71, the second portion 612 of the first belt 61 may pull the fifth portion 505 of the display assembly 50 in the second direction ②. The first portion 611 and the second portion 612 of the first belt 61 may be disposed substantially flat in the direction parallel to the first direction ① and the second direction ② and be parallel to each other. The fourth portion 504 and the fifth portion 505 of the display assembly 50 may be disposed substantially flat in the direction parallel to the first direction ① and the second direction ② and be parallel to each other. The process of designing the relevant power transmission elements to provide the configuration in which the first portion 611 of the first belt 61 and the fourth portion 504 of the display assembly 50 are disposed substantially flat in the direction parallel to the first direction ① and the second direction ② may contribute to allowing the slidable electronic device 2 to softly and smoothly slide. The process of designing the relevant power transmission elements to provide the configuration in which the first portion 611 of the first belt 61 and the fourth portion 504 of the display assembly 50 are disposed substantially flat in the direction parallel to the first direction ① and the second direction ② may contribute to improving the spatial efficiency in the slidable electronic device 2 while reducing an interference of the first portion 611 and the fourth portion 504 with other elements in the slidable electronic device 2 during the sliding motion of the slidable electronic device 2. The process of designing the relevant power transmission elements to provide the configuration in which the second portion 612 of the first belt 61 is disposed substantially flat in the direction parallel to the first direction ① and the second direction ② may contribute to allowing the slidable electronic device 2 to softly and smoothly slide. The process of designing the relevant power transmission elements to provide the configuration in which the second portion 612 of the first belt 61 is disposed substantially flat in the direction parallel to the first direction ① and the second direction ② may contribute to improving the spatial efficiency in the slidable electronic device 2 while reducing an interference of the second portion 612 with other elements in the slidable electronic device 2 during the sliding motion of the slidable electronic device 2.

According to the embodiment, in the closed state of the slidable electronic device 2, the first portion 611 of the first belt 61 may not overlap the battery 44 when viewed from above the rear surface of the slidable electronic device 2 (e.g., when viewed in the +z-axis direction). In the open state (see FIG. 11) of the slidable electronic device 2, the first portion 611 of the first belt 61 may overlap the battery 44 when viewed from above the rear surface of the slidable electronic device 2.

According to the embodiment, as the distance of the second housing 22 slid into the first housing 21 increases, the second portion 612 of the first belt 61 may be lengthened, and the area overlapping the first support portion 2111 of the first frame 211 may increase when viewed from above the front surface of the slidable electronic device 2 (e.g., when viewed in the -z-axis direction). As the distance of the second housing 22 slid into the first housing 21 increases, the area in which the second housing 22 and the first support portion 2111 of the first frame 2111 overlap each other may increase, and the length of the first portion 612 of the first belt 61 extending between the second housing 22 and the first support portion 2111 may increase when viewed from above the front surface of the slidable electronic device 2.

According to the embodiment, in the closed state of the slidable electronic device 2, the display assembly 50 and the first fastening part FP1 may be configured not to be caught by the first pulley device 71. In various embodiments, in the closed state of the slidable electronic device 2, the slidable electronic device 2 may be configured such that the first length of the first portion 611 of the first belt 61 may be reduced or the first portion 611 is substantially excluded while the display assembly 50 and the first fastening part FP1 are not caught by the first pulley device 71.

According to the embodiment, the stress applied to the first belt 61 may include stress caused by tension (tensile stress) or stress caused by bending (bending stress). For example, the tensile stress may be proportional to the tensile force applied to the first belt 61 and inversely proportional to a cross-sectional area of the first belt 61. For example, the bending stress applied to the first belt 61 may be proportional to a longitudinal elastic modulus of the first belt 61 (degree of resistance against tension or compression) and/or the thickness of the first belt 61. For example, the position and diameter of at least one pulley included in the first pulley device 71 may affect the bending stress applied to the first belt 61. The shape or material of the first belt 61 may be selected in consideration of the tensile stress or bending stress to prevent damage to the first belt 61 when the second housing 22 slides relative to the first housing 21. In the embodiment, the first belt 61 may include stainless steel and be implemented in a thin band shape. The first belt 61 may be made of various other metallic or nonmetallic materials.

According to various embodiments, the first belt 61 may include an aramid fiber (e.g., synthetic fiber made of an aramid material). Aramid fibers have an aromatic structure and strong hydrogen bonds, which may provide strong interpolymeric attraction, thereby improving the durability, abrasion resistance, or heat resistance of the first belt 61. The aramid fibers may reduce the plastic deformation of the first belt 61 because the aramid fibers have the flexibility characteristic of fiber materials. The first belt 61 including aramid fibers may be provided in a form that increases in width while decreasing in thickness, thereby ensuring the rigidity thereof. The first belt 61 may be made of various other fiber materials.

According to various embodiments, the first belt 61 may be provided in the form of a wire.

According to various embodiments, the first belt 61 may be provided in the form of a chain.

According to the embodiment, the first pulley device 71 may include a plurality of pulleys. In the illustrated example, the first pulley device 71 may include a first pulley 91 and a second pulley 92 positioned to be spaced apart from each other. For example, the first pulley device 71 may include a pulley support body (or a pulley support part) on which the first pulley 91 and the second pulley 92 are rotatably disposed. The pulley support body may be disposed in the second housing 22 (e.g., the second frame). A first rotary shaft C1 and a second rotary shaft C2 may be disposed on the pulley support body by means of power transmission elements such as bearings.

According to the embodiment, the second pulley 92 may be positioned to be closer to the front surface of the slidable electronic device 2 than the first pulley 91 to the front surface of the slidable electronic device 2. The first rotary shaft C1 of the first pulley 91 and the second rotary shaft C2 of the second pulley 92 may be substantially parallel to a coordinate axis (e.g., a +x-axis) extending in a third direction 2C. The first belt 61 may move while rotating the first pulley 91 and the second pulley 92 when the second housing 22 slides relative to the first housing 21. The first pulley 91 and the second pulley 92 may guide the movement of the first belt 61 and the movement direction of the first belt 61. The present disclosure is not limited to the illustrated example. The first pulley device 71 may include three or more pulleys. There may be a comparative example including one pulley substituted for the plurality of pulleys. In the comparative example, one pulley included in the first pulley device 71 may have a diameter that allows the first portion 611 and the second portion 612 of the first belt 61 to be substantially parallel to the first direction ① and the second direction ② in order to improve the spatial efficiency in the slidable electronic device 2 while reducing an interference of the first portion 611 and the second portion 612 of the first belt 61 with the surrounding constituent elements when the second housing 22 slides relative to the first housing 21. In comparison with one pulley according to the comparative example, the first pulley device 71 including the plurality of pulleys according to the embodiment may reduce a volume occupying the inside of the slidable electronic device 2, thereby ensuring a mounting space for other constituent elements and improving the spatial efficiency.

According to the embodiment, the first rotary shaft C1 of the first pulley 91 and the second rotary shaft C2 of the second pulley 92 may be substantially aligned with (or overlap) each other when viewed from above the rear surface of the slidable electronic device 2 (e.g., when viewed in the +z-axis direction).

According to various embodiments, when viewed from above the front surface of the slidable electronic device 2 (when viewed in the -z-axis direction), the first rotary shaft C1 of the first pulley 91 may be positioned to be spaced apart from the second rotary shaft C2 of the second pulley 92 in the first direction ① or the second direction ②. In this case, when viewed from above the rear surface of the slidable electronic device 2 (e.g., when viewed in the +z-axis direction), the first rotary shaft C1 of the first pulley 91 and the second rotary shaft C2 of the second pulley 92 may not overlap each other.

According to the embodiment, the first pulley 91 and the second pulley 92 may have substantially the same diameter.

According to various embodiments, the first pulley 91 and the second pulley 92 may have different diameters.

According to various embodiments, the first pulley device 71 may further include an elastic structure (or an elastic device) capable of reducing a decrease in tension of the first belt 61 by elastically supporting the first rotary shaft C1 of the first pulley 91 or the second rotary shaft C2 of the second pulley 92. For example, the pulley support body (or pulley support part) on which the first pulley 91 and the second pulley 92 are rotatably disposed may include an elastic member (or elastomer) such as a compression spring for elastically supporting the first rotary shaft C1 or the second rotary shaft C2. The first rotary shaft C1 and the second rotary shaft C2 may be disposed on the pulley support body by being supported by power transmission elements (or power transmission bodies) such as bearings, and the elastic member may elastically support the power transmission element, thereby reducing a decrease in tension of the first belt 61.

According to various embodiments, the present disclosure is not limited to the illustrated example, and the first pulley device 71 may include three or more pulleys. The rotary shafts of the three or more pulleys may be substantially parallel to one another, and the positions or diameters of the three or more pulleys may be variously determined.

According to the embodiment, with the first pulley device 61 including the plurality of pulleys, the third portion 613 of the first belt 61 may be provided in a shape defined by a combination of at least one curved area and at least one straight area. The sixth portion 506 of the display assembly 50 (or the bending portion B of the flexible display module 24) may be provided as one curved area convex in the first direction ① (e.g., the slide-out direction) in comparison with the third portion 613 of the first belt 61. For example, the third portion 613 of the first belt 61 may include a first curved area 613a, a second curved area 613b, and a straight area 613c while corresponding to the first pulley device 71. The first curved area 613a may be a part of the third portion 613 corresponding to the first pulley 91. The second curved area 613b may be a part of the third portion 613 corresponding to the second pulley 92. The straight area 613c may be a part of the third portion 613 between the first curved area 613a and the second curved area 613b. A relative position between the first pulley 91 and the second pulley 92, a first diameter of the first pulley 91, or a second diameter of the second pulley 92 may be variously implemented. The first curved area 613a, the second curved area 613b, and the straight area 613c of the third portion 613 may be provided in shapes different from those of the illustrated example while corresponding to the above-mentioned configuration.

According to the embodiment, the first belt power transmission device 81 and the second belt power transmission device 82 may be positioned at two opposite sides based on the center line D of the slidable electronic device 2 when viewed from above the front or rear surface of the slidable electronic device 2. The first belt power transmission device 81 may be positioned to be spaced apart from the center line D by a first distance in a direction perpendicular to the center line D of the slidable electronic device 2 when viewed from above the front or rear surface of the slidable electronic device 2. The second belt power transmission device 82 may be positioned to be spaced apart from the center line D by a second distance in the direction perpendicular to the center line D of the slidable electronic device 2 when viewed from above the front or rear surface of the slidable electronic device 2. The first distance and the second distance may be substantially equal to each other. In this case, the tension provided by the first belt power transmission device 81 and the tension provided by the second belt power transmission device 82 are balanced during the sliding motion of the slidable electronic device 2, which may contribute to the soft, smooth sliding motion.

According to various embodiments, the slidable electronic device 2 may further include an additional belt power transmission device corresponding to the center line D of the slidable electronic device 2.

According to various embodiments, the slidable electronic device 2 may provide one belt power transmission device substituted for the first belt power transmission device 81 and the second belt power transmission device 82 and positioned to corresponding to the center line D of the slidable electronic device 2.

According to various embodiments, the slidable electronic device 2 may include even-numbered belt power transmission devices symmetrically disposed with respect to the center line D of the slidable electronic device 2 when viewed from above the front or rear surface of the slidable electronic device 2.

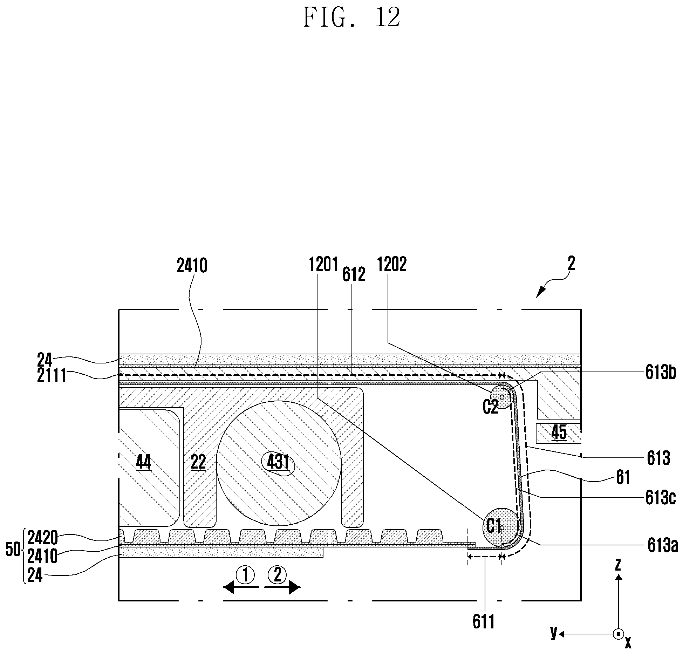

FIGS. 12, 13, and 14 are cross-sectional views of the slidable electronic device 2 taken along line E-E' in FIG. 8 according to various embodiments of the present disclosure.

With reference to FIG. 12, the slidable electronic device 2 may include a first pulley 1201 and a second pulley 1202 while corresponding to the first belt 61. With the first pulley 1201 and the second pulley 1202, the first portion 611 and the second portion 612 of the first belt 61 may be disposed substantially flat in the direction parallel to the first direction ① and the second direction ②. In the embodiment, the first pulley 1201 and the second pulley 1202 may have different diameters and be positioned to be spaced apart from each other. For example, the second pulley 1202 may have a smaller diameter than the first pulley 1201. As another example, although not illustrated, the first pulley 1201 may have a smaller diameter than the second pulley 1202. In various embodiments, although not illustrated, three or more pulleys may be provided, and two pulleys among the three or more pulleys may have different diameters.

According to the embodiment, the third portion 613 of the first belt 61 may include the first curved area 613a corresponding to the first pulley 1201, the second curved area 613b corresponding to the second pulley 1202, and the straight area 613c between the first curved area 613a and the second curved area 613b. A first radius of curvature of the first curved area 613a and a second radius of curvature of the second curved area 613b may be different from each other.

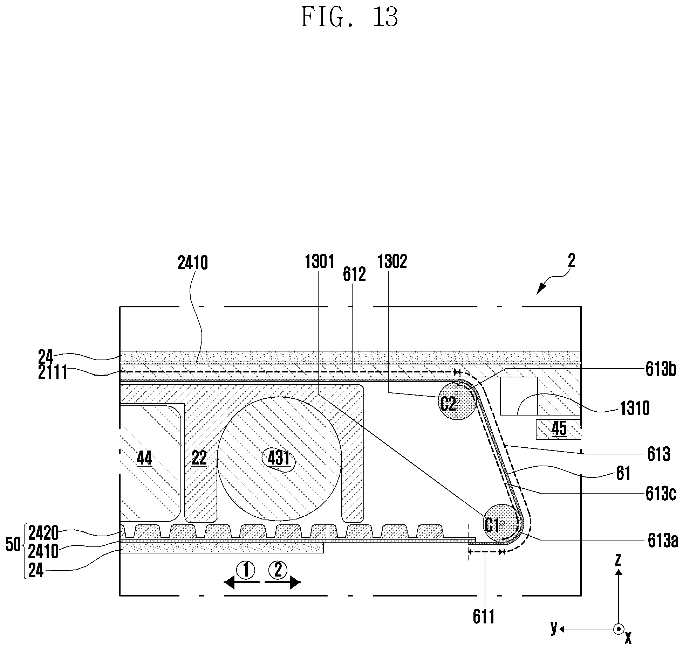

With reference to FIG. 13, the slidable electronic device 2 may include a first pulley 1301 and a second pulley 1302 while corresponding to the first belt 61. The first pulley 1301 and the second pulley 1302 may be positioned to be spaced apart from each other. With the first pulley 1301 and the second pulley 1302, the first portion 611 and the second portion 612 of the first belt 61 may be disposed substantially flat in the direction parallel to the first direction ① and the second direction ②. In the embodiment, when viewed from above the rear surface of the slidable electronic device 2 (e.g., when viewed in the +z-axis direction), a first pulley 1001 may be positioned to be spaced apart from a second pulley 1002 in a first direction 2A (e.g., the slide-out direction). When viewed from above the front or rear surface of the slidable electronic device 2, the first rotary shaft C1 of the first pulley 1301 may be positioned to be spaced apart from the second rotary shaft C2 of the second pulley 1302 in the second direction ② (e.g., the slide-in direction). The first pulley 1301 and the second pulley 1302 may have the same diameter or different diameters.

According to various embodiments (not illustrated), when viewed from above the front or rear surface of the slidable electronic device 2, the first pulley 1301 may be positioned to be spaced apart from the second pulley 1302 in the first direction ① (e.g., the slide-out direction). When viewed from above the front or rear surface of the slidable electronic device 2, the first rotary shaft C1 of the first pulley 1301 may be positioned to be spaced apart from the second rotary shaft C2 of the second pulley 1302 in the first direction ①. The first pulley 1301 and the second pulley 1302 may have the same diameter or different diameters.

According to the embodiment, the third portion 613 of the first belt 61 may include the first curved area 613a corresponding to the first pulley 1301, the second curved area 613b corresponding to the second pulley 1302, and the straight area 613c between the first curved area 613a and the second curved area 613b. In case that the first pulley 1301 and the second pulley 1302 have the same diameter, the first radius of curvature of the first curved area 613a and the second radius of curvature of the second curved area 613b may be equal to each other. In case that the first pulley 1301 and the second pulley 1302 have different diameters, the first radius of curvature of the first curved area 613a and the second radius of curvature of the second curved area 613b may be different from each other.

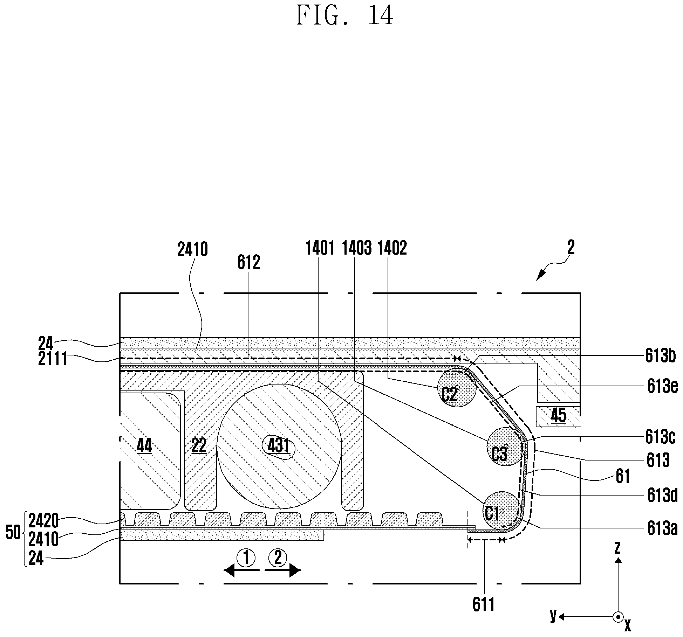

With reference to FIG. 14, the slidable electronic device 2 may include a first pulley 1401, a second pulley 1402, and a third pulley 1403 while corresponding to the first belt 61. The first pulley 1401, the second pulley 1402, and the third pulley 1403 may be positioned to be spaced apart from one another. With the first pulley 1401, the second pulley 1402, and the third pulley 1403, the first portion 611 and the second portion 612 of the first belt 61 may be disposed substantially flat in the direction parallel to the first direction ① and the second direction ②. In the illustrated example, in comparison with the comparative example in which the third pulley 1403 is excluded, the second pulley 1403 may reduce bending stress occurring on the third portion 613 of the first belt 61 and disperse a load applied to the pulley.

The present disclosure is not limited to one example illustrated in FIG. 14. There may be various examples in which when viewed from above the front or rear surface of the slidable electronic device 2, one of the first pulley 1401, the second pulley 1402, and the third pulley 1403 is positioned to be spaced apart from another of the first pulley 1401, the second pulley 1402, and the third pulley 1403 in the first direction ① (e.g., the slide-out direction) and the second direction ② (e.g., the slide-in direction). The present disclosure is not limited to the example illustrated in FIG. 14. There may be various examples in which when viewed from above the rear surface of the slidable electronic device 2, one of the first rotary shaft C1 of the first pulley 1401, the second rotary shaft C2 of the second pulley 1402, and a third rotary shaft C3 of the third pulley 1403 is positioned to be spaced apart from another pulley in the first direction ① and the second direction ②. The first pulley 1401, the second pulley 1402, and the third pulley 1403 may have the same diameter, or any one of the first pulley 1401, the second pulley 1402, and the third pulley 1402 may have a diameter different from that of another pulley.

According to the embodiment, the third portion 613 of the first belt 61 may include the first curved area 613a corresponding to the first pulley 1401, the second curved area 613b corresponding to the second pulley 1402, a third curved area 613c corresponding to the third pulley 1403, a first straight area 613d between the first curved area 613a and the third curved area 613c, and a second straight area 613e between the second curved area 613b and the third curved area 613c. Although not illustrated, four or more pulleys may be provided, and the third portion 613 of the first belt 61 may be disposed in various shapes in accordance with relative positions between the four or more pulleys and diameters of the four or more pulleys.

The first belt 61 may include a first surface and a second surface positioned opposite to the first surface. A thickness of the first belt 61 may correspond to a distance between the first surface and the second surface. In the illustrated example, the first pulley 1401, the second pulley 1402, and the third pulley 1403 may be in contact with the first surface of the first belt 61 and rotate when the first belt 61 moves. In any embodiment, although not illustrated, the third pulley 1403 may be positioned to be in contact with the second surface of the first belt 61 and rotate in a direction opposite to the directions of the first pulley 1401 and the second pulley 1402 when the first belt 61 moves.

The embodiment in FIGS. 12, 13, or 14 may contribute to ensuring a mounting space for at least one constituent element (e.g., the display drive circuit 2401 in FIG. 9) in the slidable electronic device 2 or improving the spatial efficiency. For example, the second pulley 1302 of the embodiment in FIG. 13 may be positioned to be further spaced apart in the first direction ① than the second pulley 62 according to the embodiment in FIG. 9, such that the portion of the first support portion 2111 of the first frame 211, which provides the recess in which the display drive circuit 2401 (e.g., the DDI) is accommodated, may be further expanded in the first direction ① than the embodiment in FIG. 9 (see reference numeral '1310'). As another example, in comparison with the embodiment in FIG. 9, the positions of the plurality of pulleys, the positions of the rotary shafts of the plurality of pulleys, the sizes of the plurality of pulleys, or the position of the pulley are changed in the embodiment in FIG. 12, 13, or 14, which may make it easy to design the second housing 22 so that the second housing 22 has a space for accommodating the battery 44 with a size (or volume) corresponding to a desired battery capacity.

According to the embodiment, in the embodiment in FIG. 9, 12, 13, or 14, a flat first path, which includes the first portion 611 of the first belt 61 and the fourth portion 504 of the display assembly 50, and a flat second path, which includes the second portion 612 of the first belt 61 and the fifth portion 505 of the display assembly 50, may be disposed in parallel with each other in the direction parallel to the first direction ① and the second direction ②. The structure configured such that the flat first path and the flat second path are disposed in parallel with each other in the direction parallel to the first direction ① and the second direction ② in a limited internal space of the slidable electronic device 2 may ensure the spatial efficiency or the mounting space for the second housing 22 or at least one constituent element (e.g., the battery 44) disposed in the second housing 22 in comparison with a structure of a comparative example in which the flat first path and the flat second path are not disposed in parallel with each other. The structure configured such that the flat first path and the flat second path are disposed in parallel with each other in the direction parallel to the first direction ① and the second direction ② may improve the spatial efficiency in the slidable electronic device 2 while reducing an interference of the first path and the second path with other constituent elements in the slidable electronic device 2 during the sliding motion of the slidable electronic device 2. For example, the structure configured such that the flat first path and the flat second path are disposed in parallel with each other in the direction parallel to the first direction ① and the second direction ② may make it easy to design the second housing 22 so that the second housing 22 has the space for accommodating the battery 44 with the size (or volume) corresponding to the desired battery capacity in comparison with the structure of the comparative example in which the flat first path and the flat second path are not disposed in parallel with each other.

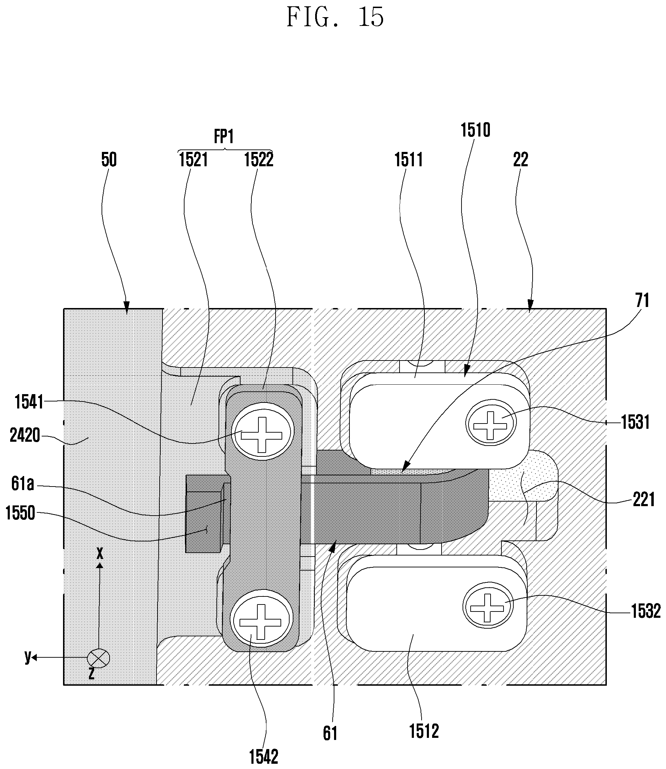

FIG. 15 is a perspective view illustrating the first belt 61, the first pulley device 71, and the display assembly 50 according to the embodiment of the present disclosure.

With reference to FIG. 15, the first pulley device 71 including at least one pulley (e.g., the first pulley 91 and the second pulley 92 in FIG. 9) may include a pulley support body (or a pulley support part, a pulley support member, a pulley support structure, or a pulley bracket) 1510. At least one pulley may be connected to the second housing 22 (e.g., the second frame) through the pulley support body 1510. The pulley support body 1510 may be disposed in the second housing 22 while corresponding to the opening 221 of the second housing 22. At least one pulley may be rotatably disposed on the pulley support body 1510. The pulley support body 1510 may include a first shaft support portion 1511 and a second shaft support portion 1512 that support at least one pulley so that the pulley is rotatable. The first shaft support portion 1511 may be disposed in the second housing 22 by means of a screw 1531, and one end of the rotary shaft of at least one pulley may be rotatably disposed on the first shaft support portion 1511. The second shaft support portion 1512 may be disposed in the second housing 22 by means of a screw 1532, and the other end of the rotary shaft of at least one pulley may be rotatably disposed on the second shaft support portion 1512. In various embodiments, the rotary shaft of the pulley may be disposed on the pulley support body 1510 by means of a power transmission element such as a bearing.

According to the embodiment, the display assembly 50 may include the first fastening part FP1 connected to the first end 61a of the first belt 61. The first fastening part FP1 may include a support portion (or a first fastening element) 1521 having a protruding and extending shape included in the display support structure (e.g., the support plate including the multi-bar) 2420, and a fastening member (or a second fastening element) 1522 disposed on (or fixed or coupled to) the support portion 1521 by means of at least one screw 1541 and 1542. The first end 61a of the first belt 61 may be at least partially positioned between the support portion 1521 and the fastening member 1522.

According to the embodiment, the first belt 61 may include a first catching portion 1550 included in the first end 61a or disposed at the first end 61a. The first end 61a of the first belt 61 may not be separated from the first fastening part FP1 because of the interference between the first catching portion 1550 and the fastening member 1522. The first catching portion 1550 may be a relatively thick portion of the first end 61a of the first belt 61 and larger than a height of the space between the support portion 1550 and the fastening member 1522 so that it is difficult for the first catching portion 1550 to pass between the support portion 1521 and the fastening member 1522. For example, the first belt 61 may be provided as a metal wire or metal band including the first catching portion 1550. As another example, the first catching portion 1550 may be coupled to the first belt 61 as a member made of a metallic or nonmetallic material and provided separately from the first belt 61.

According to the embodiment, the first belt 61 may be made of a fiber material (e.g., an aramid fiber). The first catching portion 1550 may include polymer such as epoxy and be disposed at the first end 61a of the first belt 61 by using chemical coupling (e.g., bonding or thermal bonding). For example, because the first belt 61 made of an aramid fiber has heat resistance, thermal bonding may be used to improve bonding strength between the first belt 61 and the first catching portion 1550.

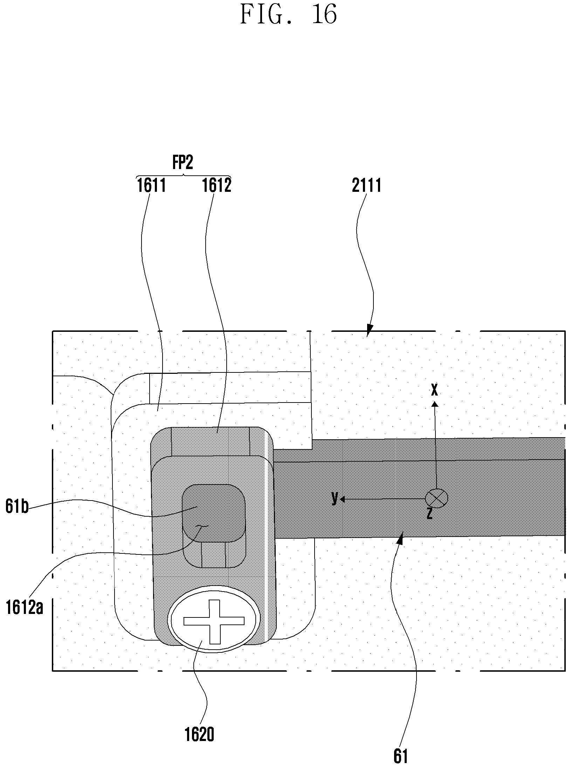

FIG. 16 is a perspective view illustrating the first belt 61 and the first support portion 2111 according to the embodiment of the present disclosure.

With reference to FIG. 16, the second end 61b of the first belt 61 may be coupled to the first support portion 2111.

According to the embodiment, the first support portion 2111 may include the second fastening part FP2 connected to the second end 61b of the first belt 61. The second fastening part FP2 may include a support portion (or a third fastening element) 1611, and a fastening member (or a fourth fastening element) 1612 disposed on (or fixed to) the support portion 1611 by using at least one screw 1620. The second end 61b of the first belt 61 may be at least partially positioned between the support portion 1611 and the fastening member 1612.

According to the embodiment, the first belt 61 may be included in the second end 61b or include a second catching portion disposed on the second end 61b. The second end 61b of the first belt 61 may not be separated from the second fastening part FP2 because of the interference between the second catching portion and the fastening member 1612. In the embodiment, the fastening member 1612 may include a through-hole 1612a, and the second catching portion may be positioned in the through-hole 1612a. The second catching portion may be a relatively thick portion of the second end 61b of the first belt 61 and inserted into the through-hole 1612a of the fastening member 1612. For example, the first belt 61 may be provided as a metal wire or metal band including the second catching portion. As another example, the second catching portion may be coupled to the first belt 61 as a member made of a metallic or nonmetallic material and provided separately from the first belt 61.

According to the embodiment, the first belt 61 may be made of a fiber material (e.g., an aramid fiber). The second catching portion may include polymer such as epoxy and be disposed at the second end 61b of the first belt 61 by using chemical coupling (e.g., bonding or thermal bonding). For example, because the first belt 61 made of an aramid fiber has heat resistance, thermal bonding may be used to improve bonding strength between the first belt 61 and the second catching portion.

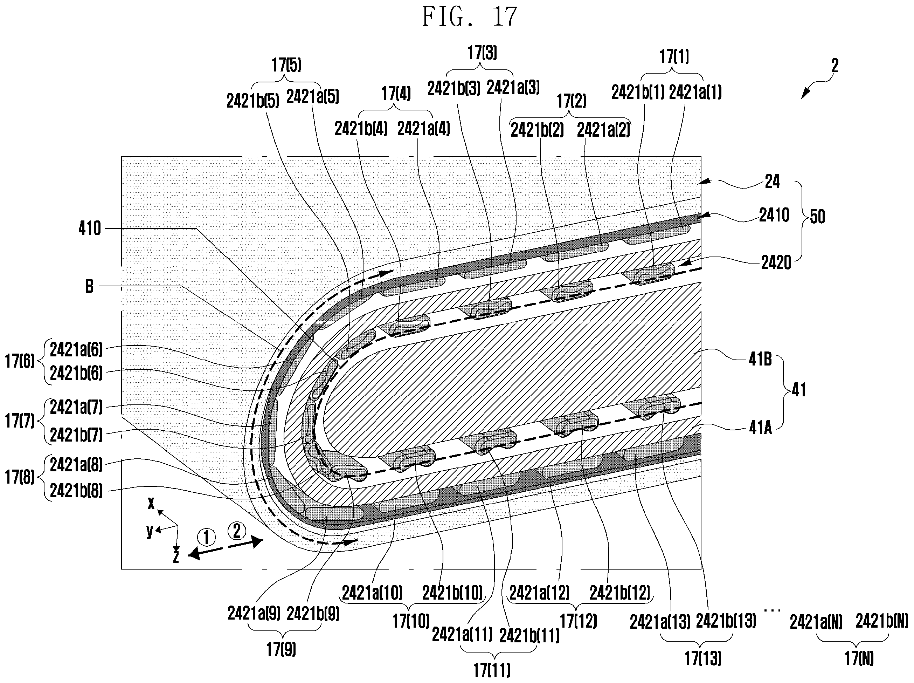

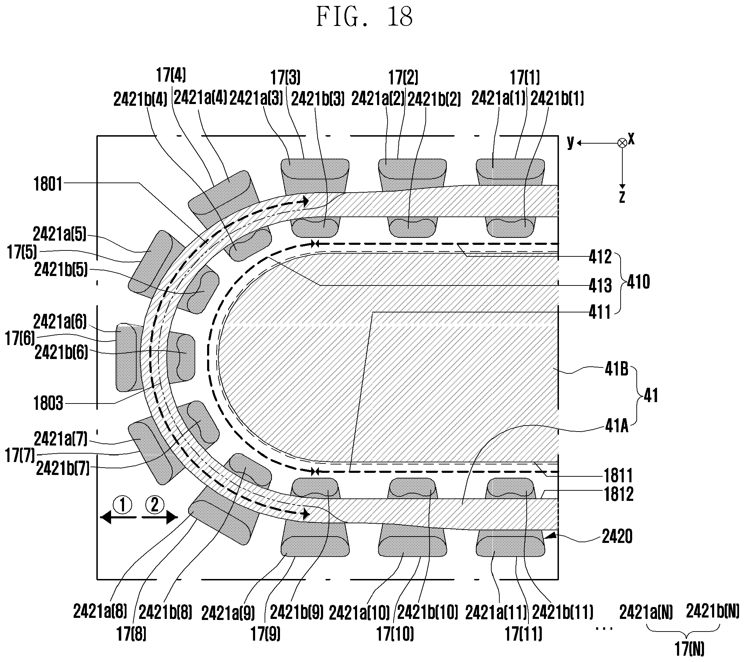

FIG. 17 is a partially cross-sectional perspective view of the slidable electronic device 2 taken along line G-G' in FIG. 8 according to the embodiment of the present disclosure. FIG. 18 is a cross-sectional view of the slidable electronic device 2 taken along line G-G' in FIG. 8 according to the embodiment of the present disclosure.

With reference to FIGS. 17 and 18, the slidable electronic device 2 may include the flexible display module 24, the support sheet 2410, the display support structure 2420, and/or the first guide rail 41.

According to the embodiment, the display support structure 2420 may include a plurality of first rail corresponding parts 17(1), 17(2), 17(3), ..., and 17(N) corresponding to the first guide rail 41. The plurality of first rail corresponding parts 17(1), 17(2), 17(3), ..., and 17(N) may be sliding pairs for the first guide rail 41. The display support structure 2420 may include a plurality of support bars. The plurality of first rail corresponding parts 17(1), 17(2), 17(3), ..., and 17(N) may be parts of the plurality of support bars included in one side of the plurality of support bars while corresponding to the plurality of support bars in a one-to-one manner. As another example, the plurality of first rail corresponding parts 17(1), 17(2), 17(3), ..., and 17(N) may be separate members disposed at one side of the plurality of support bars while corresponding to the plurality of support bars in a one-to-one manner.

According to the embodiment, with reference to one first rail corresponding part 17(1), for example, the first rail corresponding part 17(1) may include a first edge support portion 2421a1 and a first pin (or a first guide pin) 2421b1. The first edge support portion 2421a1 may support a first edge area (e.g., the first edge area 711 in FIG. 7) of the flexible display module 24. The first pin 2421b1 may extend from the first edge support portion 2421a1 and be inserted into a first rail part 410 of the first guide rail 41. The remaining first rail corresponding parts 17(2), 17(3), 17(4), ..., and 17(N) may be provided to be substantially identical to one first rail corresponding part 17(1). In the example in FIG. 7, the first edge support portion 2421a and the first pin 2421b may be positioned to correspond to the support bar corresponding to line C-C' (see FIG. 2) among the plurality of first rail corresponding parts 17(1), 17(2), 17(3), ..., and 17(N).

According to the embodiment, the display support structure 2420 may include a plurality of second rail corresponding parts corresponding to the second guide rail 42 (see FIG. 8). The plurality of second rail corresponding parts may be sliding pairs for the second guide rail 42. The plurality of second rail corresponding parts corresponding to the second guide rail 42 may be substantially identical to the plurality of first rail corresponding parts 17(1), 17(2), 17(3), ..., and 17(N) corresponding to the first guide rail 41. For example, the second rail corresponding parts may each include a second edge support portion (e.g., the second edge support portion 2422a in FIG. 7) configured to support the second edge area 712 (see FIG. 7) of the flexible display module 24, and a second pin (or a second guide pin) (e.g., the second pin 2422b in FIG. 7) positioned on (inserted into) a second rail part of the second guide rail 42. In the embodiment, the plurality of first rail corresponding parts 17(1), 17(2), 17(3), ..., and 17(N) and the plurality of second rail corresponding parts may be provided substantially symmetrically with respect to the center line D (see FIG. 8) of the slidable electronic device 2. The shape of the rail corresponding part is not limited to the illustrated example. The rail corresponding part may have various other shapes corresponding to the guide rail. When the second housing 22 (see FIG. 8) slides relative to the first housing 21 (see FIG. 8), the first rail part 410 of the first guide rail 41 may guide the movements and movement directions of a plurality of first pins 2421a(1), 2421a(2), 2421a(3), ..., and 2421a(N) so that the plurality of first pins 2421a(1), 2421a(2), 2421a(3), ..., and 2421a(N) of the plurality of first rail corresponding parts 17(1), 17(2), 17(3), ..., and 17(N) may move along a designated movement path without deviating from the designated movement path. When the second housing 22 slides relative to the first housing 21, the second rail part of the second guide rail 42 (see FIG. 8) may guide the movements and movement directions of a plurality of second pins so that the plurality of second pins of the plurality of second rail corresponding parts may move along a designated movement path without deviating from the designated movement path.

According to the embodiment, a lubricant (e.g., grease) may be positioned (or applied) on the first rail part 410 and the second rail part to reduce frictional forces between the plurality of first pins 2421a(1), 2421a(2), 2421a(3), ..., and 2421a(N) of the plurality of first rail corresponding parts 17(1), 17(2), 17(3), ..., and 17(N) and the first rail part 410 of the first guide rail 41 and reduce frictional forces between the plurality of second pins of the plurality of second rail corresponding parts and the second rail part of the second guide rail 42 (see FIG. 8). In any embodiment, surfaces of the plurality of first pins 2421a(1), 2421a(2), 2421a(3), ..., and 2421a(N) and surfaces of the plurality of second pins or a surface of the first rail part 410 and a surface of the second rail part may be provided as lubrication coating. For example, the surfaces of the plurality of first pins 2421a(1), 2421a(2), 2421a(3), ..., and 2421a(N) and the surfaces of the plurality of second pins or the surface of the first rail part 410 and the surface of the second rail part may each include a lubricating material such as Teflon coating provided in various ways.

According to various embodiments, at least some of the plurality of first pins 2421a(1), 2421a(2), 2421a(3), ..., and 2421a(N) of the plurality of first rail corresponding parts 17(1), 17(2), 17(3), ..., and 17(N) may each have a shape including a first rotary member (or a first rotary body) such as a roller, and a shaft on which the first rotary member is rotatably positioned. At least some of the plurality of second pins of the plurality of second rail corresponding parts may each be modified and provided in a shape including a second rotary member (or a second rotary body) such as a roller, and a shaft on which the second rotary member is rotatably positioned.

According to the embodiment, the first rail part 410 of the first guide rail 41 may be a recess with a designated pattern provided as a gap between a first inner surface 1811 and a second inner surface 1812 facing each other. When a cross-section (e.g., a y-z cross-section) perpendicular to the first direction ① and the second direction ② and perpendicular to the direction toward the front surface of the slidable electronic device 2 is viewed, the first guide rail 41 may include a first structure part 41A configured to provide the first inner surface 1811 of the first rail part 410, and a second structure part 41B configured to provide the second inner surface 1812 of the first rail part 410. The first structure part 41A and the second structure part 41B may include the same material. The first guide rail 41 may have an integrated shape including the first structure part 41A and the second structure part 41B. When viewed in the direction (e.g., the x-axis direction) perpendicular to the first direction ① and the second direction ② and perpendicular to the direction toward the front surface of the slidable electronic device 2, the first structure part 41A may be positioned outward of the second structure part 41B. The plurality of first edge support portions 2421a(1), 2421a(2), 2421a(3), ..., and 2421(N) of the plurality of first rail corresponding parts 17(1), 17(2), 17(3), ..., and 17(N) may be positioned between the display assembly 50 and the first structure part 41A. The first structure part 41A may support the plurality of first edge support portions 2421a(1), 2421a(2), 2421a(3), ..., and 2421(N). The first structure part 41A may have an extending shape substantially corresponding to the first rail part 410 when the cross-section (e.g., the y-z cross-section) perpendicular to the first direction ① and the second direction ② and perpendicular to the direction toward the front surface of the slidable electronic device 2 is viewed. The plurality of first pins 2421b(1), 2421b(2), 2421b(3), ..., and 2421b(N) of the plurality of first rail corresponding parts 17(1), 17(2), 17(3), ..., and 17(N) may be positioned on the first rail part 410 between the first inner surface 1811 and the second inner surface 1812. When the second housing 22 (see FIG. 8) slides relative to the first housing 21 (see FIG. 8), the plurality of first guide pins 2421b(1), 2421b(2), 2421b(3), ..., and 2421b(N) may move on the first rail part 410 while being substantially supported by the first inner surface 1811 and/or the second inner surface 1812.

According to various embodiments, the first structure part 41A may be a member made of a metallic or nonmetallic material and provided separately from the remaining part of the first guide rail 41 and coupled to or combined with the remaining part of the first guide rail 41. The first structure part 41A and the second structure part 41B may include the same material or different materials.

According to various embodiments, the second structure part 41B may be a member made of a metallic or nonmetallic material and provided separately from the remaining part of the first guide rail 41 and coupled to or combined with the remaining part of the first guide rail 41. The first structure part 41A and the second structure part 41B may include the same material or different materials.

According to the embodiment, the first rail part 410 of the first guide rail 41 may include a first straight rail part 411, a second straight rail part 412, and a first curved rail part 413. The first straight rail part 411 and the second straight rail part 412 may extend in the direction (e.g., the y-axis direction) substantially parallel to the first direction ① and the second direction ②. The first straight rail part 411 may be positioned to be closer to the front surface of the slidable electronic device 2 than the second straight rail part 412 to the front surface of the slidable electronic device 2. The second straight rail part 412 may be positioned to be closer to the rear surface of the slidable electronic device 2 than the first straight rail part 411 to the rear surface of the slidable electronic device 2. When viewed from above the front or rear surface of the slidable electronic device 2, the first straight rail part 411 and the second straight rail part 412 may be aligned with and overlap each other. The first curved rail part 413 may connect the first straight rail part 411 and the second straight rail part 412 may be positioned to correspond to the bending portion B of the flexible display module 24. The second guide rail 42 (see FIG. 8) may be provided to be substantially identical or similar to the first guide rail 41 including the first structure part 41A and the second structure part 41B. The second rail part of the second guide rail 42 (see FIG. 8) may be provided substantially symmetrically with the first rail part of the first guide rail 41 corresponding to the plurality of first pins 2421b(1), 2421b(2), 2421b(3), ..., and 2421b(N) with respect to the center line D (see FIG. 8) of the slidable electronic device 2. The second curved rail part of the second rail part and the first curved rail part 413 of the first rail part 410 for providing the sixth portion 506 (see FIG. 9) of the display assembly 50 may guide the movement and movement direction of the display assembly 50 so that the display assembly 50 switches the direction and moves when the second housing 22 (see FIG. 9) slides relative to the first housing 21 (see FIG. 9).

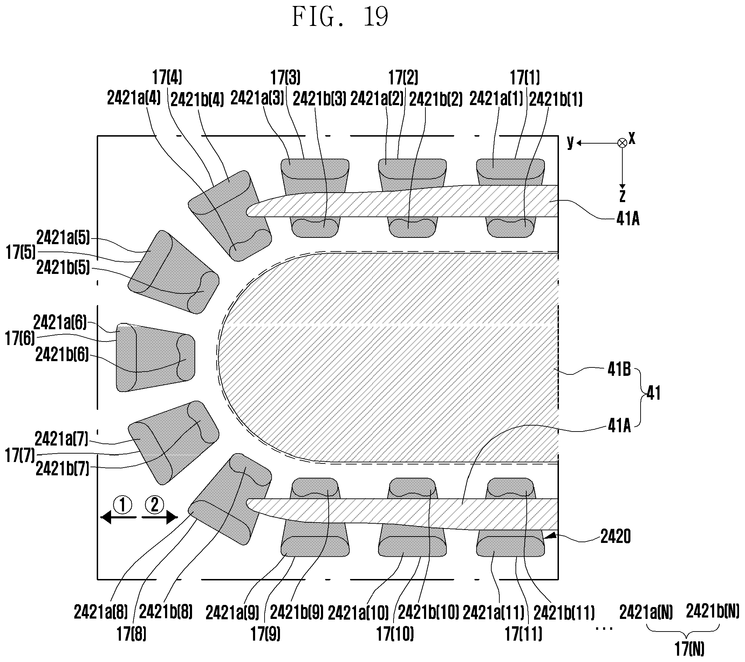

FIG. 19 is a cross-sectional view of the slidable electronic device 2 taken along line G-G' in FIG. 8 according to various embodiments of the present disclosure.

With reference to FIG. 19, the first guide rail 41 may have a shape in which a first curved shape support portion 1801 (see FIG. 18) of the first structure part 41A corresponding to the bending portion (e.g., the sixth portion 506 in FIG. 9) of the display assembly 50 is excluded. In the embodiment in FIG. 18, the first curved shape support portion 1801 of the first structure part 41A may support an edge area (hereinafter, referred to as a 'bending portion edge area') positioned at a side of the first rail part 410 of the bending portion of the display assembly 50. In case that an external impact is applied to the edge area of the bending portion of the display assembly 50 because of a situation such as a fall of the slidable electronic device 2, stress may be concentrated or increased in the edge area of the bending portion of the display assembly 500 because of the first curved shape support portion 1801, and as a result, there may be a risk of damage to the edge area of the bending portion of the display assembly 50. The embodiment in FIG. 19 may reduce a risk of damage to the edge area of the bending portion of the display assembly 50 caused by an external impact in comparison with the embodiment in FIG. 18. Even though the first curved shape support portion 1801 of the first structure part 41A of the first guide rail 41 corresponding to the bending portion (e.g., the sixth portion 506 in FIG. 9) of the display assembly 50 is excluded, the second support surface 22B (see FIG. 9) with a curved surface shape of the second housing 22 (see FIG. 9) may support the display support structure 2420, such that the second housing 22 may slide relative to the first housing 21. Although not illustrated, in substantially the same way as the first guide rail 41, the second guide rail 42 (see FIG. 8) may include a third structure part (e.g., the first structure part 41A) and a fourth structure part (e.g., the second structure part 42B), and the third structure part may have a shape in which a second curved shape support portion corresponding to the bending portion (e.g., the sixth portion 506 in FIG. 9) of the display assembly 50 is excluded.

According to various embodiments, a rotary member (or rotary body) such as a roller or a pulley may be rotatably disposed in the second housing 22 by being substituted for a part of the second housing 22 (see FIG. 8) that provides the second support surface 22B (see FIG. 9). When the second housing 22 (see FIG. 8) slides relative to the first housing 21, the rotary member may rotate on the basis of friction with the display support structure 2420. In any embodiment, the rotary member may be referred to as a 'rotatable support area,' a 'rotatable curved surface member,' a 'rotatable curved surface support member,' a 'rotatable curved surface support body,' or a 'rotatable curved surface support structure'.

According to various embodiments, with reference to FIG. 18, a surface of the first structure part 41A, which is disposed opposite to the second inner surface 1812 and supports the plurality of first edge support portions 2421a(1), 2421a(2), 2421a(3), ..., and 2421a(N), may include a recess 1803 corresponding to the bending portion (e.g., the sixth portion 506 in FIG. 9) of the display assembly 50. In case that an external impact is applied to the edge area of the bending portion of the display assembly 50, the recess 1803 may reduce a risk of damage to the edge area of the bending portion of the display assembly 50. Although not illustrated, the second guide rail 42 (see FIG. 8) may include a recess provided to be substantially identical to the recess 1803 of the first guide rail 41.

According to various embodiments, with reference to FIGS. 2 and 3, the slidable electronic device 2 may be configured such that during the mutual sliding motion between the first housing 21 and the second housing 22, the second area ⓑ of the flexible display module 24 may be slid into the slidable electronic device 2 from the first sidewall 201 of the first housing 21 or slid to the outside of the slidable electronic device 2 (e.g., the position visible to the outside from the slidable electronic device 2).

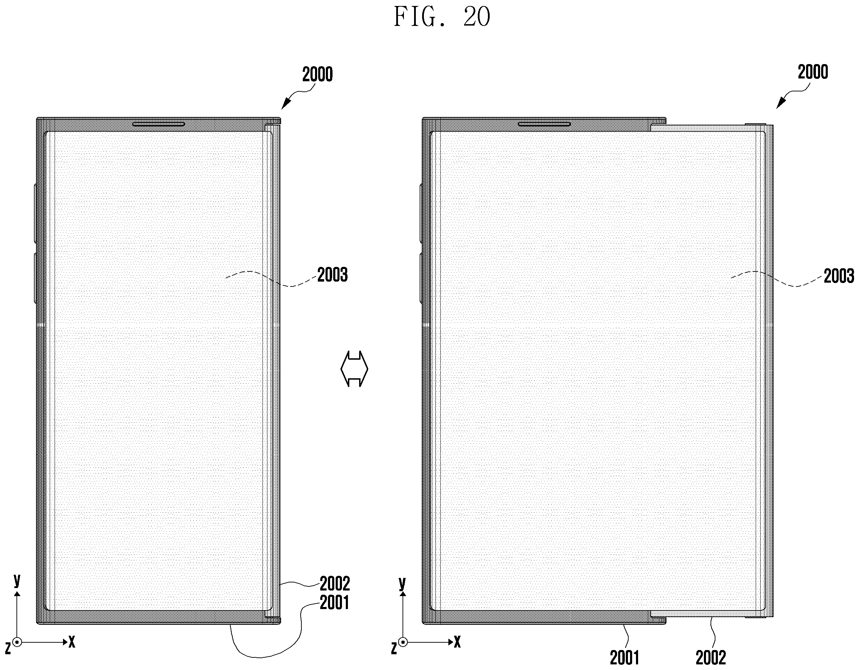

FIG. 20 are views illustrating a slidable electronic device 2000 according to various embodiments of the present disclosure.

With reference to FIG. 20, the slidable electronic device 2000 includes a first housing 2001, a second housing 2002, and a flexible display module 2003. In the slidable electronic device 2 in FIG. 2 or 3, the second housing 22 may be slid outward in the direction (e.g., the +y-axis direction) perpendicular to the first housing 21. In the slidable electronic device 2000 in FIG. 20, the second housing 2002 may be slid outward in a horizontal direction (e.g., a +x-axis direction) to the first housing 2001. During the slide-out of the second housing 2002, the flexible display module 2003 may be slid outward from the inside of the slidable electronic device 2000 to the outside of the slidable electronic device 2000 (e.g., the position visible to the outside from the slidable electronic device 2000), and the screen may be expanded. During the slide-in of the second housing 2002, the flexible display module 2003 may be slid into the slidable electronic device 2000 from the outside of the slidable electronic device 2000, and the screen may be contracted.

According to various embodiments, the slidable electronic device 2000 may be configured to include at least some of the constituent elements described with reference to FIG. 8, 9, 10, 11, 12, 13, 14, 15, 16, 17, 18, or 19.

According to an exemplary embodiment of the present disclosure, the slidable electronic device (e.g., the slidable electronic device 2 in FIG. 9) includes the first housing (e.g., the first housing 21 in FIG. 9). The slidable electronic device includes the second housing (e.g., the second housing 22 in FIG. 9) disposed to be slidable relative to the first housing. The slidable electronic device includes the flexible display including the first area (e.g., the first area ⓐ in FIG. 9), and the second area (e.g., the second area ⓑ in FIG. 9) extending from the first area. The slidable electronic device includes the display support plate (e.g., the display support structure 2420 in FIG. 9) disposed on the rear surface of the second area of the flexible display. The slidable electronic device includes the belt (e.g., the first belt 61 in FIG. 9) configured to connect the first housing and the display support plate. The slidable electronic device includes the pulley device (e.g., the first pulley device 71 in FIG. 9) configured to roll in a predetermined section of the belt in accordance with the sliding-in or sliding-out movement of the second housing. A part of the belt, which is disposed to correspond to the pulley device, may include the two curved areas (e.g., the first curved area 613a and the second curved area 613b in FIG. 9), and a straight area (e.g., the straight area 613c in FIG. 9) between the two curved areas.

According to the exemplary embodiment of the present disclosure, the belt may include, based on the pulley device, the first portion including the first end connected to the display support plate, the second portion including the second end connected to the first housing, and the third portion between the first portion and the second portion. The third portion may be disposed to correspond to the pulley device. The first portion and the second portion may be disposed flat in the sliding direction between the first housing and the second housing.

According to the exemplary embodiment of the present disclosure, the pulley device may include the plurality of pulleys corresponding to the belt.

According to the exemplary embodiment of the present disclosure, the slidable electronic device may include the first guide rail. The first guide rail may be disposed in the second housing while corresponding to one side portion of the display support plate. The first guide rail may provide the first rail part having the recess shape into which one side portion of the display support plate is inserted. The slidable electronic device may include the second guide rail. The second guide rail may be disposed in the second housing while corresponding to the other side portion of the display support plate. The second guide rail may provide the second rail part having a recess shape into which the other side portion of the display support plate is inserted. The second area of the flexible display may include the bending portion convexly disposed in the first direction in which the second housing is slid relative to the first housing by the interaction between the display support plate, the first rail part, and the second rail part. The pulley device may be positioned to be spaced apart from the bending portion in the second direction opposite to the first direction. The first housing may include the support portion coupled to the rear surface of the first area of the flexible display. One end of the belt may be connected to the display support plate, and the other end of the belt may be connected to the support portion of the first housing.

According to the exemplary embodiment of the present disclosure, the display support plate may include the multi-bar including the plurality of support bars. At least some of the plurality of support bars may include the first pin inserted into the first rail part while corresponding to the first guide rail, and the first rail corresponding part including the first edge support portion configured to support the first edge area of the flexible display. At least some of the plurality of support bars may include the second pin inserted into the second rail part while corresponding to the second guide rail, and the second rail corresponding part including the second edge support portion configured to support the second edge area of the flexible display.

According to the exemplary embodiment of the present disclosure, the first guide rail may include the first structure part and the second structure part. The first structure part may be positioned between the first edge area and the second structure part of the flexible display. The first rail part may be provided by a gap between the first structure part and the second structure part. The second guide rail may include the third structure part and the fourth structure part. The third structure part may be positioned between the second edge area of the flexible display and the fourth structure part. The second rail part may be provided by a gap between the third structure part and the fourth structure part. The first structure part and the third structure part may have a shape in which a portion corresponding to the bending portion of the flexible display is excluded.

According to the exemplary embodiment of the present disclosure, the second housing may include the support surface having the curved surface positioned to correspond to the bending portion of the flexible display. The support surface having the curved surface may face the display support plate.

According to the exemplary embodiment of the present disclosure, the support surface having the curved surface included in the second housing may be provided by the roller positioned in the second housing.

According to the exemplary embodiment of the present disclosure, the pulley device may include the first pulley and the second pulley positioned to be spaced apart from each other. A part of the belt, which is disposed to correspond to the pulley device, may include the first curved area corresponding to the first pulley, the second curved area corresponding to the second pulley, and the straight area between the first curved area and the second curved area.

According to the exemplary embodiment of the present disclosure, the first pulley and the second pulley may have the same diameter.

According to the exemplary embodiment of the present disclosure, the first pulley and the second pulley may have different diameters.

According to the exemplary embodiment of the present disclosure, the first area of the flexible display may be disposed flat in the sliding direction between the first housing and the second housing. When viewed from above the first area, the first rotary shaft of the first pulley and the rotary shaft of the second pulley may be aligned.

According to the exemplary embodiment of the present disclosure, the first area of the flexible display may be disposed flat in the sliding direction between the first housing and the second housing. When viewed from above the first area, the first rotary shaft of the first pulley and the rotary shaft of the second pulley may be positioned to be spaced apart from each other in the sliding direction between the first housing and the second housing.

According to the exemplary embodiment of the present disclosure, the second housing may include the opening provided to correspond to the pulley device. The pulley device may be disposed in the second housing while corresponding to the opening. The belt may be positioned to pass through the opening.

According to the exemplary embodiment of the present disclosure, the belt may include an aramid fiber.

According to the exemplary embodiment of the present disclosure, the belt may include stainless steel.

According to the exemplary embodiment of the present disclosure, the display support plate may include the multi-bar.

According to the exemplary embodiment of the present disclosure, the display support plate may further include the support sheet disposed between the flexible display and the multi-bar.

According to the exemplary embodiment of the present disclosure, the support sheet may include the lattice structure having the plurality of openings provided to correspond to the second area of the flexible display.

According to the exemplary embodiment of the present disclosure, the slidable electronic device may further include the motor assembly disposed in the second housing. The motor assembly may provide driving power for sliding the second housing relative to the first housing. The slidable electronic device may further include the circular gear connected to the rotary shaft of the motor assembly. The slidable electronic device may further include the linear gear disposed in the first housing. The linear gear may engage with the circular gear. The rotational motion of the circular gear may be converted into the rectilinear motion of the linear gear, and the rectilinear motion may be provided to the sliding motion between the first housing and the second housing.

The embodiments of the present disclosure disclosed in the present disclosure and illustrated in the drawings are provided as particular examples for more easily explaining the technical contents according to the present disclosure and helping understand the present disclosure, but not intended to limit the scope of the present disclosure. Accordingly, the scope of the various embodiments of the present disclosure should be interpreted as including alterations or modifications in addition to the disclosed embodiments. Additionally, it will be understood that any embodiment(s) described herein may be used in conjunction with any other embodiment(s) described herein.

## Claims

1. A slidable electronic device (2) comprising:
a first housing (21);
a second housing (22) disposed to be slidable relative to the first housing (21);
a flexible display (240) comprising a first area (ⓐ) and a second area (ⓑ) extending from the first area (ⓐ);
a display support plate (2420) disposed on a rear surface of the second area (ⓑ) of the flexible display (2420) **characterized by**
a belt (61) configured to connect the first housing (21) and the display support plate (2420), wherein a first end (61a) of the belt (61) is connected to the display support plate (2420) and a second end (61b) of the belt (61) is connected to the first housing (21); and
a pulley device (71) disposed in the second housing (22) and configured to roll in a predetermined section of the belt (61) in accordance with a sliding-in or sliding-out movement of the second housing (22),
wherein a part of the belt (61), which is disposed to correspond to the pulley device (71), comprises two curved areas (613a, 613b), and a straight area (613c) between the two curved areas (613a, 613b).

2. The slidable electronic device (2) of claim 1, wherein the belt (61) comprises
a first portion (611) comprising the first end (61a) connected to the display support plate (2420);
a second portion (612) comprising the second end (61b) connected to the first housing (21); and
a third portion (613) between the first portion (611) and the second portion (612),
wherein the third portion (613) disposed to correspond to the pulley device (71), and
wherein the first portion (611) and the second portion (612) are disposed flat in a sliding direction between the first housing (21) and the second housing (22).

3. The slidable electronic device (2) of claim 1, wherein the pulley device (71) comprises a plurality of pulleys corresponding to the belt (61).

4. The slidable electronic device (2) of claim 1, comprising:
a first guide rail (41) disposed in the second housing (22) while corresponding to one side portion of the display support plate (2420) and configured to provide a first rail part having a recess shape into which one side portion of the display support plate (2420) is inserted; and
a second guide rail (42) disposed in the second housing (22) while corresponding to the other side portion of the display support plate (2420) and configured to provide a second rail part having a recess shape into which the other side portion of the display support plate (2420) is inserted,
wherein the second area (ⓑ) of the flexible display (240) comprises a bending portion (B) convexly disposed in a first direction in which the second housing (22) is slid relative to the first housing (21) by an interaction between the display support plate (2420), the first rail part, and the second rail part,
wherein the pulley device (71) is positioned to be spaced apart from the bending portion (B) in a second direction opposite to the first direction,
wherein the first housing (21) comprises a support portion (2111) coupled to a rear surface of the first area (ⓐ) of the flexible display (240), and
wherein the second end (61b) of the belt (61) is connected to the support portion (2111) of the first housing (21).

5. The slidable electronic device (2) of claim 4, wherein the display support plate (2420) comprises a multi-bar comprising a plurality of support bars, and
wherein at least some of the plurality of support bars each comprise:
a first rail corresponding part (17(1), 17(2), 17(3), ..., and 17(N)) comprising a first pin (2421a(1), 2421a(2), 2421a(3), ..., and 2421a(N)) inserted into the first rail part while corresponding to the first guide rail, and a first edge support portion configured to support a first edge area (711) of the flexible display (2420); and
a second rail corresponding part comprising a second pin inserted into the second rail part while corresponding to the second guide rail, and a second edge support portion configured to support a second edge (712) area of the flexible display (240).

6. The slidable electronic device (2) of claim 4, wherein the second housing (22) comprises a support surface (22A, 22B) having a curved surface (22B) positioned to correspond to the bending portion (B) of the flexible display (240), and
wherein the support surface (22A, 22B) having the curved surface (22B) faces the display support plate (2420).

7. The slidable electronic device (2) of claim 1, wherein the pulley device (71) comprises a first pulley (91) and a second pulley (92) positioned to be spaced apart from each other, and
wherein a part of the belt (61), which is disposed to correspond to the pulley device (71), comprises a first curved area (613a) corresponding to the first pulley (91), a second curved area (613b) corresponding to the second pulley (92), and the straight area (613c) between the first curved area (613a) and the second curved area (613b).

8. The slidable electronic device (2) of claim 7, wherein the first pulley (91) and the second pulley (92) have the same diameter.

9. The slidable electronic device (2) of claim 7, wherein the first pulley (1201) and the second pulley (1202) have different diameters.

10. The slidable electronic device (2) of claim 7, wherein the first area (@) of the flexible display (240) is disposed flat in a sliding direction between the first housing (21) and the second housing (22), and
wherein a first rotary shaft (C1) of the first pulley (91) and a second rotary shaft (C2) of the second pulley (92) are aligned when viewed from above the first area (@).

11. The slidable electronic device (2) of claim 7, wherein the first area (@) of the flexible display (240) is disposed flat in a sliding direction between the first housing (21) and the second housing (22), and
wherein a first rotary shaft (C1) of the first pulley (1301) and a second rotary shaft (C2) of the second pulley (1302) are positioned to be spaced apart from each other in the sliding direction between the first housing (21) and the second housing (22) when viewed from above the first area (@).

12. The slidable electronic device (2) of any one of the preceding claims, wherein the second housing (22) comprises an opening (221) provided to correspond to the pulley device (71),
wherein the pulley device (71) is disposed in the second housing (22) while corresponding to the opening (221), and
wherein the belt (61) is positioned to pass through the opening (221).

13. The slidable electronic device (2) of claim 1, wherein the display support plate (2420) comprises a multi-bar.

14. The slidable electronic device (2) of claim 13, wherein the display support plate (2420) further comprises a support sheet (2410) disposed between the flexible display (240) and the multi-bar.

15. The slidable electronic device (2) of any one of the preceding claims, further comprising:
a motor assembly (431) disposed in the second housing (22) and configured to provide driving power for sliding the second housing (22) relative to the first housing (21);
a circular gear (433) connected to a rotary shaft of the motor assembly (431); and
a linear gear (434) disposed in the first housing (21) and configured to engage with the circular gear (433),
wherein a rotational motion of the circular gear (433) is converted into a rectilinear motion of the linear gear (434), and the rectilinear motion is provided to a sliding motion between the first housing (21) and the second housing (22).

## Patentansprüche

1. Verschiebbares elektronisches Gerät (2), umfassend:
ein erstes Gehäuse (21);
ein zweites Gehäuse (22), das relativ zum ersten Gehäuse (21) verschiebbar angeordnet ist;
eine flexible Anzeige (240) mit einem ersten Bereich (ⓐ) und einem zweiten Bereich ( ⓑ), der sich vom ersten Bereich (ⓐ) erstreckt;
eine Anzeigestützplatte (2420), die an einer Rückseite des zweiten Bereichs (ⓑ) der flexiblen Anzeige (2420) angeordnet ist, **gekennzeichnet durch**
einen Riemen (61), der dazu konfiguriert ist, das erste Gehäuse (21) und die Anzeigestützplatte (2420) zu verbinden, wobei ein erstes Ende (61a) des Riemens (61) mit der Anzeigestützplatte (2420) und ein zweites Ende (61b) des Riemens (61) mit dem ersten Gehäuse (21) verbunden ist; und
eine Riemenscheibenvorrichtung (71), die in dem zweiten Gehäuse (22) angeordnet und so konfiguriert ist, dass sie in einem vorbestimmten Abschnitt des Riemens (61) entsprechend einer Ein- oder Ausfahrbewegung des zweiten Gehäuses (22) rollt,
wobei ein Teil des Riemens (61), der entsprechend der Riemenscheibenvorrichtung (71) angeordnet ist, zwei gekrümmte Bereiche (613a, 613b) und einen geraden Bereich (613c) zwischen den beiden gekrümmten Bereichen (613a, 613b) umfasst.

2. Verschiebbares elektronisches Gerät (2) nach Anspruch 1, wobei der Riemen (61) Folgendes umfasst:
einen ersten Abschnitt (611) mit dem ersten Ende (61a), das mit der Anzeigestützplatte (2420) verbunden ist;
einen zweiten Abschnitt (612) mit dem zweiten Ende (61b), das mit dem ersten Gehäuse (21) verbunden ist; und
einen dritten Abschnitt (613) zwischen dem ersten Abschnitt (611) und dem zweiten Abschnitt (612),
wobei der dritte Abschnitt (613) so angeordnet ist, dass er der Riemenscheibenvorrichtung (71) entspricht, und
wobei der erste Abschnitt (611) und der zweite Abschnitt (612) in einer Verschieberichtung zwischen dem ersten Gehäuse (21) und dem zweiten Gehäuse (22) flach angeordnet sind.

3. Verschiebbares elektronisches Gerät (2) nach Anspruch 1, wobei die Riemenscheibenvorrichtung (71) mehrere Riemenscheiben umfasst, die dem Riemen (61) entsprechen.

4. Verschiebbares elektronisches Gerät (2) nach Anspruch 1, umfassend:
eine erste Führungsschiene (41), die in dem zweiten Gehäuse (22) angeordnet ist, während sie einem Seitenabschnitt der Anzeigestützplatte (2420) entspricht, und die dazu konfiguriert ist, einen ersten Schienenteil mit einer Aussparungsform bereitzustellen, in die ein Seitenabschnitt der Anzeigestützplatte (2420) eingeführt wird; und
eine zweite Führungsschiene (42), die in dem zweiten Gehäuse (22) angeordnet ist, während sie dem anderen Seitenabschnitt der Anzeigestützplatte (2420) entspricht, und dazu konfiguriert ist, einen zweiten Schienenteil mit einer Aussparungsform bereitzustellen, in die der andere Seitenabschnitt der Anzeigestützplatte (2420) eingeführt wird,
wobei der zweite Bereich (ⓑ) der flexiblen Anzeige (240) einen Biegeabschnitt (B) umfasst, der konvex in einer ersten Richtung angeordnet ist, in der das zweite Gehäuse (22) relativ zum ersten Gehäuse (21) durch eine Wechselwirkung zwischen der Anzeigestützplatte (2420), dem ersten Schienenteil und dem zweiten Schienenteil verschoben wird,
wobei die Riemenscheibenvorrichtung (71) so positioniert ist, dass sie in einer zweiten Richtung entgegengesetzt zur ersten Richtung von dem Biegeabschnitt (B) beabstandet ist,
wobei das erste Gehäuse (21) einen Stützabschnitt (2111) umfasst, der mit einer Rückseite des ersten Bereichs (ⓐ) der flexiblen Anzeige (240) gekoppelt ist, und
wobei das zweite Ende (61b) des Riemens (61) mit dem Stützabschnitt (2111) des ersten Gehäuses (21) verbunden ist.

5. Verschiebbares elektronisches Gerät (2) nach Anspruch 4, wobei die Anzeigestützplatte (2420) eine Mehrfachstange umfasst, die mehrere Stützstangen umfasst, und
wobei mindestens einige der mehreren Stützstangen jeweils Folgendes umfassen:
einen ersten schienenentsprechenden Teil (17(1), 17(2), 17(3), ..., und 17(N)), der einen ersten Stift (2421a(1), 2421a(2), 2421a(3), ..., und 2421a(N)), der in den ersten Schienenteil eingeführt ist, während er der ersten Führungsschiene entspricht, und einen ersten Kantenstützabschnitt umfasst, der dazu konfiguriert ist, einen ersten Kantenbereich (711) der flexiblen Anzeige (2420) zu stützen; und
einen zweiten schienenentsprechenden Teil, der einen zweiten Stift, der in den zweiten Schienenteil eingeführt ist, während er der zweiten Führungsschiene entspricht, und einen zweiten Kantenstützabschnitt umfasst, der dazu konfiguriert ist, einen zweiten Kantenbereich (712) der flexiblen Anzeige (240) zu stützen.

6. Verschiebbares elektronisches Gerät (2) nach Anspruch 4, wobei das zweite Gehäuse (22) eine Stützfläche (22A, 22B) mit einer gekrümmten Oberfläche (22B) umfasst, die so positioniert ist, dass sie dem Biegebereich (B) der flexiblen Anzeige (240) entspricht, und
wobei die Stützfläche (22A, 22B) mit der gekrümmten Oberfläche (22B) der Anzeigestützplatte (2420) zugewandt ist.

7. Verschiebbares elektronisches Gerät (2) nach Anspruch 1, wobei die Riemenscheibenvorrichtung (71) eine erste Riemenscheibe (91) und eine zweite Riemenscheibe (92) umfasst, die voneinander beabstandet angeordnet sind, und
wobei ein Teil des Riemens (61), der entsprechend der Riemenscheibenvorrichtung (71) angeordnet ist, einen ersten gekrümmten Bereich (613a), der der ersten Riemenscheibe (91) entspricht, einen zweiten gekrümmten Bereich (613b), der der zweiten Riemenscheibe (92) entspricht, und den geraden Bereich (613c) zwischen dem ersten gekrümmten Bereich (613a) und dem zweiten gekrümmten Bereich (613b) umfasst.

8. Verschiebbares elektronisches Gerät (2) nach Anspruch 7, wobei die erste Riemenscheibe (91) und die zweite Riemenscheibe (92) den gleichen Durchmesser haben.

9. Verschiebbares elektronisches Gerät (2) nach Anspruch 7, wobei die erste Riemenscheibe (1201) und die zweite Riemenscheibe (1202) unterschiedliche Durchmesser haben.

10. Verschiebbares elektronisches Gerät (2) nach Anspruch 7, wobei der erste Bereich (@) der flexiblen Anzeige (240) in einer Verschieberichtung zwischen dem ersten Gehäuse (21) und dem zweiten Gehäuse (22) flach angeordnet ist, und
wobei eine erste Drehwelle (C1) der ersten Riemenscheibe (91) und eine zweite Drehwelle (C2) der zweiten Riemenscheibe (92) von oben auf den ersten Bereich (ⓐ) gesehen fluchten.

11. Verschiebbares elektronisches Gerät (2) nach Anspruch 7, wobei der erste Bereich (@) der flexiblen Anzeige (240) in einer Verschieberichtung zwischen dem ersten Gehäuse (21) und dem zweiten Gehäuse (22) flach angeordnet ist, und
wobei eine erste Drehwelle (C1) der ersten Riemenscheibe (1301) und eine zweite Drehwelle (C2) der zweiten Riemenscheibe (1302) so positioniert sind, dass sie in der Verschieberichtung zwischen dem ersten Gehäuse (21) und dem zweiten Gehäuse (22) voneinander beabstandet sind, wenn man von oben auf den ersten Bereich (@) blickt.

12. Verschiebbares elektronisches Gerät (2) nach einem der vorstehenden Ansprüche, wobei das zweite Gehäuse (22) eine Öffnung (221) umfasst, die entsprechend der Riemenscheibenvorrichtung (71) vorgesehen ist,
wobei die Riemenscheibenvorrichtung (71) in dem zweiten Gehäuse (22) angeordnet ist, während sie der Öffnung (221) entspricht, und
wobei der Riemen (61) so positioniert ist, dass er durch die Öffnung (221) verläuft.

13. Verschiebbares elektronisches Gerät (2) nach Anspruch 1, wobei die Anzeigestützplatte (2420) eine Mehrfachstange umfasst.

14. Verschiebbares elektronisches Gerät (2) nach Anspruch 13, wobei die Anzeigestützplatte (2420) ferner ein Stützblech (2410) umfasst, das zwischen der flexiblen Anzeige (240) und der Mehrfachstange angeordnet ist.

15. Verschiebbares elektronisches Gerät (2) nach einem der vorstehenden Ansprüche, umfassend ferner:
eine Motorbaugruppe (431), die in dem zweiten Gehäuse (22) angeordnet und dazu konfiguriert ist, eine Antriebskraft zum Verschieben des zweiten Gehäuses (22) relativ zu dem ersten Gehäuse (21) bereitzustellen;
ein kreisförmiges Zahnrad (433), das mit einer Drehwelle der Motorbaugruppe (431) verbunden ist; und
ein lineares Zahnrad (434), das in dem ersten Gehäuse (21) angeordnet und so konfiguriert ist, dass es mit dem kreisförmigen Zahnrad (433) in Eingriff steht,
wobei eine Drehbewegung des kreisförmigen Zahnrads (433) in eine geradlinige Bewegung des linearen Zahnrads (434) umgewandelt und die geradlinige Bewegung für eine Verschiebebewegung zwischen dem ersten Gehäuse (21) und dem zweiten Gehäuse (22) bereitgestellt wird.

## Revendications

1. Dispositif électronique coulissant (2) comprenant :
un premier boîtier (21) ;
un second boîtier (22) disposé pour coulisser par rapport au premier boîtier (21) ;
un afficheur flexible (240) comprenant une première zone (ⓐ) et une seconde zone (ⓑ) s'étendant à partir de la première zone (ⓐ) ;
une plaque de support d'afficheur (2420) disposée sur une surface arrière de la seconde zone (ⓑ) de l'afficheur flexible (2420), **caractérisée par**
une courroie (61) configurée pour relier le premier boîtier (21) et la plaque de support d'afficheur (2420), dans lequel une première extrémité (61a) de la courroie (61) est reliée à la plaque de support d'afficheur (2420) et une seconde extrémité (61b) de la courroie (61) est reliée au premier boîtier (21) ; et
un dispositif de poulie (71) disposé dans le second boîtier (22) et configuré pour rouler dans une section prédéfinie de la courroie (61) selon un mouvement de coulissement vers l'intérieur ou l'extérieur du second boîtier (22),
dans lequel une partie de la courroie (61), qui est disposée pour correspondre au dispositif de poulie (71), comprend deux zones courbées (613a, 613b), et une zone droite (613c) entre les deux zones courbées (613a, 613b).

2. Dispositif électronique coulissant (2) selon la revendication 1, dans lequel la courroie (61) comprend :
une première partie (611) comprenant la première extrémité (61a) reliée à la plaque de support d'afficheur (2420) ;
une deuxième partie (612) comprenant une seconde extrémité (61b) reliée au premier boîtier (21) ; et
une troisième partie (613) entre la première partie (611) et la deuxième partie (612),
la troisième partie (613) étant disposée pour correspondre au dispositif de poulie (71), et
la première partie (611) et la deuxième partie (612) étant disposées à plat dans une direction de coulissement entre le premier boîtier (21) et le second boîtier (22).

3. Dispositif électronique coulissant (2) selon la revendication 1, dans lequel le dispositif de poulie (71) comprend une pluralité de poulies correspondant à la courroie (61).

4. Dispositif électronique coulissant (2) selon la revendication 1, comprenant :
un premier rail de guidage (41) disposé dans le second boîtier (22) tout en correspondant à une partie latérale de la plaque de support d'afficheur (2420) et configuré pour fournir une première partie de rail présentant une forme en creux dans laquelle est insérée une partie latérale de la plaque de support d'afficheur (2420) ; et
un second rail de guidage (42) disposé dans le second boîtier (22) tout en correspondant à l'autre partie latérale de la plaque de support d'afficheur (2420) et configuré pour fournir une seconde partie de rail présentant une forme en creux dans laquelle est insérée l'autre partie latérale de la plaque de support d'afficheur (2420),
dans lequel la seconde zone (ⓑ) de l'afficheur flexible (240) comprend une partie de flexion (B) disposée de manière convexe dans une première direction dans laquelle le second boîtier (22) coulisse par rapport au premier boîtier (21) sous une interaction entre la plaque de support d'afficheur (2420), la première partie de rail et la seconde partie de rail,
dans lequel le dispositif de poulie (71) est positionné pour être espacé de la partie de flexion (B) dans une seconde direction opposée à la première direction,
dans lequel le premier boîtier (21) comprend une partie de support (2111) couplée à une surface arrière de la première zone (ⓐ) de l'afficheur flexible (240) et
dans lequel la seconde extrémité (61b) de la courroie (61) est reliée à la partie de support (2111) du premier boîtier (21).

5. Dispositif électronique coulissant (2) selon la revendication 4, dans lequel la plaque de support d'afficheur (2420) comprend une multi-barre comprenant une pluralité de barres de support, et
dans lequel au moins certaines de la pluralité de barres de support comprennent chacune :
une première partie correspondant au rail (17(1), 17(2), 17(3), ..., et 17(N)) comprenant une première broche (2421a(1), 2421a(2), 2421a(3), ..., et 2421a(N)) insérée dans la première partie de rail tout en correspondant au premier rail de guidage, et une première partie de support de bord configurée pour supporter une première zone de bord (711) de l'afficheur flexible (2420) ; et
une seconde partie correspondant au rail comprenant une seconde broche insérée dans la seconde partie de rail tout en correspondant au second rail de guidage, et une seconde partie de support de bord configurée pour supporter une seconde zone de bord (712) de l'afficheur flexible (240).

6. Dispositif électronique coulissant (2) selon la revendication 4, dans lequel le second boîtier (22) comprend une surface de support (22A, 22B) ayant une surface courbée (22B) positionnée pour correspondre à la partie de flexion (B) de l'afficheur flexible (240), et
dans lequel la surface de support (22A, 22B) ayant la surface courbée (22B) fait face à la plaque de support d'afficheur (2420).

7. Dispositif électronique coulissant (2) selon la revendication 1, dans lequel le dispositif de poulie (71) comprend une première poulie (91) et une seconde poulie (92) positionnées pour être espacées l'une de l'autre, et
dans lequel une partie de la courroie (61), qui est disposée pour correspondre au dispositif de poulie (71), comprend une première zone courbée (613a) correspondant à la première poulie (91), une seconde zone courbée (613b) correspondant à la seconde poulie (92), et la zone droite (613c) entre la première zone courbée (613a) et la seconde zone courbée (613b).

8. Dispositif électronique coulissant (2) selon la revendication 7, dans lequel la première poulie (91) et la seconde poulie (92) présentent des diamètres identiques.

9. Dispositif électronique coulissant (2) selon la revendication 7, dans lequel la première poulie (1201) et la seconde poulie (1202) présentent des diamètres différents.

10. Dispositif électronique coulissant (2) selon la revendication 7, dans lequel la première zone (ⓐ) de l'afficheur flexible (240) est disposée à plat dans une direction de coulissement entre le premier boîtier (21) et le second boîtier (22), et
dans lequel un premier arbre rotatif (C1) de la première poulie (91) et un second arbre rotatif (C2) de la seconde poulie (92) sont alignés lorsqu'ils sont observés depuis le dessus de la première zone (@).

11. Dispositif électronique coulissant (2) selon la revendication 7, dans lequel la première zone (ⓐ) de l'afficheur flexible (240) est disposée à plat dans une direction de coulissement entre le premier boîtier (21) et le second boîtier (22), et
dans lequel un premier arbre rotatif (C1) de la première poulie (1301) et un second arbre rotatif (C2) de la seconde poulie (1302) sont positionnés pour être espacés l'un de l'autre dans la direction de coulissement entre le premier boîtier (21) et le second boîtier (22) lorsqu'ils sont observés depuis le dessus de la première zone (@).

12. Dispositif électronique coulissant (2) selon l'une quelconque des revendications précédentes, dans lequel le second boîtier (22) comprend une ouverture (221) prévue pour correspondre au dispositif de poulie (71),
dans lequel le dispositif de poulie (71) est disposé dans le second boîtier (22) tout en correspondant à l'ouverture (221), et
dans lequel la courroie (61) est positionnée pour passer à travers l'ouverture (221).

13. Dispositif électronique coulissant (2) selon la revendication 1, dans lequel la plaque de support d'afficheur (2420) comprend une multi-barre.

14. Dispositif électronique coulissant (2) selon la revendication 13, dans lequel la plaque de support d'afficheur (2420) comprend en outre une feuille de support (2410) disposée entre l'afficheur flexible (240) et la multi-barre.

15. Dispositif électronique coulissant (2) selon l'une quelconque des revendications précédentes, comprenant en outre :
un ensemble de moteur (431) disposé dans le second boîtier (22) et configuré pour fournir une puissance motrice pour faire coulisser le second boîtier (22) par rapport au premier boîtier (21) ;
un engrenage circulaire (433) relié à un arbre rotatif de l'ensemble de moteur (431) ; et
un engrenage linéaire (434) disposé dans le premier boîtier (21) et configuré pour s'engager avec l'engrenage circulaire (433),
dans lequel un mouvement de rotation de l'engrenage circulaire (433) est converti en un mouvement rectiligne de l'engrenage linéaire (434), et le mouvement rectiligne est prévu comme mouvement de coulissement entre le premier boîtier (21) et le second boîtier (22).
